(19) **Europäisches Patentamt**
**European Patent Office**
**Office européen des brevets**

(11) **EP 4 617 910 A1**

(12) **EUROPEAN PATENT APPLICATION**

(43) Date of publication:
**17.09.2025 Bulletin 2025/38**

(21) Application number: **25162965.5**

(22) Date of filing: **11.03.2025**

(51) International Patent Classification (IPC):
**G06F 16/36** (2019.01) **G06N 5/02** (2023.01)

(52) Cooperative Patent Classification (CPC):
**G06F 16/367; G06N 5/02; G06N 5/022**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **13.03.2024 US 202418604336**

(71) Applicant: **SAP SE**
**69190 Walldorf (DE)**

(72) Inventors:
- **PORTISCH, Jan**
**D-69190 Walldorf (DE)**
- **BRACHOLDT, Sandra**
**D-69190 Walldorf (DE)**

(74) Representative: **DeltaPatents B.V.**
**Fellenoord 370**
**5611 ZL Eindhoven (NL)**

(54) **AUTOMATED ONTOLOGY MAINTENANCE**

(57) Techniques and solutions are provided for improved use of knowledge graphs in document processing. The relevance of properties to a knowledge graph may change over time. While a property may appear, it may take some time before it is apparent that the property should be used in a knowledge graph. Similarly, while a property may be relevant for a period of time, it can lose its relevance. The present disclosure provides techniques for tracking the use of properties over time, and making or proposing property status changes. These changes can result in making the properties visible or non-visible in a knowledge graph, which in turn can affect how future documents are processed. Further, in some cases a property can be made active, and documents processed when the property was not present or not active can be reprocessed to obtain information for the property.

FIG. 48

## Description

### FIELD

The present disclosure generally relates to automated processes for maintaining an ontology, such as managing status information for properties of an ontology.

### BACKGROUND

Ontologies are important to a variety of computer implemented processes. For example, ontologies can be used in linking data in the Semantic Web, in natural language processing, in query processing (such as by converting concepts into SQL), and data integration (integrating data having a common semantic concept). Further, ontologies can be used in artificial intelligence systems, including large language models, the use of which is currently undergoing explosive growth.

Typically, ontologies are manually created and updated. These tasks can be extraordinarily time consuming, particularly when a large number of concepts are to be expressed in an ontology. Manually created ontologies can vary depending on a user developing an ontology, including the use of different labels for a common semantic concept, and whether users happen to identify particular concepts - that is, some users may identify ontological concepts that might be overlooked by other users.

This can be particularly true for concepts that are relatively new. That is, for example, when mainstream electric vehicles were first introduced, an individual responsible for an ontology may not have realized that concepts related to electric vehicles existed. Even if they did exist, they might not have been considered to be sufficiently relevant to be included in an ontology. In a similar manner, some concepts may become out of date, and no longer particularly relevant to an ontology. For example, cars designed to run on ethanol or biodiesel were more actively being pursued for consideration for a time, but that has largely faded.

Thus, current techniques for developing ontologies can be very time consuming, can contain errors (including not identifying relevant semantic concepts or not identifying ontological concepts as out of date). Accordingly, room for improvement exists.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Techniques and solutions are provided for improved use of knowledge graphs in document processing. The relevance of properties to a knowledge graph may change over time. While a property may appear, it may take some time before it is apparent that the property should be used in a knowledge graph. Similarly, while a property may be relevant for a period of time, it can lose its relevance. The present disclosure provides techniques for tracking the use of properties over time, and making or proposing property status changes. These changes can result in making the properties visible or non-visible in a knowledge graph, which in turn can affect how future documents are processed. Further, in some cases a property can be made active, and documents processed when the property was not present or not active can be reprocessed to obtain information for the property.

In one aspect, the present disclosure provides a process for changing a property status of property of a knowledge graph based on counts of the property in electronic documents provided over time period, and processing electronic documents using the updated property status.

A plurality of properties are received. A plurality of electronic documents are processed over a time period. The processing includes incrementing respective counts of respective properties of the plurality of properties if a document being processed include the respective property. For at least one property of the plurality of properties, a total count for the at least one property over at least a portion of the time period is determined. The total count is compared to a threshold. It is determined that the total count satisfied the threshold. A status of the at least one property is changed based at least in part on the determining that the total count satisfies the threshold to provide an updated property status. At least another electronic document is processed using the updated property status.

The present disclosure also includes computing systems and tangible, non-transitory computer readable storage media configured to carry out, or including instructions for carrying out, an above-described method. As described herein, a variety of other features and advantages can be incorporated into the technologies as desired.

### BRIEF DESCRIPTION OF THE DRAWINGS

FIG. 1 shows an exemplary directed graph.

FIG. 2 shows the domain and range of a property in a schema of a directed graph.

FIG. 3 shows an exemplary SPARQL query and results of the query.

FIG. 4 shows an exemplary system architecture for a method according to some embodiments.

FIG. 5 shows an algorithm for computing strings from a directed graph for input to a language model.

FIG. 6 shows a sorting algorithm for sorting statements of a directed graph.

FIG. 7 shows a directed graph that may be provided as input to the sorting algorithm.

FIG. 8 shows a relationship between a condition and one or more patterns.

FIG. 9 is a flowchart of a process of creating a domain data model, including mapping elements of the domain data model to elements of a core data model.

FIG. 10 shows the algorithm of FIG. 5 expanded to handle question patterns.

FIG. 11 is a diagram illustrating relationships between, and components of, a knowledge graph, an ontology, and a meta ontology.

FIG. 12 is a flowchart of a method for extracting properties from a set of source documents.

FIG. 13 is a diagram of a computing environment in which disclosed techniques for property extraction can be performed.

FIGS. 14A-14C illustrate example source documents having information from which properties can be extracted.

FIG. 15 illustrates an example user interface for selecting source files for analysis and for identifying instances associated with such source files.

FIG. 16 illustrates an example user interface where a user can define or edit a set of source files for particular instances.

FIG. 17 illustrates an example user interface where a user can view and edit instance graphs created from one or more sources files for an instance, including viewing properties extracted from the source documents or property values.

FIG. 18 provides example pseudocode for aligning instance graphs, such as using a common vocabulary, and counting the occurrence of particular properties in a set of instance graphs.

FIG. 19A illustrates an example user interface for viewing identified properties, as well as editing a list of properties and selecting properties to be included in an ontology.

FIG. 19B illustrates the user interface of FIG. 19A after selection of a control to edit a property, such as a label applied to the property.

FIG. 20 illustrates how properties associated with instances can change over time.

FIG. 21 depicts an example computing environment that can be used for monitoring property use and updating property status information.

FIG. 22 illustrates example data objects that can be used to store associations between properties and documents having a property and for tracking property use.

FIG. 23 illustrates example documents in an interval and information useable to determine membership in an interval.

FIG. 24 provides example pseudocode for calculating property use over an interval and assigning a status to a property based on such property use.

FIG. 25 illustrates an example user interface that can be used to add instances to a knowledge graph and to view property information associated with such instances, and to optionally add a property associated with the instances to an ontology associated with the instances.

FIG. 26 is an example user interface providing information regarding properties that may be obsolete.

FIG. 27 is an example user interface providing summary information regarding properties over an interval, and providing detailed information for selected properties, including values observed for a selected property over an interval.

FIG. 28 is an example user interface that provides detailed information for a selected property, including use information for the property over a current interval, property values observed during the interval, intervals associated with different statuses for the property, and identifiers of documents associated with the property.

FIG. 29 is an example user interface that summarizes property statuses and use over various intervals, and a graph that can be displayed using such information.

FIGS. 30 and 31 illustrate example property graphs demonstrating how use information for properties can be presented for an interval, and how graphs for multiple intervals can provide insights into property trends.

FIG. 32 illustrates an example electronic newsletter that can contain information updates relevant to a user.

FIG. 33 is an example email that can contain information updates relevant to a user.

FIG. 34 illustrates an example data model that can be used with disclosed techniques.

FIG. 35 is a flowchart of an example process for defining an intent and analyzing a knowledge graph for updates relevant to the intent.

FIG. 36 is a diagram of a simplified computing environment in which the process of FIG. 35 can be implemented.

FIG. 37 is a diagram of a more detailed computing environment in which the process of FIG. 35 can be implemented.

FIG. 38 illustrates how nodes of a knowledge graph can have different weights or relevancies to a user internet, including based on knowledge graph elements that are inferred as relevant to a user intent.

FIG. 39 illustrates how weights assigned to nodes of a knowledge graph can be propagated to related nodes in a process of identifying nodes for inclusion in an inferred intent.

FIG. 40 provides an example user interface where a user can define an intent by selecting elements of a knowledge graph.

FIG. 41 provides an example user interface where a user can define an intent by selecting text of an electronic document.

FIG. 42 illustrates an example log from which knowledge graph update information can be extracted.

FIG. 43 provides an example standardized format in which knowledge graph changes can be expressed, as well example changes expressed in such format.

FIG. 44 illustrates components of an example prompt template for generating a message summarizing knowledge graph changes.

FIG. 45 is an example prompt using the example prompt template of FIG. 44.

FIG. 46 is an example response produced by a natural language generator in response to the prompt of FIG. 45.

FIG. 47 is a flowchart of an example process of changing a property status of property of a knowledge graph based on counts of the property in electronic documents provided over time period, and processing electronic documents using the updated property status.

FIG. 48 is a diagram of an example computing system in which some described embodiments can be implemented.

FIG. 49 is an example cloud computing environment that can be used in conjunction with the technologies described herein.

## DETAILED DESCRIPTION

### Example 1- Overview

Ontologies are important to a variety of computer implemented processes. For example, ontologies can be used in linking data in the Semantic Web, in natural language processing, in query processing (such as by converting concepts into SQL), and data integration (integrating data having a common semantic concept). Further, ontologies can be used in artificial intelligence systems, including large language models, the use of which is currently undergoing explosive growth.

Typically, ontologies are manually created and updated. These tasks can be extraordinarily time consuming, particularly when a large number of concepts are to be expressed in an ontology. Manually created ontologies can vary depending on a user developing an ontology, including the use of different labels for a common semantic concept, and whether users happen to identify particular concepts - that is, some users may identify ontological concepts that might be overlooked by other users.

This can be particularly true for concepts that are relatively new. That is, for example, when mainstream electric vehicles were first introduced, an individual responsible for an ontology may not have realized that concepts related to electric vehicles existed. Even if they did exist, they might not have been considered to be sufficiently relevant to be included in an ontology. In a similar manner, some concepts may become out of date, and no longer particularly relevant to an ontology. For example, cars designed to run on ethanol or biodiesel were more actively being pursued for consideration for a time, but that has largely faded.

Thus, current techniques for developing ontologies can be very time consuming, can contain errors (including not identifying relevant semantic concepts or not identifying ontological concepts as out of date). Accordingly, room for improvement exists.

The present disclosure provides techniques for maintaining an ontology, including adding properties to an ontology or removing properties from an ontology. In one aspect, as instances are added to an ontology, new properties are recognized. Counts for uses of these new properties are tracked over time. In some cases, a user can be presented with count information for properties, and can determine whether a property should be added to an ontology. Optionally, a user can be provided with an automated suggestion of whether a property should be added. In other cases, properties can be automatically added to an ontology when particular criteria are satisfied.

In a similar manner, the use of existing properties in an ontology can be tracked over time. By analyzing particular time intervals, such as more recent time intervals, it can be determined whether fewer instances include an existing ontological property. A user can be provided with data regarding the property usage, and optionally a suggestion whether to consider marking the property as obsolete or removing it from the ontology. Or, a property can automatically have its status changed to obsolete if threshold criteria are satisfied.

The ability to track property use over time also facilitates tracking the evolution of an ontology. Tracking the evolution of an ontology can include tracking how the use of particular properties, including related properties, changes over time. This type of analysis can assist users in identifying trends, including identifying whether a new trend is likely to be short lived or sustained over a longer period of time.

An updated ontology enhances the utility of knowledge graphs and the instances they represent. By incorporating the latest domain knowledge and accommodating new properties and concepts, an updated ontology helps ensure that knowledge graphs remain relevant and comprehensive. Moreover, it facilitates the tracking of instance properties that may not have been cataloged previously, leading to a more accurate and complete representation of data. This adaptability and responsiveness to evolving knowledge to make updated ontologies helps maintain the semantic clarity and usability of knowledge representations.

In addition to tracking data for new instances, the present disclosure provides techniques for reprocessing instances received prior to an ontology update. For example, if a property related to electric vehicles is added to an ontology, prior instances of vehicles can be processed so that data can be added for the properties for the instance, if appropriate.

Example 2 describes knowledge graphs, including representations of knowledge graphs, and verbalizing knowledge graph triples. Examples 3-7 describe relationships between knowledge graphs, ontologies, and metaontologies, as well as techniques for identifying new properties for ontologies. Examples 8-13 describe techniques for changing a status of a property of an ontology, including between active and obsolete statuses or changing a property that is observed, but previously not used frequently enough to be in an active status, to an active status. Examples 14-23 describe techniques that can be used to register an intent for a user, where the intent indicates portions of a knowledge graph that are of interest to a user, and to update the user when relevant changes are detected.

**Example 2- Example Verbalization of Knowledge Graph Triples**

An enterprise may have a variety of different products, services, and teams. The enterprise may also have a comprehensive knowledge graph, storing knowledge regarding skills, processes, experiences, capabilities, and insights that are relied upon in day-to-day operations of the enterprise. Contents of the knowledge graph may also include enterprise specific acronyms, departments of the enterprise, and product specifications. The knowledge may enable the enterprise to react to business situations in a fast, professional, and flexible manner. The knowledge graph may be expensive and labor intensive to construct and maintain. The knowledge graph (*i.e.,* semantic web and/or web of linked data) may be specified using the Resource Description Framework (RDF).

In some cases, a user would like to ask questions of or provide tasks to a language model, (e.g., a large language model based on a generative pre-trained transformer, such as ChatGPT). However, the language model is typically trained in an unsupervised manner on unlabeled human readable text. Hence, the language model may be unable to directly process a knowledge graph or use a knowledge graph as input, (e.g., for training).

Accordingly, it may be desirable to maximize the usability of the knowledge graph, for example, using the knowledge graph as a basis for artificial intelligence applications, more particularly, to train or otherwise improve a language model. Upon training the language model, the language model may be used to answer questions or carry out tasks based on the knowledge stored in the knowledge graph.

In addition, it may be desirable to extract human readable text from the knowledge graph, (e.g., for use in explaining answers provided by software (e.g., a process advisor) relying on the knowledge graph).

According to an aspect, a computer implemented method for providing data from a directed graph to a language model is provided. The method comprises defining a plurality of conditions and a plurality of patterns, wherein each of the conditions has at least one corresponding pattern. The method further comprises receiving a subset of the directed graph, wherein the subset of the directed graph includes a plurality of statements. Each of the statements includes a subject, an object and a predicate relating the subject to the object. For each of the statements in the subset of the directed graph, performing the following: when one of the conditions matches a respective statement and the pattern corresponding to the condition can be applied to the respective statement, computing a string for the respective statement using the pattern. Providing the computed strings as input to the language model.

Providing data from the directed graph to the language model may include extracting or reading the data from the directed graph and feeding or sending the data as input to the language model. The statements may be referred to as triples or triple statements, with subject, predicate and object components. A condition may correspond to a respective pattern in the sense that when the condition is determined to be true for a respective statement, it may be determined whether the respective pattern can be applied to the respective statement.

The clause, each of the conditions has at least one corresponding pattern, may be understood to mean that each of the conditions of the plurality of conditions has at least one corresponding pattern of the plurality of patterns. Hence, each one of the conditions of the plurality of conditions may be assigned at least one pattern of the plurality of patterns. Put another way, when a condition has at least one corresponding pattern, the at least one corresponding pattern is assigned to the condition. Moreover, each one of the conditions of the plurality of conditions may be assigned multiple patterns of the plurality of patterns.

The clause, when one of the conditions matches a respective statement and the pattern corresponding to the condition can be applied to the respective statement, may comprise determining whether the at least one pattern corresponding to the condition can be applied to the respective statement. Accordingly, determining whether the at least one pattern corresponding to the condition can be applied to the respective statement may involve determining whether the pattern corresponding to the condition matches the respective statement, (i.e., testing whether the respective statement has the characteristics or elements specified by the pattern).

For example, determining whether a pattern can be applied to a statement including a subject may be carried out as follows:

The plurality of conditions may include a first condition:

```
<?s> <?p> <?o> .
BIND(sap:BusinessActivity AS <?s>)
BIND(rdf:type AS <?p>)
```

A first pattern may correspond to the first condition:

The <s.rdfs:label> is a business activity.

Since the first pattern includes a reference to a label of a subject s, if the statement including the subject fulfills the first condition, (i.e., of being a BusinessActivity), but the subject of the statement does not have a label as required by the first pattern, then the first pattern could not be applied (i.e., would not match) the statement.

Computing the string from the respective statement using the pattern may involve directly outputting text of the pattern and matching pattern operators to components of the statement.

Moreover, when computing the string, not just the respective statement matching the condition but one or more further statements of the subset of the directed graph may be accessed by the pattern corresponding to the condition. In other words, the pattern can consider statements that do not match the condition. Accordingly, the condition may trigger pattern execution for the respective statement, which in turn may trigger processing of at least a portion of the subset of the directed graph (or the entire subset of the directed graph) using the pattern.

The subject, the object and the predicate may be referred to as components of their respective statement. The subject and/or the predicate may be an RDF resource (e.g., the subject and/or predicate may have the resource property of RDF, and may be a type or a label). The object may be a literal (e.g., an RDF literal) having a defined data type, such as string, integer, Boolean or double (as defined in the extensible markup language (XML) schema definition language (XSD)). Regarding RDF, please refer to the RDF specification, "Concepts and Abstract Syntax", https://www.w3.org/TR/rdf11-concepts/

The computed strings may be provided directly to the language model (e.g., in the case of small strings, such as less than 1 GB) or may be serialized to a text file before being provided to the language model (e.g., in the case of terabytes of data computed from a comprehensive directed graph). In summary, the method accepts a subset of a directed graph as input and generates grammatically correct sentences as the computed strings. The method iterates over the input statements (i.e. triples) in the subset of the directed graph and uses the conditions filters to determine which patterns may be applicable to each of the statements. When a condition matches a statement and the statement has the elements required by a pattern corresponding to (e.g., assigned to) the condition, the pattern is applied to the condition. The result of the iteration may be a set of strings, such that a string is computed for each statement in the input. The syntax and interpretation of patterns is discussed in more detail below.

The statements of the directed graph may be close to human language.

Hence, providing the computed strings as input to the language model may maximize the usability of the subset of the directed graph, for example, by using the subset of the directed graph as a basis for artificial intelligence applications. Once the language model has processed the computed strings, the language model may be used to answer questions or carry out tasks based on knowledge stored in the subset of the directed graph. Accordingly, the time, labor and expense invested to construct the directed graph may be exploited in further ways (e.g., to answer questions or by using the language model).

In addition or alternatively, it may be desirable to extract human readable text from the subset of the directed graph, (e.g., for use in explaining answers provided by software (e.g., a process advisor) relying on the subset of the directed graph).

In some cases, each of the conditions includes at least three condition variables (variables appearing in a condition may be referred to as condition variables). Each of the condition variables may correspond to (e.g., store) a different component of a statement. For example, a first one of the condition variables matches the subject, a second one of the condition variables matches the predicate and a third one of the condition variables matches the object. At least one of the condition variables may be bound to at least one value, (e.g., to an RDF property). In other words, at least one of the condition variables may specify at least one value (e.g., RDF property) that a component of a statement must have. Each of the condition variables may specify an instance of a class (e.g., an RDF class) or a literal (e.g., an RDF literal). An instance of a class may be referred to as an instance. The instance may relate to a specific concept and have a definite article while the class may relate to a generic concept and have an indefinite article.

Each condition may be applied to a statement and may evaluate to TRUE or FALSE. In other words, a condition may return a Boolean value. For example, if the condition evaluates to TRUE, the condition matches the respective statement and it is determined whether the at least one pattern corresponding to the condition can be applied to the respective statement. The following are numbered examples of conditions that may be among the plurality of conditions:

```
1. <?s> <?p> <?o> .
2. <?s> <?p> <?o> .
BIND(rdfs:label AS <?p>)
3. <?s> <?p> <?o> .

    <?s> rdf:type sap:BusinessActivity .
    BIND(rdfs:label AS <?p>)

4. <?s> <?p> <?o> .

    <?s> rdf:type sap:BusinessActivity .
    <?o> sap:requires <?r> .
    BIND(rdfs:label AS <?p>)
```

In the first condition, "<?s>" is a variable corresponding to a subject in the directed graph, "<?p>" is a variable corresponding to a predicate in the directed graph and "<?o>" is a variable corresponding to an object in the directed graph. Hence, the first condition specifies that (i.e., in order for the first condition to evaluate to TRUE) a statement must contain a subject, a predicate and an object. The second condition requires that a statement contains a subject, a predicate and an object and that the predicate is an rdfs:label. The third condition requires that a statement contains a subject, a predicate and an object, that the subject has the property (more specifically, is of type) sap:BusinessActivity and that the predicate is an rdfs:label. The fourth condition requires that a statement contains a subject, a predicate and an object, that the subject has the property (more specifically, is of type) sap:BusinessActivity, that the object has a relation (i.e., a subject-object relation) of "sap:requires" with the object "<?r>" and that the predicate is an rdfs:label. In this connection, "<?r>" is a variable bound to a requirement.

The conditions of the plurality of conditions may function to prevent patterns from being used to compute semantically incorrect strings. In other words, the conditions may be used to ensure that the computed strings are semantically and/or grammatically correct. Accordingly, by assigning patterns to conditions, the cases in which patterns are applied can be limited, thereby ensuring or facilitating computation of semantically correct strings, (i.e., sentences). Without conditions, patterns could be applied to compute exemplary fantasy strings such as, "The Harry Potter Book is a business activity.", or "The Star Wars Movie is a business activity." However, the exemplary fantasy strings are semantically incorrect; therefore, the exemplary fantasy strings would not be helpful as input to the language model and could prolong the training of the language model or even cause the language model to produce incorrect output.

In some cases, at least one of the conditions has a plurality of corresponding patterns. Accordingly, computing a string from the respective statement using the pattern may comprise computing a plurality of strings from the respective statement using each pattern corresponding to the condition (i.e., the condition matching the respective statement) that can be applied to the respective statement.

Alternatively, computing a string from the respective statement using the pattern may comprise determining a random order of the patterns corresponding to the condition and computing a string from the respective statement only using a first one in the random order of the patterns that can be applied to the respective statement. For example, patterns 1 to 4 may be ordered 2, 4, 3, 1 and pattern 2 can be applied to the respective statement, hence, pattern 2 is applied to the respective statement.

For example, the plurality of conditions may include a sequenceID condition:
<?l1> <SequenceID> <?L1> .

The sequenceID condition may correspond to the following pattern (A):

(A) The sequence identifier of <?l1.rdf:type.rdfs:label> <?l1.rdfs:label> is <?L1>.

Continuing the example, the subset of the directed graph may include the following statements:

```
1. Emissions Management isA BusinessCapability.
2. BusinessCapability rdfs:label "Business Capability".
3. EmissionsManagement SequenceID "5".
```

The sequenceID condition only matches statement (3), since statement (3) includes a "SequenceID" and statements (1) and (2) do not include a "SequenceID".

Pattern (A) can be applied to statements (1), (2) and (3) to compute the following string:

The sequence identifier of Business Capability is 5.

All three statements are needed to compute the string above because statements (1) and (2) provide context information for statement (3).

Hence, as indicated above, when computing the string, not just the respective statement matching the condition but one or more further statements of the subset of the directed graph may be accessed by the pattern corresponding to the condition. In other words, the pattern can consider statements that do not match the condition. Accordingly, the condition triggers the pattern execution for the respective statement.

Moreover, the statements of the subset of the directed graph may be iteratively checked. Accordingly, in the example above statements (1) and (2) do not cause the pattern to be triggered but statement (3) does.

In the present example, determining whether pattern (A) can be applied to statement (3) may include determining context information items of pattern (A), namely:

the label of the type of variable <?I1|
the label of variable <?I1>

Both context information items are not available in statement (3) itself, but instead elsewhere in the subset of the directed graph.

The contextual information exists in the subset of the directed graph in view of statement (3) and pattern (A) can be executed for statement (3).

Whenever the forward dot notation is used, additional information is included that is not existing in the triple itself.

In some cases, each pattern includes one or more of the following:

- at least one variable, wherein the variable specifies (e.g., is bound to) a class, an instance of a class, a literal or a predicate;
- text, such as one or more articles (e.g., grammatical articles that are definite or indefinite);
- at least one property that applies to the variable.

Each pattern may further include a language filter. The literal may specify a numeric value or text, where the literal may conform to the RDF schema class of literal values.

Advantageously, the patterns may enable the combination of static text with variables specifying structures (e.g., the subject, the object and the predicate of one of the statements) of the subset of the directed graph, possibly supplemented with information resulting from materializing the subset of the directed graph.

In addition or alternatively, the patterns may include at least one specific pattern (i.e. custom pattern) and a plurality of default patterns. When a condition corresponding to the specific pattern matches a respective statement and the specific pattern can be applied to the respective statement, computing a string from the respective statement using the pattern may comprise using the specific pattern. When the condition corresponding to the specific pattern does not match the respective statement, the method may further comprise determining whether a condition corresponding to one of the default patterns matches the respective statement. When the condition corresponding to one of the default patterns matches the respective statement, computing a string from the respective statement using the one of the default patterns. Defining the plurality of conditions and the plurality of patterns may further comprise defining at least three conditions and at least three patterns, where at least one of the three patterns is a specific pattern and at least one of the three conditions corresponds to the specific pattern.

The following is an exemplary pattern that may be included in the plurality of patterns:

Text <?I1.rdf:type.rdfs:label> Text

The variable <?I1> may be bound to sap:PrintReceipt. Patterns, such as the exemplary pattern above, may use forward dot notation (also referred to as dot notation) to refer to a field, component or sub-property of a property. This may provide the patterns with an advantage over conventional SPARQL, which does not support forward dot notation, since forward dot notation enables more compact expressions.

Accordingly, the exemplary pattern above could be applied to (e.g., the subset of the directed graph may include) the following three statements:

sap:PrintReceipt rdf:type sap:Task.
sap:Task rdfs:label "Task"@en.
sap:Task rdfs:label "Process Task"@en.

In some cases, after a pattern is applied to a respective statement, the pattern is not applied to further statements matching the pattern, (i.e., the further statements in the subset of the directed graph matching the pattern may be skipped). The matching of just one statement and skipping of further statements may be an option that can be configured. For example, as discussed below, the post operator may cause a Cartesian product to be computed.

For example, after a pattern is applied to a respective statement including an rdfs:label for an object, further statements including an rdfs:label for the object may be skipped, (i.e., the pattern is not applied to the further statements). Accordingly, computing strings from the statements above using the exemplary pattern would yield the following: "Text Task Text".

At least one of the patterns may include a filter condition and/or a post operator. The filter condition may specify a language. The post operator may cause a Cartesian product to be performed. As another example, the subset of the directed graph may include the following four statements:

sap:PrintReceipt rdf:type sap:Task.
sap:Task rdfs:label "Task"@en.
sap:Task rdfs:label "Process Task"@en.
sap:Task rdfs:label "Schritt"@de.

The following further exemplary pattern may be included in the plurality of patterns and may be applied to the four statements above:

Text <?I1.rdf:type.rdfs:label(lang = 'en')*> Text

The further exemplary pattern above includes a filter condition to specify a language and an asterisk post operator "*" that yields a cartesian product. The cartesian product may yield all possible combinations of the preceding elements. Accordingly, the following strings would be computed by applying the further exemplary pattern including the cartesian product, since the further exemplary pattern is directed to English labels and there are two English labels among the four statements above:

Text Task Text
Text Process Task Text

Hence, the statement above including "'Schritt'@de" would not be processed since the statement does not meet the filter condition in the further exemplary pattern (i.e., the statement is not in the English language). Without the asterisk post operator in the further exemplary pattern above, only the first string "Text Task Text" would be computed.

The exemplary pattern and further exemplary pattern above may be specific patterns, (i.e., patterns applicable to one directed graph or a group of directed graphs).

The strings may be computed from the respective statements using only default patterns. However, use of the specific patterns may result in computed strings that more accurately and precisely describe the contents of the subset of directed graph.

Other post operators (i.e., operators provided at the end of a pattern, also referred to as postfix operators) in addition to the asterisk may also be used. For example, an additional post operator might limit the output of a cartesian product to a specified number of combinations, (e.g., about 10 combinations).

As another example, the following requirement pattern may be applied to the four statements above:

The <?I1.rdf:type.rdfs:label(lang = 'en')*> <?I1.rdfs:label> requires a <?I2.rdfs:label> .

In this example, <?I1> may be bound to sap:PrintReceipt and <?I2> may be bound to sap:Printer. Hence, by applying the requirement pattern to the four statements above, the following strings may be computed:

- The Process Task Print Receipt requires a Printer.
- Task Print Receipt requires a Printer.

Without the asterisk post operator in the requirement pattern, only the first string, (i.e., "The Process Task Print Receipt requires a Printer.)" would be computed.

In some cases, each of the computed strings is a grammatically correct sentence, wherein the conditions and/or patterns may ensure that the computed strings are grammatically correct sentences.

In addition or alternatively, the at least one specific pattern may include a plurality of specific patterns. Each of the specific patterns may be applicable to a group of directed graphs defined according to the resource description framework or a group of knowledge graphs defined according to the resource description framework. Each of the default patterns may be applicable to any directed graph defined according to the resource description framework or any knowledge graph defined according to the resource description framework.

Accordingly, each specific pattern may be defined for a single on premises network and a corresponding directed graph, or a group of on premises networks and a corresponding group of directed graphs, whereas default patterns may be applicable to any directed graph.

The patterns may include one or more of the following five patterns:

- a pattern applicable to instance-to-instance statements, including variables <I1, p, I2>
- a pattern applicable to instance-to-class statements, including variables <I1, p, C1>
- a pattern applicable to class-to-class statements, including variables <C1, p, C2>
- a pattern applicable to instance-to-literal statements, including variables <I1, p, L1>
- a pattern applicable to class-to-literal statements, including variables <C1, p, L1>

The five patterns above may be made applicable to instance-to-instance statements, instance-to-class statements, class-to-class statements, instance-to-literal statements and class-to-literal statements via corresponding conditions including the respective variables <I1, p, I2>, <I1, p, C1>, <C1, p, C2>, <I1, p, L1>, <C1, p, L1>.

The five patterns mentioned above may be default patterns, in the sense that they are applicable to any directed graph, or more specifically, any knowledge graph.

For the five patterns mentioned above, "I1" and "I2" are variables referring to instances (i.e., instances of classes), "C1" and "C2" are variables referring to classes, "L1" is a variable referring to a literal, and "p" is a variable referring to a predicate. A first one of the five patterns applicable to instance-to-instance statements may be implemented as follows:

The <?I1.rdf:type.rdfs:label> <?I1.rdfs:label> <?p.rdfs:label> the <?I2.rdf:type.rdfs:label> <?I2.rdfs:label> .

A second one of the five patterns applicable to instance-to-class statements may be implemented as follows: The <?I1.rdf:type.rdfs:label> <?I1.rdfs:label> <?p.rdfs:label> a <?C1.rdfs:label> .

A third one of the five patterns applicable to class-to-class statements may be implemented as follows: A <?C1.rdfs:label> <?p.rdfs:label> a <?C2.rdfs:label> .

A fourth one of the five patterns applicable to instance-to-literal statements may be implemented as follows: The <?I1.rdfs:label> <?p.rdfs:label> <?L1>.

A fifth one of the five patterns applicable to class-to-literal statements may be implemented as follows: A <?C1.rdfs:label> <?p> <?L1>.

A user or administrator may define further default patterns or change the exemplary default patterns provided above.

In addition or alternatively, the plurality of patterns may include at least one text pattern and at least one question pattern. The text pattern and/or the question pattern may be a specific pattern. The text pattern and/or the question pattern may be a default pattern. Each condition may correspond to at least one text pattern and at least one condition may correspond to at least one question pattern. For example, the conditions may be defined such that each condition must correspond to at least one text pattern and each condition may correspond to at least one question pattern. A configuration option may be set to apply question patterns in addition to or instead of text patterns. When one of the conditions matches a respective statement and the configuration option is set to apply question patterns and the question pattern corresponding to the condition can be applied to the respective statement, the method may comprise computing the string from the respective statement using the question pattern and/or computing a further string from the respective statement using the question pattern in addition to a string computed from the respective statement using the text pattern.

For example, the subset of the directed graph may include the following seven statements:

    sap:PrintReceipt sap:requires sap:Printer.
    sap:PrintReceipt rdf:type sap:Task.
    sap:PrintReceipt rdfs:label "Print Receipt".
    sap:Printer rdfs:label "Printer".
    sap:Task rdfs:label "Task"@en .
    sap:Task rdfs:label "Process Task"@en .

sap:Task rdfs:label "Schritt"@de .

Continuing the example, the plurality of patterns may include the following pattern (e.g., text pattern): The <I1.rdf:type.label(lang = 'en')*> <I1.rdfs:label> requires a <I2.rdfs:label>.

In addition, the plurality of patterns may include the following question pattern preceding the text pattern directly above:

What is required by <I1.rdf:type.label(lang = 'en')*> <I1.rdfs:label>?

The "*" (asterisk) operator (i.e., post operator) in the question pattern causes a Cartesian product to be computed. In the text and question patterns above, <?I1> is bound to (i.e., holds the value) sap:PrintReceipt, <?p> is bound to sap:requires, and <?I2> is bound to sap:Printer. Accordingly, a configuration option may be set to apply both question patterns and text patterns. Hence, by applying both the question pattern and the text pattern to the seven statements above, the following question/answer strings are computed:

Q: What is required by Task Print Receipt?
A: The Task Print Receipt requires a Printer.
Q: What is required by Task Print Receipt?
A: The Process Task Print Receipt requires a Printer.
Q: What is required by Process Task Print Receipt?
A: The Task Print Receipt requires a Printer.
Q: What is required by Process Task Print Receipt?
A: The Process Task Print Receipt requires a Printer.

The strings above are preceded by "Q: " and "A: " in the interest of clarity. Accordingly, the question patterns may be used to simulate a question-answer interaction. As discussed in the example above regarding to the cartesian product, without the asterisk operator of the present example, strings would only be computed from the first statement to which the question and text patterns can be applied, (i.e., the first statement matching the question and text patterns).
In some cases, the subset of the directed graph may be the entire directed graph. Alternatively, the subset of the directed graph may be a proper subset of the entire directed graph and may be determined by means of a query of the directed graph. The query may be a SPARQL Protocol and RDF Query Language (SPARQL) query.
In some cases, the subset of the directed graph includes a plurality of nodes connected by edges. The nodes may represent real-world entities and the edges may represent relations between entities or relations between entities and types (i.e. classes) of the entities. Hence, predicates can be distinguished depending on whether they connect two entities or an entity and an entity type. The entities may also be referred to as resources. For each statement, the subject may correspond to a node, the object may correspond to a (different) node and an edge corresponding to the predicate may connect the subject node to the object node.
The nodes may have corresponding classes, such that each of the nodes has a corresponding class. The (corresponding) classes may be part of (or organized in) a schema (i.e., a data schema or an ontology). The schema may be defined in the RDF or the Web ontology language.
The following are examples of classes:

:State a rdfs:Class.
:EuropeanState a rdfs:Class.
:City a rdfs:Class.

Hence ":State" is a resource that is a class, more specifically, an RDF class. The class ":EuropeanState" is another resource that is a class, more specifically, a subclass of ": State" Hence, hierarchies of classes are possible. Moreover, multiple inheritance is also possible.
In addition or alternatively, the directed graph may be labeled and multi-relational. Accordingly, both the nodes and edges may have labels and the edges may have directions. The objects of the statements may be labels of the directed graph. The directed graph may be multi-relational in the sense that the edges have different labels. The nodes of the directed graph may be subjects or objects and the edges may be predicates.
In addition or alternatively, the schema may include properties. Each of the properties may apply to at least one of the classes of the schema. At least one of the properties may have a domain and/or a range. Each of the properties may be used by (or apply to) at least one statement. The domain (e.g., rdfs:domain) may specify a class to which a subject belongs and the range (e.g., rdfs:range) may specify a class to which an object belongs. More specifically, the domain may specify a class to which the subject of the statement belongs, and the range may specify a class to which an object of the statement belongs. With regard to the RDF Schema, please refer to the W3C RDF Schema specification, https://www.w3.org/TR/rdf-schema/.
The following are examples of properties:

rdf:type a rdf:Property
dbo:foundationPlace a rdf:Property.
:EuropeanState rdfs:subClassOf :State.
:locatedIn a rdf:Property.
:capitalOf a rdf:Property.
:capitalOf rdfs:subPropertyOf :locatedIn.

Hence, ":locatedIn" and ":capitalOf" are properties. Moreover, ":capitalOf" is a subproperty of ":locatedIn".

Hence, properties can also form hierarchies. The property ":EuropeanState rdfs:subClassOf :State" indicates that ":EuropeanState" is a subclass in a class hierarchy including the class ":State" and the subclass ':EuropeanState".

Hence, the schema may provide a vocabulary for the directed graph (e.g., knowledge graph). The directed graph may have predefined property prefixes, which can indicate whether a node (i.e., a subject or object) is an instance of a class or a class (e.g., a node may be a class if the node has a prefix "dbo," which represents DBpedia ontology, and a node may be an instance if the node has a prefix "dbr," which represents DBpedia resource). In certain cases, the directed graph can use URI design to differentiate between instances and classes. The directed graph may include statements which explicitly indicate certain nodes are classes. In certain cases, whether a specific node represents an instance or a class can depend on the underlying model. For example, whether a node is a class (and included in the schema of the directed graph) or an instance (thus is not included in the schema of the directed graph) can be determined by checking the rdf:type property: If the type is owl:Class, then the node is a class and is included in the schema; otherwise the node is instance (i.e., instance of a class) and is not included in the schema.

In some cases, the total number of patterns is greater than or equal to the total number of properties.

Moreover, for an ontology (i.e., schema) O with a set of classes C and a set of properties P, merely |P| conditions are required to compute strings from a complete directed graph without syntax errors.

In addition or alternatively, the data from the directed graph covers a plurality of topical domains. Each statement may be identified by at least one uniform resource identifier (URI). At least one of the nodes and edges may be identified by a URI or an internationalized resource identifier (IRI). More specifically, the nodes and edges may each be identified by a URI or an IRI. In some cases, one or more of the subject, the object and the predicate may be a URI. Some nodes (e.g., nodes corresponding to objects) may be identified via a literal rather than a URI. The directed graph may be represented using the RDF. The directed graph may be a knowledge base and/or a knowledge graph. The statements may be referred to as facts or fact statements. Accordingly, the directed graph may have a structure that is similar to known knowledge graphs such as DBPedia, Wikidata, BabelNet, DBkWik, Freebase and DBnaray.

Compared to relational databases, the knowledge graph has a more flexible data structure because the types of data provided by the knowledge graph can vary. For example, properties associated with different instances can differ even though these instances share the same class (e.g., "SAP_SE" and "BASF_SE" can have different property data available although they share the same class "Company"). On the other hand, a relational database can be represented in a knowledge graph format, (i.e., the knowledge graph can be a higher-level abstraction of the relational database).

In certain examples, the nodes in the directed graph (e.g., knowledge graph) can be organized in a hierarchical structure where a lower-level node (representing a more specific object) may be connected to a higher-level node (representing a more generic object) by one or more edges. The lower-level node (or the lower-level object it represents) can be called a descendant of the higher-level node (or the higher-level object it represents), and the higher-level node (or the higher-level object it represents) can be called an ancestor of the lower-level node (or the lower-level object it represents).

The method may further comprise receiving one or more rules corresponding to the subset of the directed graph. The rules may be reasoning, logic, inference or RDF schema rules. The method may further comprise materializing the subset of the directed graph by applying the rules to the plurality of statements to compute additional statements. Materializing the subset of the directed graph may be described as adding context data or references to context data to the subset of the directed graph.

Materializing the subset of the directed graph may be implemented by applying reasoning or applying the (reasoning) rules to the subset of the directed graph.
Numbered examples of rules are the following:

1. every object of the predicate "dbo:foundationPlace" is a country
2. every subject of the predicate ":capitalOf" is a city
3. every object of the predicate ":capitalOf" is a country

The first rule may be implemented by setting the range of the "dbo:foundationPlace" predicate so that its objects must be instances of a country class. The second rule may be implemented by setting the domain of the ":capitalOf" predicate so that its subjects must be instances of a city class. Similar to the first rule, the third rule may be implemented by setting the range of the ":capitalOf" predicate so that its objects must be instances of a country class.

An example of materializing (i.e., reasoning) follows. The materializing is based on the following statement:
:Madrid :capitalOf :Spain.
and the following properties:

:capitalOf rdfs:domain :City.
:capitalOf rdfs:range :Country
:capitalOf rdfs:subPropertyOf :locatedIn.

Accordingly, materializing may include combining a statement with one or more properties. More specifically, materializing may include combining a statement with properties (e.g., property restrictions) that limit the subject or object of the statement. The combinations may be used to determine further statements, (e.g., classes that the subject of the statement is an instance of and/or classes that the object of the statement is an instance of). Materializing may be understood as determining statements that can be implicitly derived from the directed graph and adding the determined statements to the directed graph. Three numbered examples of reasoning follow:

    1. :Madrid :capitalOf :Spain.

       :capitalOf rdfs:domain :City.
       → :Madrid a :City.

    2. :Madrid :capitalOf :Spain.

       :capitalOf rdfs:range :Country
       → :Spain a :Country.

    3. :Madrid :capitalOf :Spain.

       :capitalOf rdfs:subPropertyOf :locatedIn.
       → :Madrid :locatedIn : Spain.

Each of the three examples above combines the statement, ":Madrid :capitalOf :Spain" with a different property in order to compute (i.e., derive) an additional statement. In the first example, the statement ":Madrid :capitalOf :Spain" is combined with the property ":capitalOf rdfs:domain :City" to compute ":Madrid a :City", which indicates that the subject of the statement, ":Madrid", belongs to (i.e., is an instance of) the class ":City". In the second example, ":Madrid :capitalOf :Spain" is combined with the property ":capitalOf rdfs:range :Country" to compute ":Spain a :Country", which indicates that the object of the statement, ":Spain", is an instance of the class ":Country". In the third example, ":Madrid :capitalOf :Spain" is combined with the property ":capitalOf rdfs:subPropertyOf :locatedIn" to compute ":Madrid :locatedIn :Spain", which indicates that the subject ":Madrid" has the property ":locatedIn" with respect to the object ": Spain".

Each of the additional computed statements (i.e., the materialized statements) may be added to the subset of the directed graph before the subset of the directed graph is received and before the strings are computed.

Continuing the example, given the statement and the properties before materialization, the following SPARQL query would return FALSE:

ASK { :Madrid a :City .}

After materialization, the same SPARQL query would return TRUE. Materializing the directed graph may increase the effectiveness of the computed strings in training the language model, in view of the additional reasoning provided and the logical connections created between statements. Moreover, the capability of the language model to reason may increase with the level of detail of the input provided to the language model. Accordingly, since materializing the directed graph increases the level of detail in the directed graph, strings computed from the materialized directed graph may be more effective in training the language model than strings computed from a directed graph that has not been materialized.

The directed graph may be materialized as statements are inserted into the directed graph, (e.g., before defining the plurality of conditions and the plurality of patterns). Hence, the steps of receiving the one or more rules corresponding to the subset of the directed graph as well as the following materializing step may be carried out before defining the plurality of conditions and the plurality of patterns. This may lead to faster computing of strings from the subset of the directed graph, since the materializing has already been carried out.

Alternatively, the steps of materializing the directed graph may be carried out upon the subset of the directed graph that is received. This may have the advantage of providing better performance in cases when materialization is not used or may increase the efficiency of creating the directed graph.

In addition or alternatively, the method may further comprise sorting the subset of the directed graph such that nodes are grouped together with their neighbors. The sorting may be carried out after materializing the subset of the directed graph. The sorting may comprise determining a list of nodes in the subset of the directed graph and adding a randomly selected node to a new list of nodes. For each node in the new list of nodes, determining the connected nodes. For each of the connected nodes, if the respective node is in the subset of the directed graph, adding the respective node to the list of nodes. The method may further comprise removing the node from the list of nodes.

Pseudocode for the sorting algorithm described in the preceding paragraph is provided below:

```
graphNodeSet = graph.getAllNodes()
backlog = []
WHILE graphNodeSet NOT EMPTY
 IF backlog IS EMPTY
        // perform a random pick/jump in the graph
        backlog.add(graphNodeSet.randomDraw())
END IF
FOR r IN backlog DO
        // cover the full neighborhood of n
        FOR n IN r.connectedTriple DO
                serialize(r, n.edge, n.node)
                IF n.node IN graphNodeSet
                        backlog.add(n.node)
                END IF
        END FOR
        graphNodeSet.remove(r)
END FOR
```

The serialize() function above may verbalize a respective triple ("r" - subject, "n.edge" - object, "n.node" - predicate). In other words, the serialize() function may translate a statement from the subset of the directed graph into a serialization format, such as RDF/XML, RDFa, Notation3 (.n3), or Turtle (.ttl), N-Triples, or JSON-LD.

The sorting algorithm may be referred to as a clustering algorithm and may ensure topicality, (i.e., that the computed strings are close to each other in the sense that they relate to similar topics or the same topic). In other words, neighboring computed strings are semantically similar. This may increase the effectiveness of the strings in training the language model.

The method may further comprise training the language model using the computed strings.

For example, providing the computed strings as input to the language model may include using the computed strings to train (e.g., further train) the language model. For example, the language model may be pretrained or extensively trained, but the training might not include data in the subset of the knowledge graph. Therefore, training the language model using the computed strings may expand the capability of the language model and enable to language model to assist in tasks related to data in the subset of the knowledge graph.

Training the language model using the subset of the directed graph may have the advantage of leveraging or expanding on the substantial effort and expense that went into the language model. For example, training a large language model, such as ChatGPT, PaLM, Megatron, Titan, or Chinchilla, may take months and cost tens of millions of dollars or euros. Enabling the large language model to apply information from the subset of the directed graph may be a way to take further advantage of the effort and expense already invested in training the large language model.

Moreover, training the language model using the subset of the directed graph may involve fine tuning the language model (e.g., by applying low-rank adaptation) to optimize the language model for a task or a domain, e.g., the domain of the subset of the knowledge graph.

For further information on Low-Rank Adaptation, please refer to "LoRA: Low-Rank Adaptation of Large Language Models", Edward Hu et al., 17 Jun 2021.

In some cases, the language model is a probability distribution over sequences of words. The language model may be a large language model, (e.g., having at least one million parameters or at least one billion parameters).

In some cases, the language model includes a neural network. The neural network may be a deep neural network, (e.g., a neural network having one or more hidden layers). The neural network may have at least one million parameters (e.g., weights and biases) or at least one billion parameters. The neural network may have been trained on unlabeled (i.e., unannotated) text using unsupervised (i.e., self-supervised) learning.

In addition or alternatively, the neural network may include a transformer that uses self-attention, thereby differentially waiting the significance of each part of input data provided to the neural network. Input to the neural network may be parsed into tokens and the tokens may be processed simultaneously by calculating weights for the tokens in successive layers of the neural network. The neural network may be designed to process sequential input data. The neural network may include weights (e.g., soft weights) that can be changed during runtime.

According to another aspect, a computer program (e.g., a computer program product) is provided. The computer program comprises instructions that, when the program is executed by a computer, cause the computer to carry out the method of any one of the preceding claims.

According to yet another aspect, a computer readable medium stores the computer program. For example, the computer program may be tangibly embodied in the computer readable medium. In other words, the computer readable medium may be a non-transitory storage medium.

According to a further aspect, a computer system for providing data from a directed graph to a language model is provided. The system comprises a database storing a directed graph. The system further comprises a software service configured to define a plurality of conditions and a plurality of patterns. Each of the conditions has at least one corresponding pattern. The software service is further configured to receive a subset of the directed graph from the database. The subset of the directed graph includes a plurality of statements. Each of the statements includes a subject, an object and a predicate relating the subject to the object. For each of the statements in the subset of the directed graph, the software service is configured to perform the following: when one of the conditions matches a respective statement and the pattern corresponding to the condition can be applied to the respective statement, compute a string from the respective statement using the pattern. The software service is further configured to provide the computed strings as input to the language model.

The software service may be a web service. The web service may run on a server and listen for network requests on a port, e.g., port 80.

The subject matter described in this disclosure can be implemented as a method or on a device, possibly in the form of one or more computer programs (e.g., computer program products). Such computer programs may cause a data processing apparatus to perform one or more operations described in the present disclosure.

The subject matter described in the present disclosure can be implemented in a data signal or on a machine readable medium, where the medium is embodied in one or more information carriers, such as a CD-ROM, a DVD-ROM, a semiconductor memory, or a hard disk. In particular, disclosed subject matter may be tangibly embodied in a non-transitory machine (computer) readable medium.

In addition, the subject matter described in the present disclosure can be implemented as a system including a processor, and a memory coupled to the processor. The memory may encode one or more programs to cause the processor to perform one or more of the methods described in the application. Further subject matter described in the present disclosure can be implemented using various machines.

Details of one or more implementations are set forth in the exemplary drawings and description that follow. Other features will be apparent from the description and the drawings.

In the following text, a detailed description of examples will be given with reference to the drawings. Various modifications to the examples may be made. In particular, one or more elements of one example may be combined and used in other examples to form new examples.

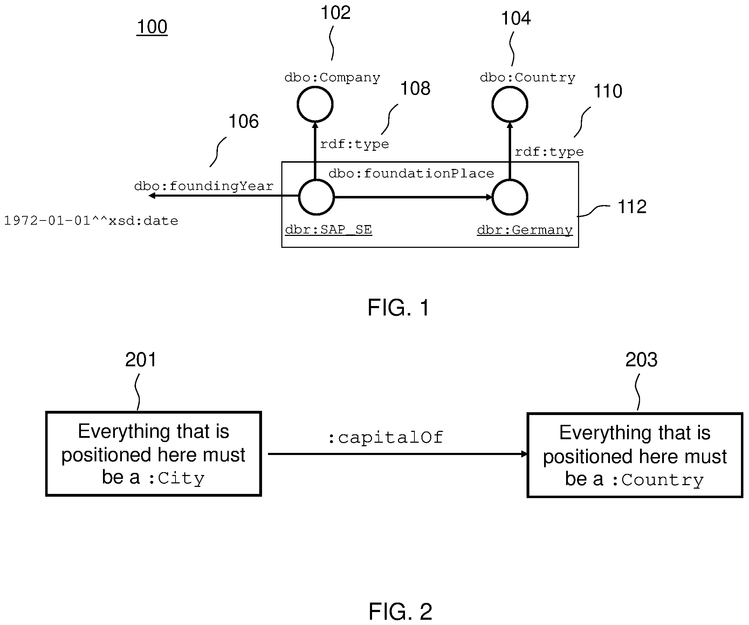

FIG. 1 shows a subset 100 of a directed graph. More specifically, FIG. 1 shows a subset 100 of a knowledge graph. Nodes of the directed graph are shown as circles and edges of the directed graph are shown as arrows. The subset 100 of the directed graph includes labels 102, 104, 106, 108, 110, where the labels are URIs and defined in the resource description framework (RDF). The node labels 102 and 104 are objects, the edge labels 106, 108, 110 are predicates. The string "1972-01-01" may also be a node label (i.e., an object) having a type of xsd:date.

The subset 100 of the directed graph includes a statement 112 (i.e., triple statement) having a subject "dbr:SAP_SE", a predicate "dbo:foundationPlace" and an object "dbr:Germany", each of which are URIs defined in RDF. An exemplary serialization of the statement 112 is dbr:SAP_SE dbo:foundationPlace dbr:Germany. A schema of the directed graph may be defined via RDF schema (RDFS) or Web Ontology Language (OWL) from the World Wide Web Consortium (W3C).

FIG. 2 shows a domain 201 and a range 203 of a property, ":capitalOf". The domain 201 and the range 203 may be defined as follows:

```
:capitalOf rdfs:domain :City .
:capitalOf rdfs:range :Country .
```

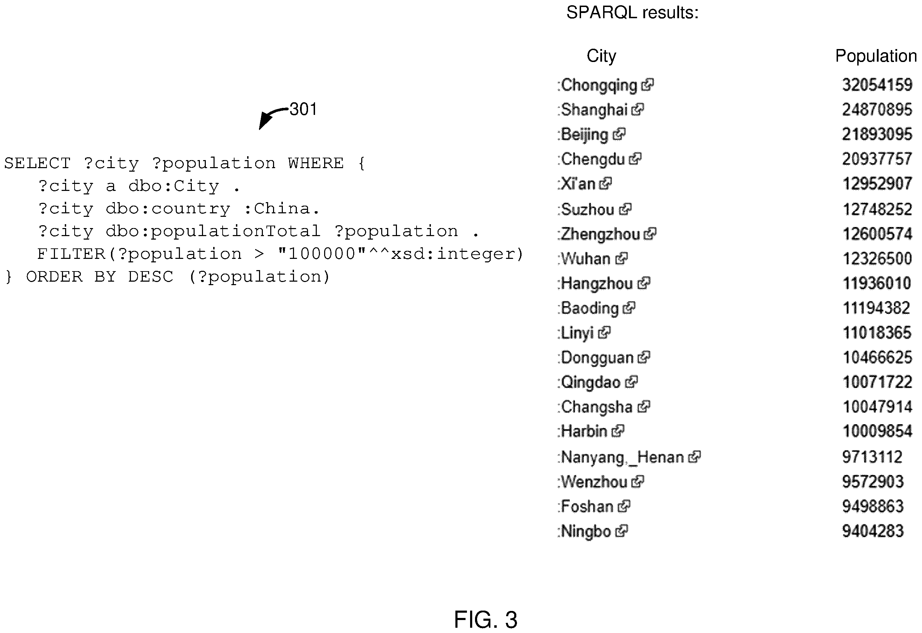

FIG. 3 shows an exemplary SPARQL query 301 of a knowledge graph. The query 301 is configured to determine an answer to the following question: what is the population of cities in China which have more than 100,000 inhabitants? The results of executing the query 301 are also shown.

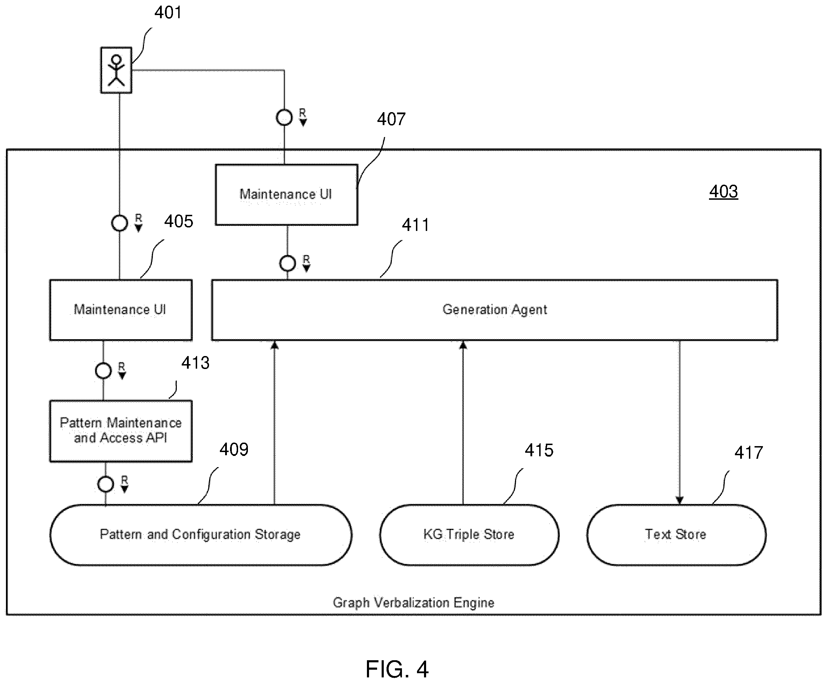

FIG. 4 shows an architecture for a system for providing data from a directed graph to a language model. The language model may be trained using the data from the directed graph. User interfaces and software components are shown as rectangles and storage components are shown with rounded corners.

The system may take the subset 100 of the directed graph (or a reference to the subset 100), custom conditions and custom patterns, and configuration options as input. The subset 100 may be provided as a set of triple statements. The pattern and configuration storage 409 may store default patterns, while custom conditions and patterns are provided by the client 401.

The configuration options may include indicating whether question patterns should be used in addition to text patterns or exclusively. The configuration options may specify how multiple patterns corresponding to conditions will be handled:

RUN_ALL: all patterns assigned to a condition are applied if the condition is TRUE;
RUN_RANDOM: patterns are ordered randomly and a first pattern that can be applied to the statement is used.

Another configuration option may specify whether the directed graph should be materialized (default TRUE).

**EP 4 617 910 A1**

Other ways of handling multiple patterns and other configuration options may also be used.

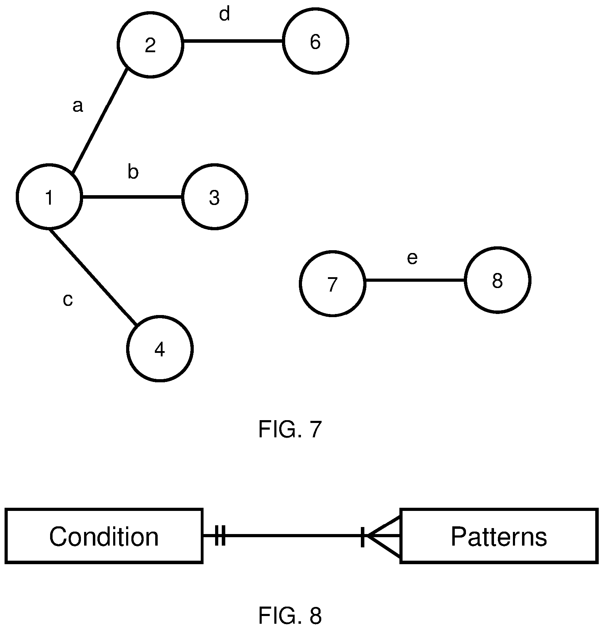

The directed graph may be materialized, and the statements of the directed graph may be sorted, (e.g., by the generation agent 411). Subsequently, strings may be computed from the statements of the subset 100 of the directed graph, as discussed in connection with FIG. 7.

A client 401 may be used to interact with a software service 403. The client 401 may interact with the software service 403 via different user interfaces (UIs) 405 and 407 in order to maintain patterns and/or configurations in a pattern and configuration storage 409, or to compute strings from the subset 100 of the directed graph via a generation agent 411. The pattern and configuration storage may be accessible via a pattern maintenance and access application programming interface (API) 413. The subset 100 may be the entire directed graph or a proper subset of the directed graph identified via a query, (e.g., a SPARQL query). The SPARQL query may be constructed via a user interface that abstracts the query language, (e.g., a low-code or no-code platform).

The directed graph may be stored in storage 415 and strings computed from statements of the subset 100 of the directed graph may be stored in storage 417.

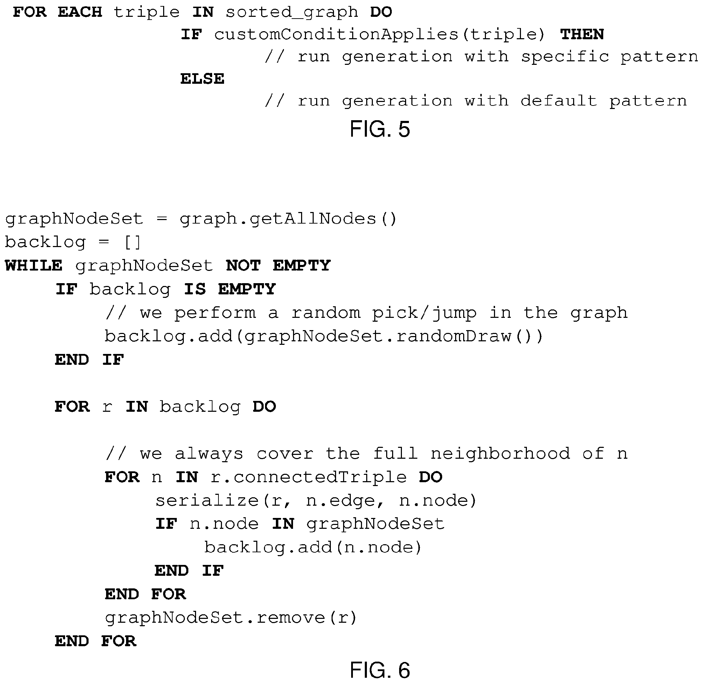

FIG. 5 shows an algorithm for computing strings from statements (i.e. triples) in the subset 100 of the directed graph. In the depicted example, the directed graph is sorted before the strings are computed. Before computing (i.e. generating) a string from a default pattern, it is first determined whether a condition corresponding to a specific (i.e., custom) pattern matches the statement. If the condition corresponding to the specific pattern matches the statement, the specific pattern is used to compute the string. Otherwise, the default pattern is used to compute the string.

When there are multiple specific and default patterns, then the specific patterns may be checked first and one of the default patterns may be used to compute the string only if none of the specific patterns can be applied.

After the strings are computed, the strings may be reformulated using a reformulation language model. The reformulation language model may differ from the language model to be trained. The reformulation language model may be a language model having a high or very high precision for f in the following reformulation function f:

$$f(sentence) = sentence'$$

The reformulation language model (also referred to as a paraphrasing language model or an encoder-decoder model) may be implemented using Google T5, FLAN-T5, or Quillbot. The reformulation language model may have a high precision (e.g., at least 90% correctness) or a very high precision (e.g., at least 99% or at least 99.9% correctness). The reformulated strings may have a greater degree of language variation than the originally computed strings. The reformulated strings may be provided to a user and may hold the attention of the user better than the originally computed strings. Alternatively, the reformulated strings may be provided to the language model to be trained. The language variation in the reformulated strings may produce better results when training the language model than the originally computed strings.

The reformulated strings may occasionally be incorrect. Accordingly, a human may have the option to accept or reject the reformulated strings. Accepted and/or rejected reformulated strings may be used to retrain the reformulation language model. In addition, the accepted and/or rejected reformulated strings can be used to compare the quality of different reformulation functions f.

FIG. 6 shows an exemplary sorting algorithm for sorting the statements of the directed graph. Sorting may prevent output of computed strings in random order. Once the statements are sorted, the same or similar topics may be grouped together. The sorting algorithm may have the following form:

$$List<Triple> result = sort(Set<Triple>)$$

)

Set<Triple> corresponds to the statements of the directed graph before sorting and List<Triple> result corresponds to the statements of the directed graph after sorting. "sort" calls a sorting function, such as a function implementing the exemplary sorting algorithm depicted in FIG. 6. Other sorting functions may also be used.

The graphNodeSet variable initially holds the unsorted statements of the directed graph and the backlog variable will contain the sorted directed graph upon completion of the sorting algorithm.

FIG. 7 shows a directed graph that may be provided as input to the sorting algorithm of FIG. 6. Assuming that node one was drawn first, the output would be the following statements:

1 a 2
1 b 3
1 c 4

2 d 6
7 e 8

Each number above represents a node, and each letter represents an edge, as shown in FIG. 7. Accordingly, the sorting algorithm ensures that rather than a random output, nodes that are close together in the directed graph are also grouped together in the computed strings provided as output. In other words, after being computed, neighboring strings cover semantically similar content.

FIG. 8 shows that one condition has at least one but may have multiple corresponding patterns (also referred to as text patterns). When provided with a statement,( e.g., an RDF triple), a condition may evaluate to TRUE or FALSE. If the condition evaluates to TRUE, (i.e., the condition matches a respective statement), it is determined whether the at least one pattern corresponding to the condition can be applied to the respective statement. If the pattern can be applied, a string is computed from the respective statement using the pattern.

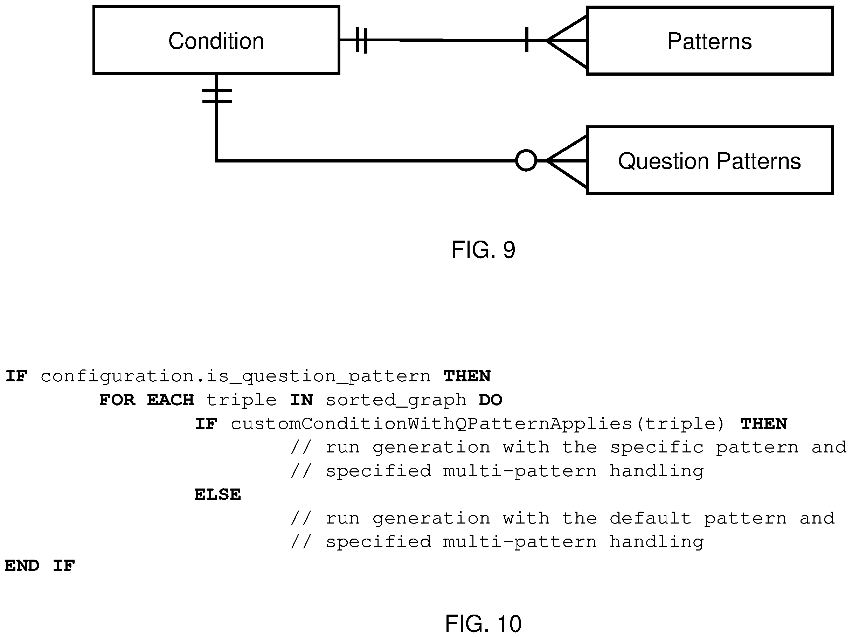

FIG. 9 extends FIG. 8 to cover question patterns in addition to text patterns, and shows that one condition has at least one but may have multiple corresponding text patterns. In addition, the condition may have zero or more question patterns. The syntax of question patterns may be identical to the syntax of text patterns.

Question patterns may enable conversation-like strings to be computed. Such conversation like strings may be particularly useful for some language models, (e.g., language models that require conversations).

FIG. 10 extends the algorithm of FIG. 5 to cover question patterns. In particular, if a configuration option enabling use of question patterns is set then specific conditions corresponding to question patterns are checked. If a question pattern corresponding to a specific condition can be applied, then a string is computed from a respective statement using the question pattern. Otherwise, a default pattern is used to compute a string from the respective statement.

The configuration options specifying how multiple patterns corresponding to conditions will be handled may be extended to question patterns as follows. Specifically, the following three configuration options may be used to handle multiple patterns assigned to at least one condition:

RUN_ALL: If a condition matches a statement and multiple question patterns are assigned to the condition, all question patterns that can be executed are executed. If there are multiple text patterns and question patterns, the Cartesian product of the text patterns and question patterns is executed.

RUN_RANDOM: If a condition matches a statement, a random order of all available question patterns assigned to the condition is determined. The question patterns are then tested for execution in a top-down fashion. The first question pattern that can be executed is executed and the process is stopped.

RUN_ALL_QPATTERNS_RANDOM_TEXT_PATTERN: All question patterns are used but if there are multiple text patterns, only a random text pattern is used to generate the answer.

Other ways of handling multiple patterns assigned to a condition may also be used.

**Example 3- Example Relationships Between Knowledge Graphs, Ontologies, and Meta Ontologies**

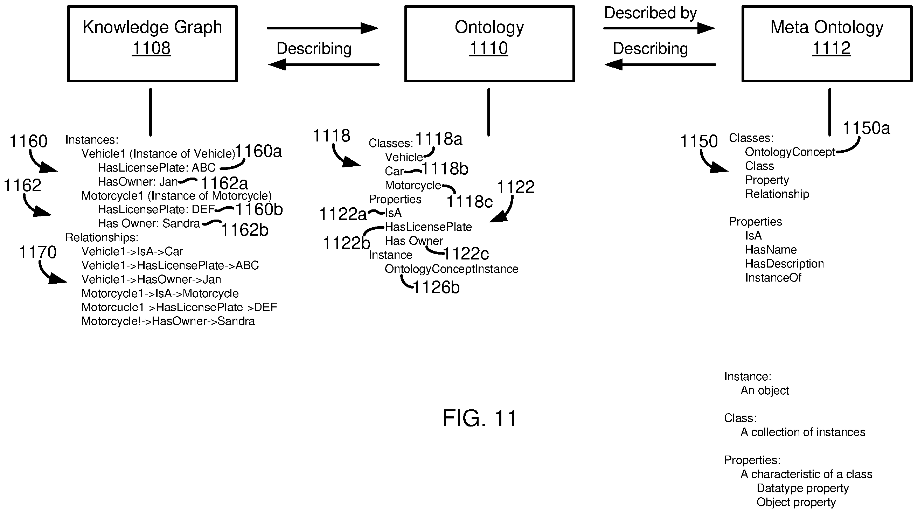

FIG. 11 is a diagram illustrating relationships between a knowledge graph 1108, an ontology 1110 for the knowledge graph, and a meta ontology 1112 for the ontology. The ontology 1110 can be used to describe elements of the knowledge graph 1108. In a similar manner, the meta ontology 1112 can be used to describe elements of the ontology 1110. The knowledge graph 1108 can be considered in some ways as an instance of the ontology 1110, and the ontology can be considered as an instance of the meta ontology 1112. Generally, concepts are described from a more concrete perspective to a more conceptual perspective going from the knowledge graph 1108, to the ontology 1110, to the meta ontology 1112.

Aspects of the present disclosure are described with respect to the specific example of motor vehicles, which can be referred to generally as vehicles or as more specific vehicle types, such as cars and motorcycles.

Looking at the ontology 1110, it can be seen that the ontology describes several classes 1118, such as a vehicle 1118a, a car 1118b, or a motorcycle 1118c. The ontology 1110 also defines a number of properties 1122, such as properties that can be possessed by a class 1118, or, more particularly, properties that can be possessed by an instance of a class. In this example, a property 1122a can be an isA property, such as a property that can be used to define a particular instance as an instance of a particular class 1118. Properties 1122b and 1122c describe particular properties of the classes 1118, such as, respectively, a property of having a license plate or a property of having an owner. As described, the ontology 1110 can itself be considered as an instance of the meta ontology 1112, and an instance identifier 1126b indicates that the ontology is an instance of the meta ontology, as being an instance of an ontology concept class 1150a of classes 1150 of the meta ontology.

The knowledge graph 1108 is shown as including an instance 1160 of the vehicle class 1118 and an instance 1162 of the motorcycle class 1118c. Each instance 1160, 1162 includes values 1160a, 1160b, 1162a, 1162b for the properties 1122b, 1122c. The knowledge graph 1108 also defines various relationships 1170. For example, the relationships 1170 can associate a particular node with a particular class 1118 of the ontology 1110, or can associate a node with a particular property 1122, and a corresponding value for the property.

As described, the meta ontology 1112 describes concepts used in the ontology 1110 at a higher conceptual level. For example, the ontology 1110 has particular classes 1118, while the meta ontology 1112 specifies the concept of a class. Similarly, the meta ontology 1112 defines concepts such as properties and relationships, including a property where one object can be an instance of another object.

For purposes of the present disclosure, an object is used to refer to a particular instance of a class, where a class is represented by a collection of instances. The class, and its instances, can have properties, including datatype properties and object properties. For example, object properties can refer to relationships between objects (which can also be referred to as instances, entities, or resources), while datatype properties associate objects with literal values.

### Example 4- Example Property Identification Process

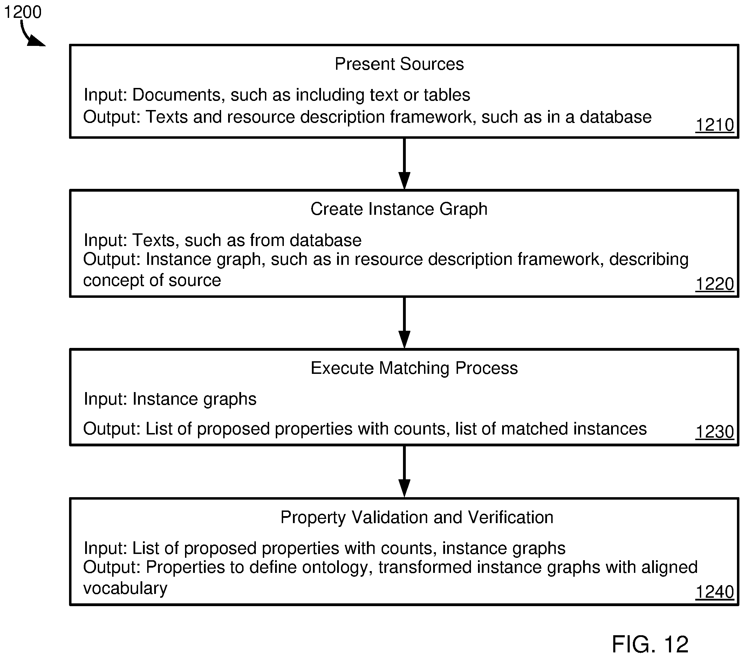

FIG. 12 illustrates a flowchart of a process 1200 for automatically extracting properties from a dataset. Sources are presented at 1210. The sources correspond to data representing one or more instances of a class. Examples of source include electronic documents, such as text documents or tables. Sources contain electronic data, but need not be in any specific format. The data can be structured, such as in CSV format, or may be unstructured, such as free text of word processing documents. In some cases, rather than directly providing a source, a source location can be specified, such as using a URL, and the data for the source can be retrieved using the URL.

In at least some implementations, data from sources can be extracted and converted to one or more common formats. For example, documents (or, more generally, "files") having text can have the text extracted as a string. The strings can be used to generate a graph of concepts in the string, such as a graph in RDF format. Some documents, such as webpages, can include an RDF description natively (such as using JSON-LD, Microdata, or RDFa), and so the RDF description can be extracted in RDF format. Some documents may have some text already represented in RDF format and other text only represented in non-RDF format. In such cases, text elements that are not in RDF format can be extracted as strings, converted to RDF format, and optionally connected to the existing RDF description in the source.

Instance graphs are created at 1220. The input can be text extracted from documents at 1210. The input can be processed using information extraction techniques, such as using OpenNRE (github.com/thunlp/OpenNRE, where NRE stands for neural relation extraction), which can extract relationships from input text. In some cases, a knowledge graph can be generated using coreference resolution, named entity linking, and relationship extraction (such as described at neo4j.com/blog/text-to-knowledge-graph-information-extraction-pipeline/). Generally, information extraction can be performed using one or more of pattern matching, machine learning, named entity recognition, or dependency parsing, including as known in the fields of information extraction, natural language processing, and knowledge graph construction. Another suitable information extraction technique is disclosed in U.S. Patent Application No. 17/973,322, filed October 25, 2022, incorporated by reference herein to the extent not inconsistent with the present disclosure.

Using the instance graphs, a matching process is executed at 1230. The matching process of 1230 produces a list of proposed properties, and a list of instances that contain such properties. Note that the properties need not be associated with classes, and that the list of properties need not all use the same name for a property that represents a common semantic concept. That is, the matching process can account for differences in terminology used to describe the same property. For example, different instances might use "fuel economy," "mileage," or "fuel efficiency" to refer to the same property.

While any suitable matching technique can be used, suitable matching techniques include those described in U.S. Patent Nos. 11,487,721 and 11,263,187, which are hereby incorporated by reference.

The results of the matching process 1230 are provided as input to a property validation and verification operation 1240. The operations at 1240 include selecting properties to be used in an ontology, including resolving differences in terms/labels for particular properties. If desired, the instance graphs obtained at 1220 can be transformed to use an aligned vocabulary. In some cases, the operations at 1240 can be at least particularly automated, while in other cases at least some of the operations can be performed by a user.

### Example 5- Example Computing Environment Implementing Property Identification Process

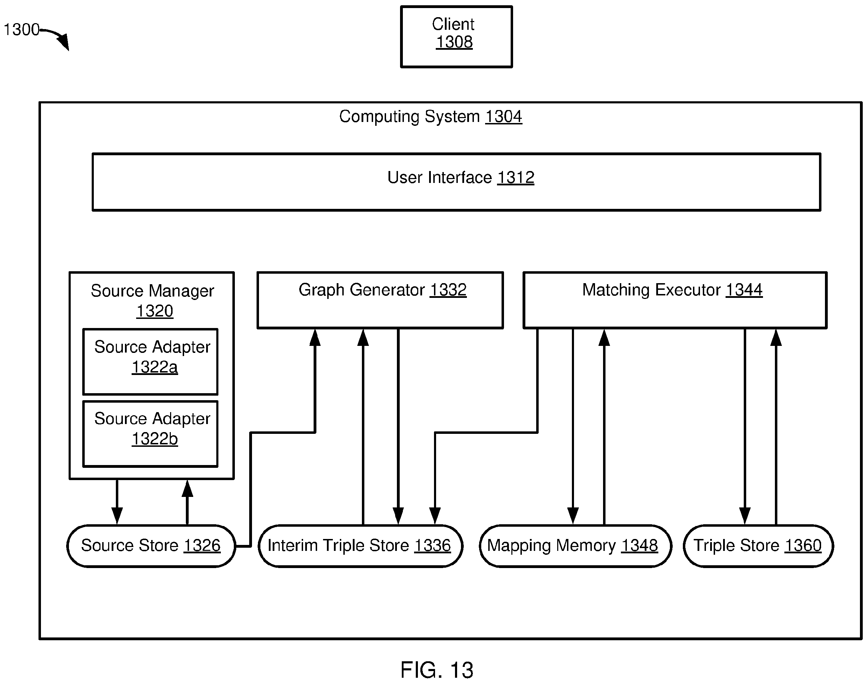

FIG. 13 provides an example computing environment 1300 in which disclosed techniques can be implemented. For example, the computing environment 1300 can be used to perform operations of the process 1200 of FIG. 12.

The computing environment 1300 includes a computing system 1304 that is in communication with a client 1308. The computing system 1304 can include a user interface 1312 that can be used by the client 1308 to perform various operations, as will be described.

The computing system 1304 further includes a source manager 1320. The source manager 1320 can be responsible for obtaining documents, including in some cases extracting data from the documents. The source manager 1320 can include one or more source adapters 1322, shown as 1322a, 1322b. A source adapter 1322 is configured to extract data from a particular source type, which can include formatting the data, or removing formatting from the data. Consider a document produced by a word processor. The document can include text, as well as formatting information for the text, such as field codes, font styles, or spacing information. A source adapter 1322 can be configured for the document type produced by the word processor, which can parse the document to extract text while removing non-text information. Similarly, a source adapter 1322 can be configured to extract data from database tables, JSON documents, or webpages.

A source adapter 1322 can be configured to implement an interface INTERFACE extract (PARAMETER Source f) RETURNS ONE OF [RDF, String].

The source manager 1320 can access a source store 1326. The source manager 1320 can retrieve documents from the source store 1326, such as for processing the documents with a source adapter 1322. The source manager 1320 can also cause text extracted from sources to be saved in the source store 1326.

A user, such as of the client 1308, can cause the source manager 1320 to perform various actions, such as through the user interface 1312. For example, a user can cause documents to be loaded into the source store 1326, and can request that particular documents be processed by a source adapter 1322, or to create groupings of sources in the source store (such as a grouping of sources that are believed to represent related instances that are to be used in extracting properties for an ontology).

The computing system 1304 include a graph generator 1332. The graph generator 1332 can perform at least portions of operations 1220 of the process 1200 of FIG. 12. The graph generator 1332 can include functionality that implements named entity recognition and relationship extraction. The graph generator 1332 can have access to the source store 1326, and can store graph information, such as storing triples in an interim triples store 1336.

A matching executor 1344 can access the interim triples store 1336, and identify properties that are the same, but referred to using different terminology, as in the operation 1230 of the process 1200. In some cases, mappings may already exist between different schemas, and prior mappings can be retrieved from a mapping memory 1348, which can reduce the time and computing resources needed to perform a matching process. Matching results produced by the mapping executor 1344 can be stored in a triples store 1360. The triples store can also store triples associated with a list of properties identified as a result of the process 1200.

## Example 6- Example Sources for Use in Property Identification

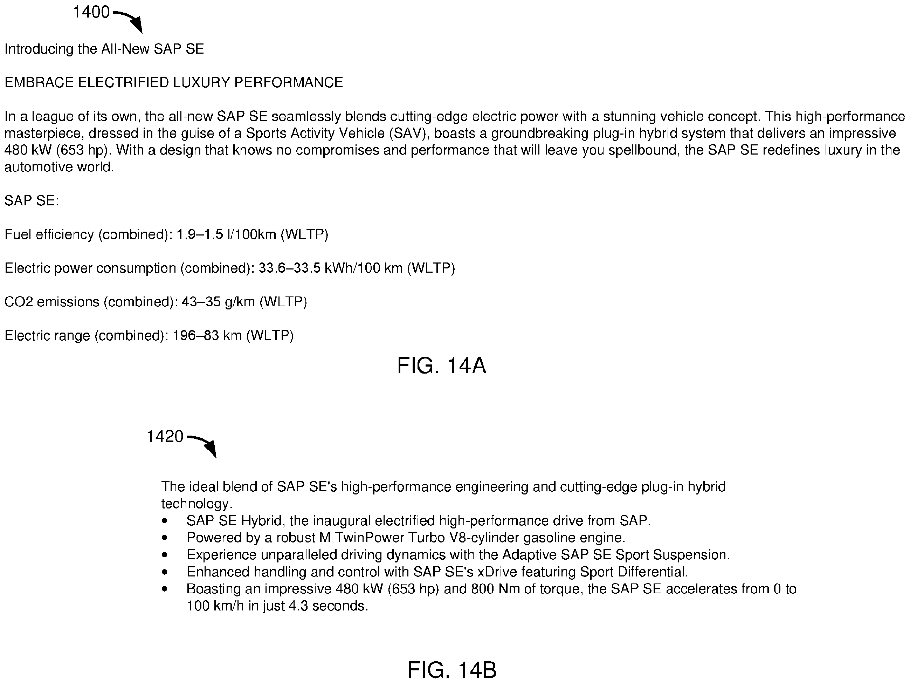

FIGS. 14A-14C illustrate example sources, such as sources from which text can be extracted. The sources of FIGS. 14A-14C provide information for one or more car models, where a given car model, for example, can represent an instance of a car, and where a particular car instance can be described by one or more sources.

FIG. 14A illustrates a source 1400 with a description with a car model "SE" produced by car company SAP. Note that the source 1400 includes various keywords that can be recognized by a human as relating to properties of a car. However, the disclosed techniques provide ways that can automate the creation of an ontology/property identification, including in ways that would not be performed by a human. For example, a human might review instance data for one or two car models and then use intuition to extract properties, such as for a car class. A human would not create instance graphs from individual sources, for example, or perform a matching process as described.

In FIG. 14A, examples of words that can be related to properties include "electric power," "vehicle," "plug-in," "hybrid," "kW," "hp," "fuel efficiency," "electric power consumption," "range," and "emissions." FIG. 14B illustrates another source 1420 describing the SAP SE fictional car. Note that source 1420 includes some words and properties that correspond to the words and properties used in the source 1400. For example, the source 1420 also includes words such as "kw," "hybrid," and "hp." The source 1420 also includes words that are not present in the source 1410, but which can be properties of a car, such as "gasoline engine" or "engine," "torque," "accelerates," "adaptive," "suspension," and "differential." Note that some of these words can indicate properties, while others can indicate property values. For example, "differential" can correspond to a "differential type" property, and "sport" can be an example literal value for "differential type."

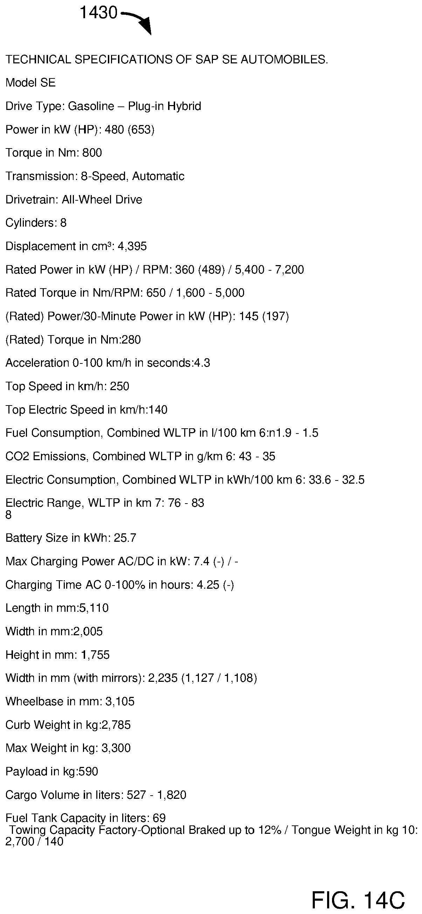

FIG. 14C is similar to FIGS. 14A and 14B, having text for a source 1430, where at least some of the text can correspond to properties (or literal values) also present in the source 1400 or the source 1420, where the terminology used for a property can be the same or different. The source 1430 can include properties, or example literal values, which are not in the sources 1400 or 1420, and can omit properties or literal values that are in the source 1400 or the source 1420. For example, the source 1430 does not include "differential," which was a term included in the source 1420.

## Example 7- Example User Interfaces for Executing a Property Identification Process and Example Property Count and Alignment Processes

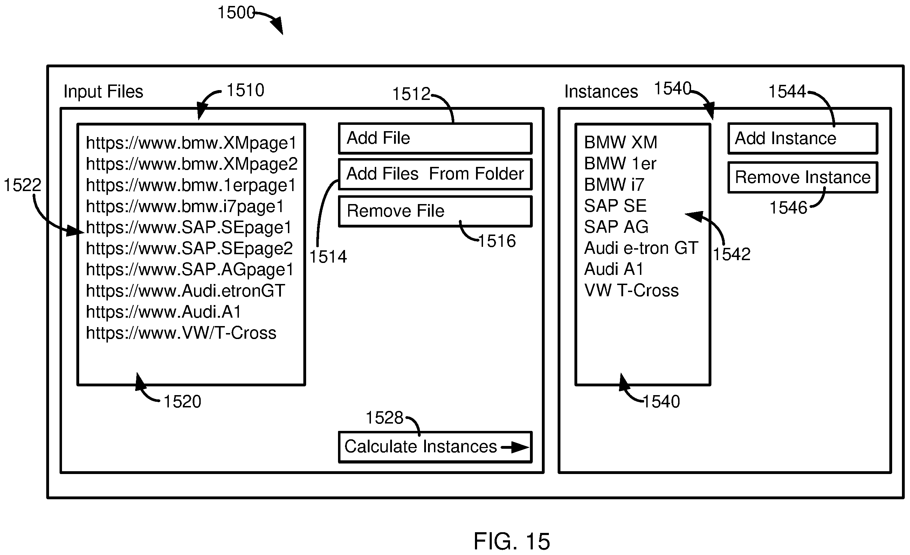

FIG. 15 provides an example user interface 1500 where a user can select source files to be analyzed, such as during the operation 1210 of the process 1200 of FIG. 12. In a panel 1510 of the user interface 1500, a user can select particular files to be analyzed, such as using a control 1512 to add a file, a control 1514 to add all files from a particular folder, or a control 1516 to delete a particular file. A field 1520 displays a list of currently selected sources, or input files, 1522. Typically, a user may select files that are expected to contain instances, such as of one or more classes for which properties are to be extracted, such as for use in constructing an ontology.

The user interface 1500 provides access to functionality that can be used to determine instances present in the files of the field 1520 through a calculate instances control 1528. For example, selecting the control 1528 can cause instances to be identified that are present in the files 1522 of the field 1520. As discussed, multiple files may represent/describe a since instance.

Recognizing instances can be performed in a variety of ways. For example, the structure of the files 1520 may be analyzed, such as to determine if there are common elements. In the example shown, the files 1520 are identified by URLs, and the URLs have the form of an auto manufacturer name followed by a car model name. In other cases, determining instances can be based on various heuristics, such as by at least tentatively assigning files to a common instance based on a usage count of a term. For example, if "SE" is used many times in a file or set of files, it may be determined that "SE" may represent a particular car instance.

A panel 1540 lists instances 1542 associated with the input files 1522. The instances 1540 can be those obtained through automated analysis of content of the input files 1522, or can correspond to instances added manually by a user. For example, a user may choose to delete an instance 1540 using a remove instance control 1546, or to add an instance using an add instance control 1544.

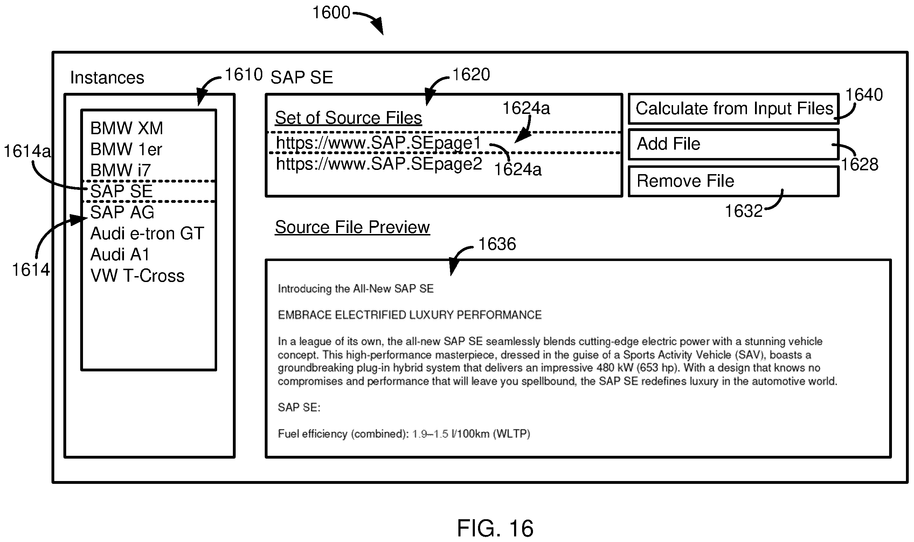

FIG. 16 provides a user interface 1600 through which a user can initiate a knowledge graph discovery or update process, such as corresponding to actions performed during operation 1210 of the process 1200 of FIG. 12. The user interface 1600 provides a panel 1610 that lists instances 1614 to be used in knowledge graph creation or update. The instances 1614 can correspond to the instances 1540 of FIG. 15.

A panel 1620 lists input (or source) files 1624 corresponding to a selected instance 1614a of the instances 1614. The input files 1624 correspond to a portion of the input files 1522 of FIG. 15. As noted, multiple input files 1522 can describe the same instance 1614. The user interface 1600 can provide a control 1628 allowing a user to add an input file to the set of files for the instance 1614a, as well as a control 1632 allowing a user to remove such a file. A panel 1636 provides a preview of a selected input file 1624a of the input files 1624. The user can initiate a graph creation/update process for one or more of the instances 1614 by selecting user interface control 1640.

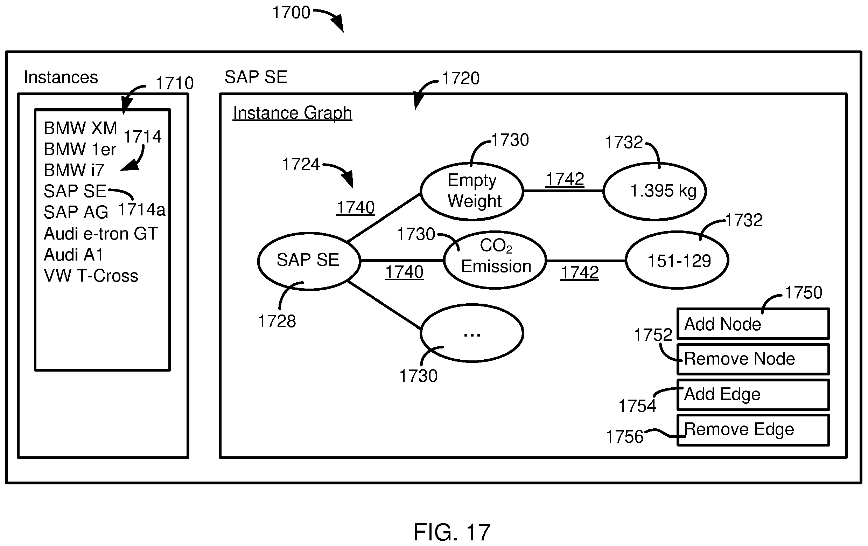

FIG. 17 illustrates a user interface 1700 that allows users to view, and optionally modify, knowledge graphs determined after selection of the user interface control 1640. A panel 1710 lists instances 1714 for which a knowledge graph was determined, and can correspond to the instances 1614 of FIG. 16. A panel 1720 displaces instance graphs for selected instances 1714, such as an instance graph 1724 for instance 1714a.

The graph 1724 includes nodes and edges, where the nodes can correspond to an instance node 1728, property nodes, 1730, and literal value nodes 1732. Edges can represent relationships such as a node 1740 that indicates that an instance "hasProperty," or a node 1742 that a property "hasValue."

Optionally, the user interface 1700 includes controls that can allow a user to modify a graph, as illustrated for the instance graph 1724. The user interface controls can include a control 1750 to add a node, a control 1752 to remove a node, a control 1754 to add an edge, or a control 1756 to remove an edge.

As described for operation 1230 of FIG. 12, a matching process can be used to determine properties that are associated with different instances of a particular ontological concept. Mapping software functionality can implement an interface: INTERFACE match (GraphSet G) RETURNS Alignment.

Some properties can be common to all or a significant number of concept instances, while others may be less common, and some may even be specific to a single instance. In determining properties of an ontological concept, it can be useful to determine an occurrence frequency of particular properties. Typically, what is desired is to determine which instances have a property with the same semantic meaning, even if the term/label used for the property differs between instances.

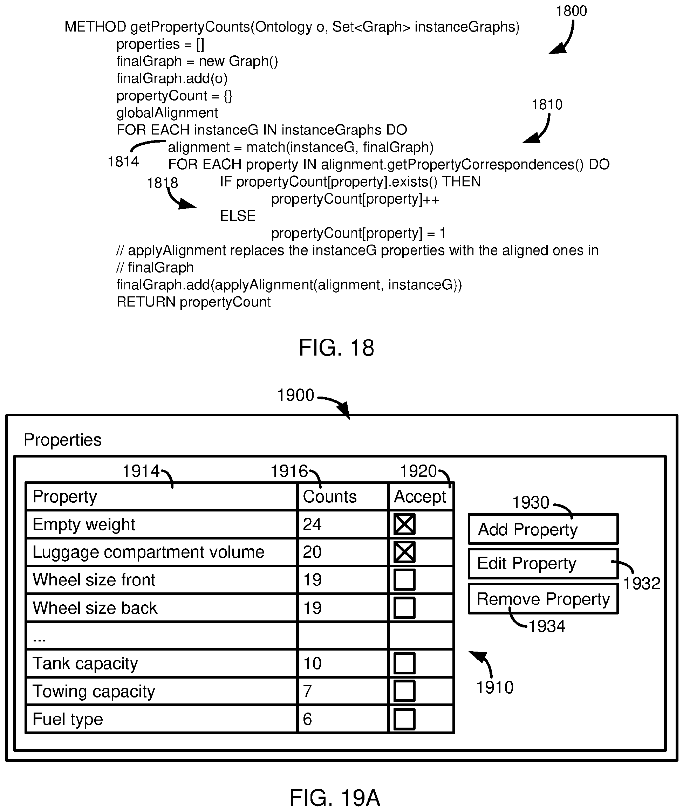

FIG. 18 provides example pseudocode 1800 for performing instance alignment, and for counting a number of occurrences of a particular semantic property, regardless of the label applied. In a loop 1810, the pseudocode 1800 performs an alignment between a particular instance graph and a final graph being constructed for a set of instance graphs. In particular, line 1814 calls a "match" function that performs the alignment. In lines 1818, for properties in the instance graph being processed, if the property already exists in the alignment, a count for that property is incremented by one. If the property does not already exist in the alignment, its count is set to one.

FIG. 19A illustrates a user interface 1900 that presents results from a matching process for instance graphs, including property counts. The user interface 1900 includes a table 1910 that has a column 1914 for properties identified during a graph analysis and matching process, a column 1916 that indicates the number of times the property was observed in an instance graph, and a column 1920 that accepts user input as to whether a given property should be included in a "final" ontology generated from the instance data.

The user interface 1900 includes a control 1930 allowing a user to add a property, a control 1932 allowing a user to modify a property, and a control 1934 allowing a user to remove a property. Modifying a property can include changing a name/label applied to a property. That is, the name of the property in the column 1914 can be a property name that was automatically selected from the instance data. In a particular implementation, a default name is selected that corresponds to the name appearing most frequently in the instance data, or most commonly for a set of discrete instances (that is, counting a number of instances where the name is used at least once).

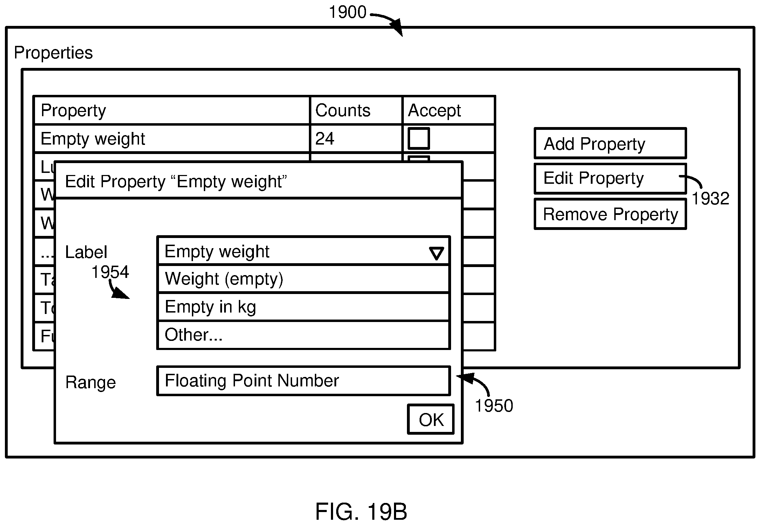

FIG. 19B illustrates the user interface 1900 after the selection of the control 1932. In this case, a window 1950 allows a user to select a name from a dropdown list 1954, where the options can correspond to names identified in the input set. A user may be allowed to enter a different property name that does not occur in the instance data. The window 1950 is also shown as including a field that illustrates the range (such as a datatype, and optionally a range or list of values observed in/consistent with the instance data).

In other implementations, instead of, or in addition to, having users add properties to an ontology, properties can be automatically added, including if they satisfy defined criteria. For example, a rule can be defined that a property will be added to a set (for an ontology, (for example, if it occurs more than a threshold number of times in a set of instances, or occurs in a percentage of instances above a threshold amount).

Further, in some cases, a graph, such as the finalGraph defined in the pseudocode 1800 of FIG. 18, can be modified based on a final set of selected properties. For example, nodes that do not correspond to instances or to properties of the set of selected properties can be removed from the graph.

**Example 8- Example Property Evolution**

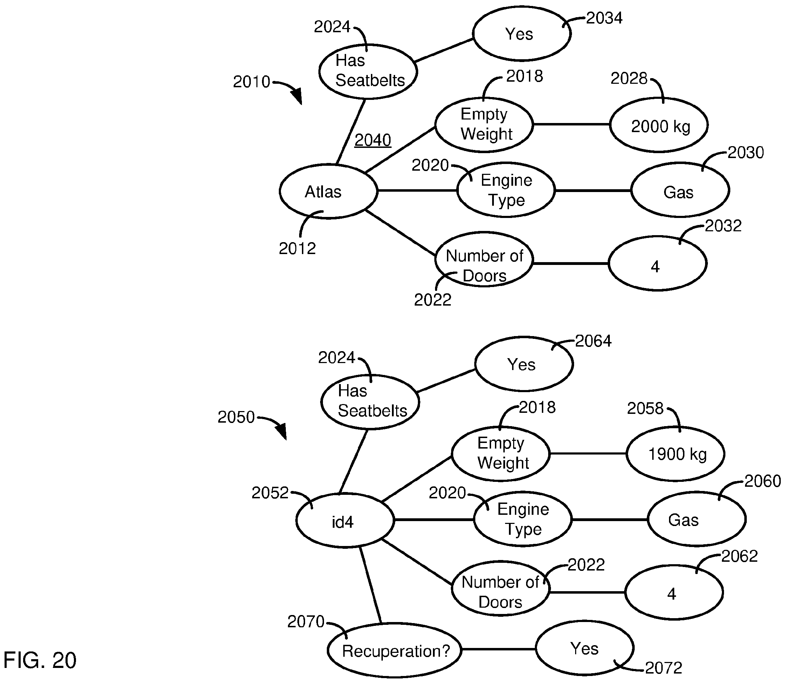

FIG. 20 illustrates how properties of instances of a particular class (or subclass) defined in an ontology can evolve over time. Instance graph 2010 represents a specific car model 2012 (an instance of a car model class). At the time this instance was processed, the ontology included properties of: an empty weight 2018, an engine type 2020, a number of doors 2022, and an indication 2024 of whether the car has seatbelts. Corresponding values 2028, 2030, 2032, 2034 are associated with these properties 2018, 2020, 2022, 2024 in the instance graph 2010.

The instance graph 2010 can correspond to a portion of a knowledge graph, and so the values 2028-2034 can be associated with properties of the knowledge graph, regardless of whether some properties may not currently be represented in an ontology associated with the knowledge graph. Or, the instance graph 2010 does not correspond to a knowledge graph, and the instance graph can have properties that do not correspond to properties in a knowledge graph or in properties in an ontology. That is, disclosed techniques can be adapted for use with graphs similar to the instance graph 2010, even if the instance graph is not formally a knowledge graph or associated with a knowledge graph, provided that techniques are provided for tracking changes to properties and property values that were identified as of interest for a particular user (or computing process).

Notably, when instance graph 2010 was initially created, the ontology did not include properties related to electric vehicles, such as the ability, recuperation, of an electric vehicle to recharge its batteries using regenerative braking or deceleration. However, at a later time, another instance is processed to generate instance graph 2050 for a specific car model (instance) 2052. In addition to the existing properties 2018, 2020, 2022, 2024, and their associated values 2058, 2060, 2062, 2064, instance graph 2050 introduces the "recuperation" property 2070 and its corresponding value 2072, indicating that the vehicle instance 2052 possesses recuperation capabilities. Note that, despite being present in instance graph 2050, the recuperation property 2054 does not exist in the ontology for the vehicle class.

Disclosed techniques can recognize the appearance of a new instance property, and can track the occurrence of the property, including to add the property to a relevant ontology or to prompt a user to consider adding the property to the ontology.

Now consider the property 2024 indicating that a car has seatbelts. Over time, instances, such as generated from particular electronic documents, may no longer refer to this property, even if the car reflected by an instance includes seatbelts. As an example, seatbelts are currently mandated to be included on all vehicles sold in the United States. Prior to a law mandating the inclusion of seat belts, including seat belts in a vehicle was optional. Accordingly, documents describing a particular vehicle may have mentioned whether the vehicle included seat belts. After the law requiring seat belts in all cars sold, the use of the term "seat belts" in documents describing cars may decline, including since at some point the general public assumes that a new car has seat belts. Maintaining the seat belt property can cause confusion to users, as it may be unclear whether the property is optional or not. Including obsolete properties in an ontology can also make the ontology more complex and more difficult to maintain, update, and understand.

Maintaining obsolete properties can also lead to problems with data integrity and consistency. For example, aggregation operations that are performed with instances that have values for an obsolete property and instances that do not have values for the property can provide inaccurate results - such as identifying a smaller percentage of vehicles that have seat belts since, even though newer vehicles include seat belts, this information would not have been present in a document processed to generate a vehicle instance.

Disclosed techniques can be used to recognize when properties may be obsolete, and either mark a property as obsolete or prompt a user to consider marking a property as obsolete. While in some cases obsolete properties are removed from an ontology, in other cases the obsolete properties are still maintained in the ontology, but are marked as obsolete. In the latter case, maintaining a property, but marking it as obsolete, can allow for the use of the property in historical analysis, but the property can be "ignored" in scenarios where only active properties are of interest.

**Example 9- Example Computing Environment for Property Management**

Generally, disclosed techniques involve tracking the use of properties in instances over time. This tracking includes new properties that occur in instances. That is, in at least some implementations, disclosed technologies assume that an upstream process is available to recognize new properties in instances. In some cases, these properties can be manually added as instance properties, while in other cases the properties can be automatically determined. For example, the technique described in Examples 4-8 can be used to identify new properties.

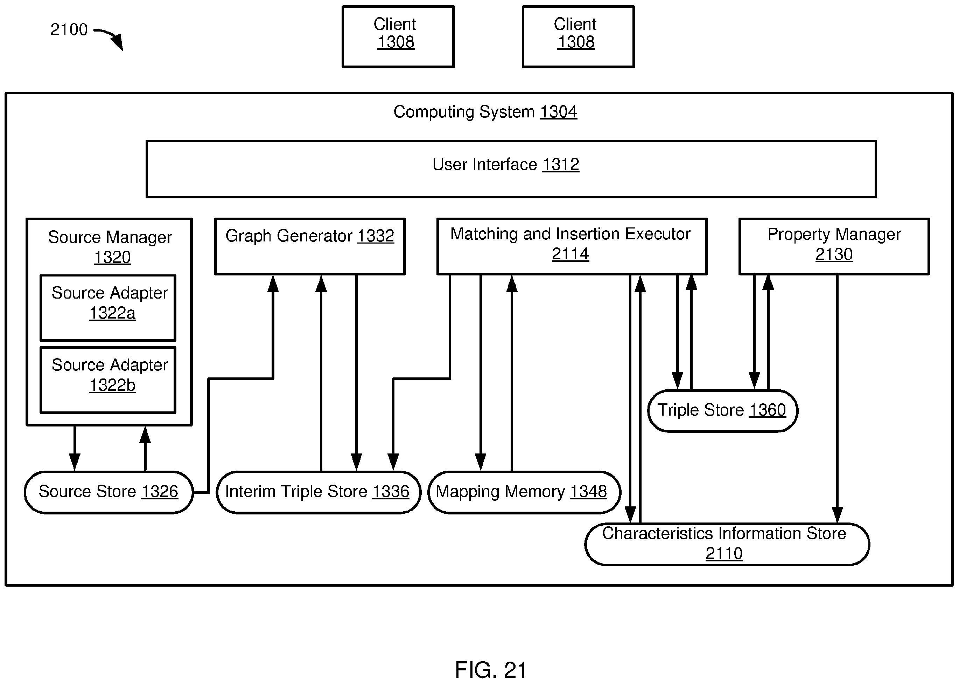

FIG. 21 illustrates a computing environment 2100 that is a modified version of the computing environment 1300 of FIG. 13. Elements of the computing environment 2100 that are the same as, or at least generally analogous to, elements of the computing environment 2100 are identified using the reference numbers of FIG. 13.

Compared with the computing environment 1800, the computing environment 2100 adds a characteristics information store 2110. The characteristics information store 2110 can maintain information about the usage of properties by instances over time. As will be further discussed, the characteristics information store 2110 can store information about properties, instances (such as from a processed document) that include the property, and one or more dates associated with the use of the property in an instance. Optionally, the characteristics information store 2110 can include aggregated information, such as a total count of uses of a property in a particular time interval. Information can also include particular property values associated with instances that include the property.

A matching and insertion executor 2114 can be similar to the matching executor 1844 of FIG. 18, but can also include functionality to write information about new properties or about property usage to the characteristics information store 2110. In other implementations, the characteristics store 2110 can be used in computing environments that do not include components of the computing environment 2100, in which case new properties and property use information can be stored in the characteristics store 2110 using another process. In some cases, aggregated values are calculated using a component other than the characteristics information store 2110, and are written to the characteristics information store. In other scenarios, the characteristics information store 2110 includes functionality for performing aggregations. In yet further scenarios, the characteristics information store 2110 does not store aggregated values, but stores information from which aggregated values can be calculated.

The computing environment 2100 also includes a property manager 2130. The property manager 2130 can retrieve information from the characteristics information store 2110, and at least in some cases can also write information to the characteristics information store. For example, the property manager 2130 can write property status information to the characteristics information store 2110, including a change of status for a property. In scenarios where the property manager 2130 performs aggregations or calculations, this information can optionally be written to the characteristic information store 2110.

The property manager 2130 can perform operations such as tracking the use of properties, and making or suggesting property status changes based on such tracking. In at least some cases, users are alerted when a property is added or a property status changed, or when such addition or property change is suggested, but where implementing the addition or change requires user approval. The user interfaces 1312 can cause appropriate user interfaces to be rendered to provide this functionality, and can also allow users to perform actions such as viewing information in the characteristics information store 2110 (including performing queries on the characteristics information store and displaying query results).

The computing system 1304 can be in communication with multiple clients 1308. In performing operations, the property manager 2130 can, in particular implementations, access data for multiple clients 1308. Evaluating data for multiple clients 1308 can provide a more comprehensive view of property use. In some cases, evaluating data from multiple clients 1308 can result in changes being made to ontologies of the clients. In other cases, evaluating data from a single client 1308 that results in a change or proposed change to an ontology can be used to change or propose an ontology change to another client that either uses the same ontology or has an ontology that includes at least some properties that overlap.

**Example 10- Example Storage of Property Use Data**

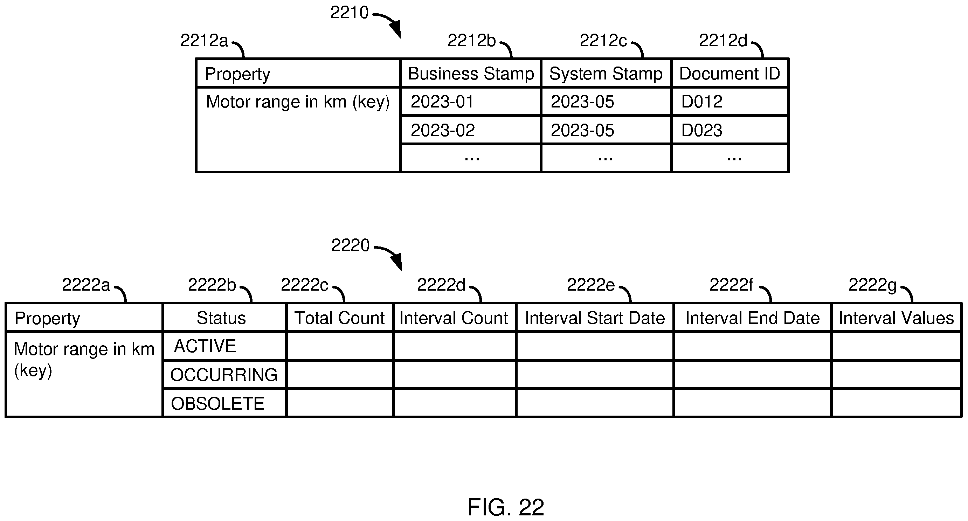

FIG. 22 illustrates example data objects that can be used to store characteristics information for properties. The data objects can be used in the characteristics information store 2110 of FIG. 21.

Data object 2210 tracks use of particular properties 2212a, including through the use of a business timestamp 2212b and a system timestamp 2212c associated with a particular document, having a document identifier 2212d. The data object 2210 can be implemented in a variety of ways, including as a relational database table or in a key-value store.

The data object 2210 can be implemented as a CSON/JSON object. A single data object 2210 can be used for a single property, or a single data object can track information for multiple properties.

One advantage of the structure of the data object 2210 is that it allows documents to be associated with a particular property. Assume that originally a document has a property, but that the property is not active in an ontology and so data for the property is not recorded (such as in a data object, such as a table or view). Later if the property is changed to an active state, the data object 2210 can be used to identify documents having the property, and the documents can be reprocessed so that values for the now active property can be identified and stored.

Data object 2220 tracks the status of a property over time. The data object 2220 can be implemented in an analogous manner as the data object 2210, and can also be used in the characteristics information store 2110. The data object 2220 can track information for a single property, or for multiple properties.

The data object 2220 is shown with three possible values for a status attribute 2222b of a particular property 2222a. The statuses are active, occurring, and obsolete. An active property refers to a property that is active in an ontology. When instances/documents are processed, it is determined whether the instance/document has the property, and appropriate values can be recorded.

A property is occurring when it has been recognized as a property, but has not yet been promoted to an active status. For example, the property may not be used frequently enough to qualify for an active status. Disclosed techniques can track the use of a property over time. If a property is used more frequently, such as over a particular time interval, the property can be changed to an active status, or a user can be prompted to consider changing the property to an active status.

Obsolete properties are those that were once active, but whose recent use has become comparatively infrequent. In some cases, a threshold for making a property obsolete can be the same as a threshold for making a property active. In other cases, the thresholds can be different. For example, a threshold for making a property obsolete can be higher than for changing a property from occurring to active. That is, once a property is active, its use has to be lower than a threshold for making the property active in the first place.

Other status types can be used in the present disclosure. For example, a property can have a status of "propose active" or "propose obsolete." These status types can be useful when user input is required for a status change, at least based on one set of criteria. A user can approve a change from "propose active" or "propose obsolete" that then results in the property having an "active" or "obsolete" status. In some cases, a combination of approaches may be used, such as proposing a change to active or obsolete at one threshold, or automatically making a change if a higher threshold is satisfied.

For each status, the data object 2220 also tracks a total count 2222c of instances having the property, a count 2222d of instances having the property over a particular interval, start and end dates 2222e, 2222d for the interval, and values 2222e observed for the property during the interval. The values 2220e can be useful in determining why a property may have changed status between intervals.

In the case of cars, an "engine type" property may have shown more frequent use. Analyzing the values for "engine type" may reveal that, compared to an older interval, a more recent interval has a new value of "electric" for engine type, compared with an older interval having only values of "gas" or "diesel." A user or process trying to decide whether to, for example, change "engine type" from obsolete back to active, or from occurring to active, could use the new "electric" value to help determine why an increase in usage is occurring and how that might affect a decision to make a status change.

As the above discussion implies, a given property can have multiple intervals for a given status. A property may be new, and have an occurring status, be used sufficiently frequently to have an active status over a period of time, after which the property becomes obsolete. Circumstances can change, so that the property is used, or used more frequently, again, and is promoted to an active status again, optionally after also proceeding again to an occurring status. The increased frequency of use may (or may not) coincide with a new value for the property. Thus, the property has two intervals associated with an active status. These types of cycles can similarly result in multiple intervals for obsolete or occurring status, or other statuses such as propose active or propose obsolete.

The total counts 2220c and interval counts 2220d can be implemented in different ways, as desired. In one implementation, the total count 2220c is for all time periods where a property has a given status, and intervals associated with the interval counts 2220d can be for particular intervals where a property had a given status. That is, the data object 2220 can have "records" for each time period when a property had a particular status. In other implementations, there may be multiple intervals within an overall continuous time period when a property had a particular status. In this case, the total count 2220c can be for the overall time period, and the interval counts 2220d can be for specific intervals within the overall time period.

### Example 11- Example Interval and Interval Membership Criteria

Interval counts, how frequently a property is used over a time period, can be determined using aggregation, such as over the particular interval or "window." An interval can be defined in terms of a date and a period of time from that date. Typically, windows are defined in terms of specific period (e.g., two weeks, a month) before a given date, but intervals can optionally be determined based on a time period after a given date. The time period can be expressed in any suitable manner, such as a fixed number of years, months, weeks, or days. In other cases, an interval can be specified using specific start and end dates.

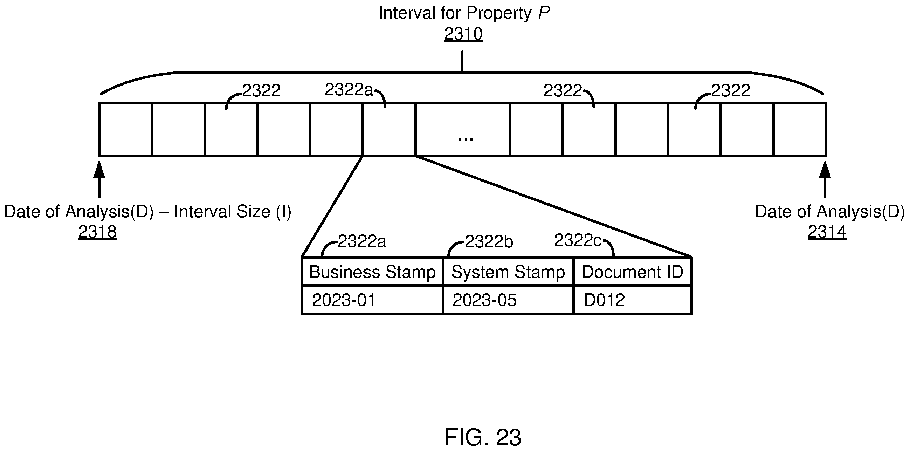

FIG. 23 illustrates an interval 2310 for a property. The interval 2310 is defined by a date, D, 2314 and an interval size. A beginning date 2318 of the interval 2310 is determined by subtracting the interval size from the date D. The interval 2310 includes a plurality of documents 2322 associated with instances, which include, as shown for a document 2322a, a business timestamp 2322a, a system timestamp 2322b, and a document ID 2322c for the instance. Note that the interval 2310 does not necessarily include all documents processed over the interval. Rather, typically, the interval 2310 only includes documents having the relevant property.

In general, intervals can be calculated in different ways. For example, an interval can be calculated using the date a document was processed, the system timestamp, or the business date (the actual date a document was created, an event occurred, etc.). If available, typically it is desirable to use the business date in determining a date for a document, since this represents "real word" use of the property. A system date can be substantially later than a business date. Consider a record of a birth or a wedding. A birth certificate may not be issued, or an update made in a system to indicate a change of an individual to a married status, until after the actual birth or marriage occurred. However, system dates can be used if desired, particularly in scenarios where there is little to no difference between the business and system dates. In other scenarios, business dates are used to determine whether a document should be included in an interval if available, and otherwise a system date is used.

### Example 12- Example Automatic Instance Count and Property Classification

The present disclosure provides techniques for periodically calculating counts for a property over an interval, and maintaining a status, proposing a change to a status, or making a change to a status based on such counts. For example, thresholds can be set for a number of instances having a property in the interval that will result in a change from occurring to active or propose active, or from active to obsolete or propose obsolete. The threshold can be manually set, or can be determined automatically.

Automatically determining a threshold can include monitoring a number of occurrences in an interval for properties that have an active status. The threshold for being promoted from an occurring status to an active status can be set as the number of occurrences of the least frequently occurring active property. Mean or median counts can also be used to set thresholds. Further, statistical techniques, including distributions, can be used to determine thresholds. For example, a threshold can be set as a number of standard deviations from a mean occurrence count for properties having an active status. Values for other status types, such as obsolete, propose obsolete, or propose active can be determined in a similar manner.

As described, in some scenarios, a user approves a status change. Thresholds can be determined with reference to occurrence values that resulted in a user making a status change. Thresholds can be calculated in a similar manner as described above, including by using the median, mean, or statistical calculated using values associated with a user-initiated status change.

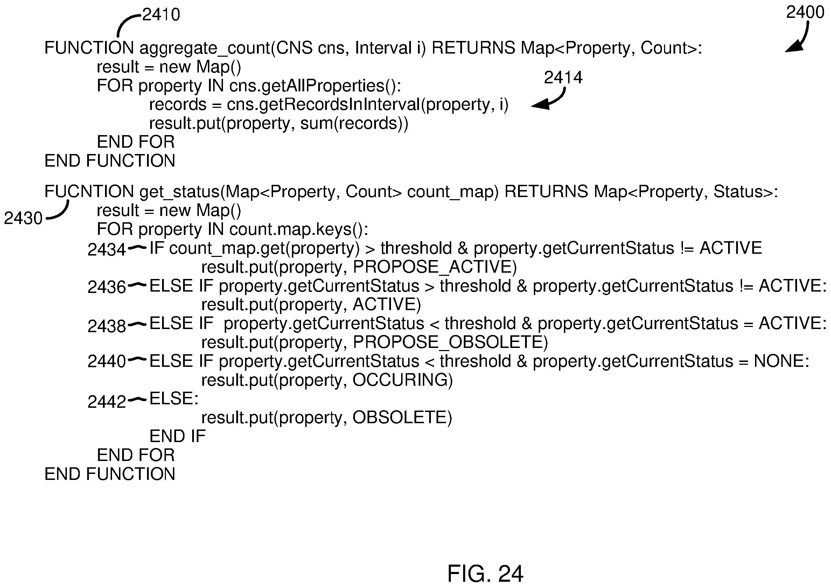

FIG. 24 illustrates example pseudocode 2400 for an aggregation calculation for a property over an interval and then using the results in determining whether a status of the property should be changed. An aggregation function 2410 has parameters of a location of property characteristics information (or an object having characteristics information), and a value of an interval duration. In the example pseudocode 2400, an interval (such as a start date and an end date) is determined by subtracting the interval duration from a current date. In other implementations, the aggregation function 2410 can have parameters that include an interval duration and a reference date from which the interval is to be calculated, or can have parameters that include a start date and an end date that are used to define the interval.

In a loop 2414, the pseudocode 2400 loops through all properties in the characteristics information and calculates a sum of instances having the property in the interval.

A function 2430 assigns a status to the properties of the characteristics information over the period of the interval. The status is determined with respect to a threshold, which can be manually set or determined as described above. Conditional statement 2434 applies if a count for a property exceeds a threshold and the property does not currently have an active status. Conditional statement 2434 sets the status of the property to "propose active."

Conditional statement 2436 applies if the threshold is satisfied and the property currently has an active status. In this case, the property remains set to the active status. Conditional statement 2438 applies if the threshold is not satisfied and the property currently has an active status. Conditional statement 2438 sets the property status to "propose obsolete." Conditional statement 2440 applies if the threshold is not satisfied and the property does not currently have a status. In this case, the property can be set to an "occurring" status. Although not shown, the function 2430 can include a conditional statement that retains an "occurring" status for a property that does not satisfy the threshold but was previously assigned an "occurring" status.

According to the function 2430, remaining properties are assumed to be obsolete, and so conditional statement 2442 sets an "obsolete" status for any property that did not satisfy an earlier conditional statement.

The pseudocode 2400 can be modified in a variety of ways. For example, the function 2430 uses a single threshold. As described, multiple thresholds can be set, including having different thresholds for when a property is promoted to an active status and when a property is demoted to an obsolete status. The pseudocode 2400 can also be modified to include other status changes, such as changing a status directly from "occurring" to "active," from "propose active" to "active," from "active" to "occurring," from "occurring" to "obsolete," from "propose active" to "obsolete," or from "active" to "obsolete." These additional status changes can be associated with additional thresholds.

**Example 13- Example User Interface Screens for View Property Information and Modifying Property Status**

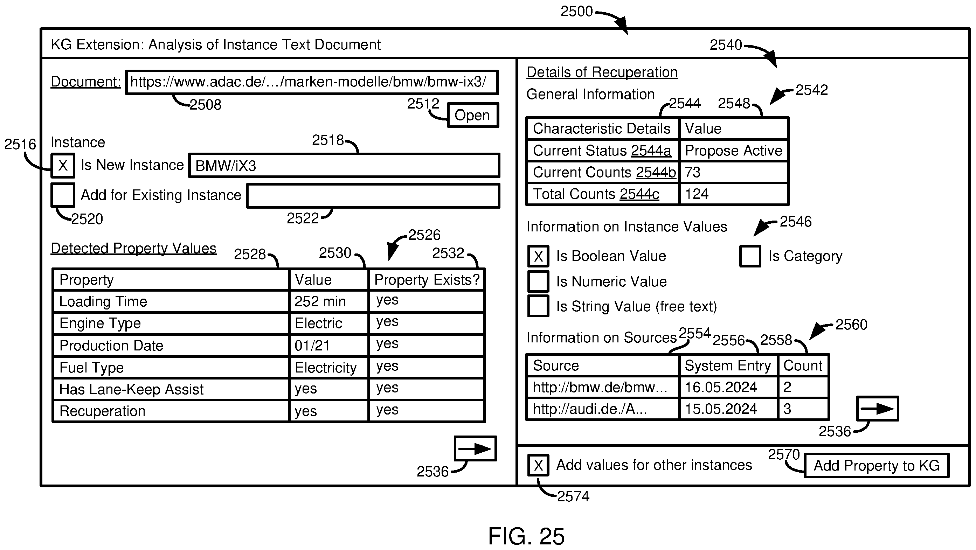

FIGS. 25-31 provide example user interfaces that can be used in carrying out disclosed techniques. FIG. 25 illustrates a user interface 2500 that can be used to add a newly occurring property to a knowledge graph or other set of properties, as well as to an ontology associated with the knowledge graph.

The user interface 2500 provides information for a particular instance, such as a document identified in a field 2508. A user can choose to open the document by selecting user interface element 2512.

As described, there can be multiple documents that describe an instance. The user interface 2500 provides user interface controls 2516, 2518 that allow a user to indicate that the document is a new instance, as well as to enter an identifier for the instance. The user interface 2500 also provides user interface controls 2520, 2522 that allow a user to associate the document with an existing instance, along with an identifier of the existing instance.

A table 2526 is provided of properties 2528 identified in the instance, along with the identified values 2530 for the properties, and identifiers 2532 that indicate whether the property already exists in the ontologies, knowledge graph, or other set of tracked properties.

A user can select a property 2528 and obtain additional information about the property by selecting user interface element 2536. The additional detail is presented in a panel 2540. The panel 2540 includes a table 2542 that lists characteristics details 2544 and their values 2548 for the selected property. The characteristics details includes a current status 2544a, a number of counts of the property in a current interval 2544b, and a total number of counts 2544c for the property, such as over multiple intervals (including all intervals, at least all intervals since a time the property assumed the current status).

The panel 2540 also provides information 2546 about a type, such as a datatype, for the values, such as whether the value is numeric, a Boolean, a string, or is associated with a category having enumerated values.

A table 2550 provides links to documents/instances that have the property, which can be selected and viewed by activation of user interface element 2560. The table 2550 includes a link or identifier 2554 of the document, a date 2556 the document was entered into a system, and a number of counts 2558 associated with the instance. That is, as described, an instance can be described by multiple documents, and the number of counts 2556 can indicate the number of documents for the instance that include the selected property. The number of counts 2556 can reflect the total number of counts, or the number of counts over an interval. The table 2550 can optionally include additional information, such as a business date associated with an instance or document.

A user can select to add the property to a knowledge graph or other set of tracked properties by selecting user interface element 2570. A user can select user interface element 2574 to add values for other instances having the property. That is, as discussed, once a property is marked as active, prior instances or documents having the property can be reprocessed so that their values of the property are captured.

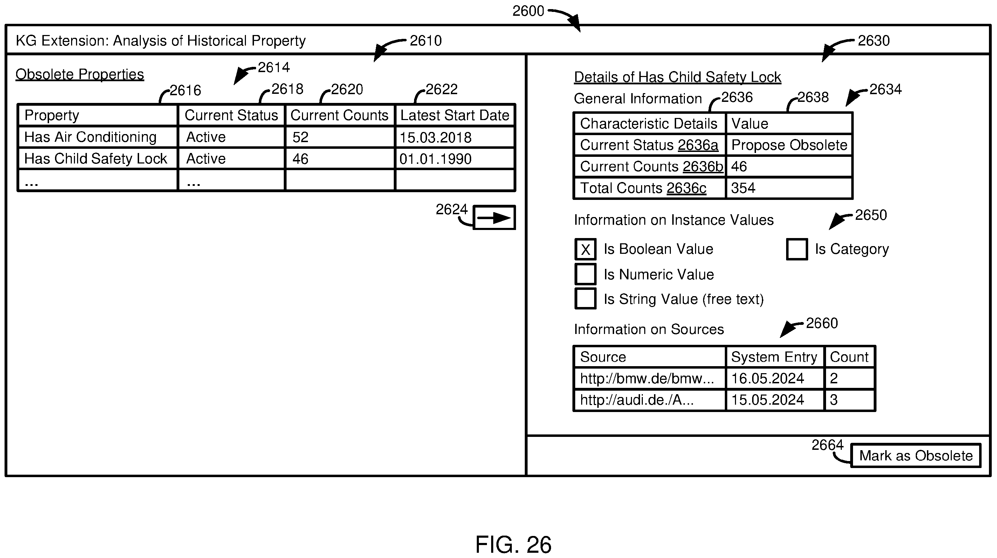

FIG. 26 illustrates a user interface 2600 where a user can view information for properties that may be considered for transitioning to an obsolete status. In a panel 2610, a table 2614 lists properties 2616, a current status 2618 of the property with respect to an ontology, a number of occurrences 2620 of the property in an interval, and a start date 2622 of the most recent interval. A user can select a property 2616 and obtain more information regarding the property by selecting a user interface element 2624.

A panel 2630 provides additional information for a selected property 2616. In the panel 2630, a table 2634 lists various characteristic details 2636 for the property, and corresponding values 2638. The characteristic details 2636 include a current status 2636a determined by a property manager, such as the property manager 2630 of FIG. 26. To clarify, a property may have a current status with respect to an ontology, represented as current status 2618 and a status associated with analyzing information for the property over a particular interval, such as a status resulting from the pseudocode 2400 of FIG. 24. The characteristic details 2636 also include a number of counts 2636b in a current interval for the property and a total number of counts 2636c for the property (which can have the meaning discussed with respect to FIG. 25).

As with the user interface 2500 of FIG. 25, the user interface 2600 can provide datatype information 2650 for values of the property observed for instances within the interval, and information 2660 regarding particular instances/-

documents in which the property was observed. A user can change the status of a selected property to an obsolete status by selecting user interface element 2664.

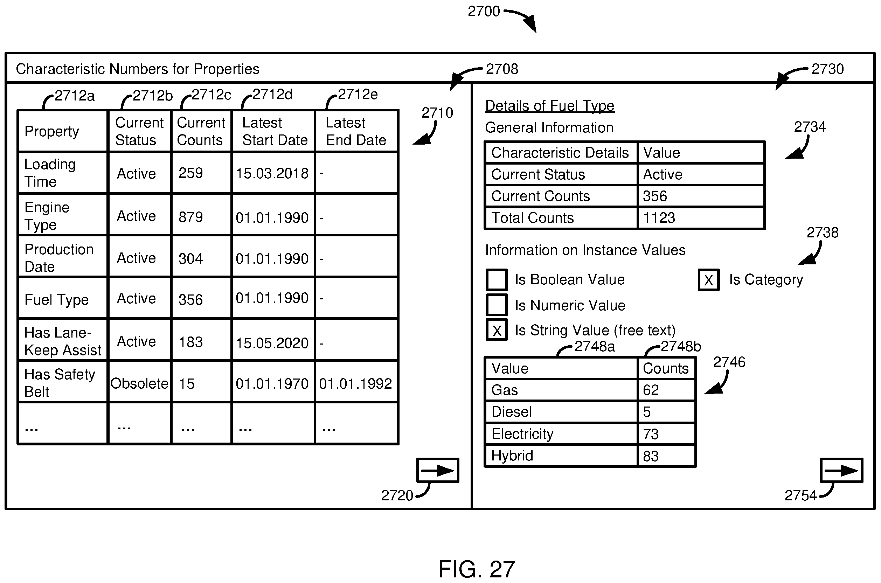

FIG. 27 illustrates a user interface 2700 that provides information for a plurality of properties, including details regarding values associated with such properties. The user interface 2700 includes a panel 2708 that provides a table 2710 that includes a column 2712a that identifies a particular property, a column 2712b that provides a current status of a given property, a column 2712c that provides number of instances in a most recent interval that include the property, and columns 2712d, 2712e that provides start and end dates for the current status. Note that, for properties having an active status, a value may not be included in the column 2712e, or a null value can be used, or another value that indicates that the property status is not associated with an end date.

A user can select a particular property, and obtain further details about the property by selecting a user interface element 2720. The further details are displayed in a panel 2730. Like the user interface 2500, the panel 2730 includes characteristics details 2734 and datatype information 2738. In addition, the panel 2730 provides a table 2746 that includes a column 2748a that lists values observed for the property during a current interval and a column 2748b that lists the number of occurrences of a particular property value over the interval. As described, this information can provide insights as to appropriate status for a property, including evaluating why a property might be recommended to be promoted to an active status or demoted to an obsolete status.

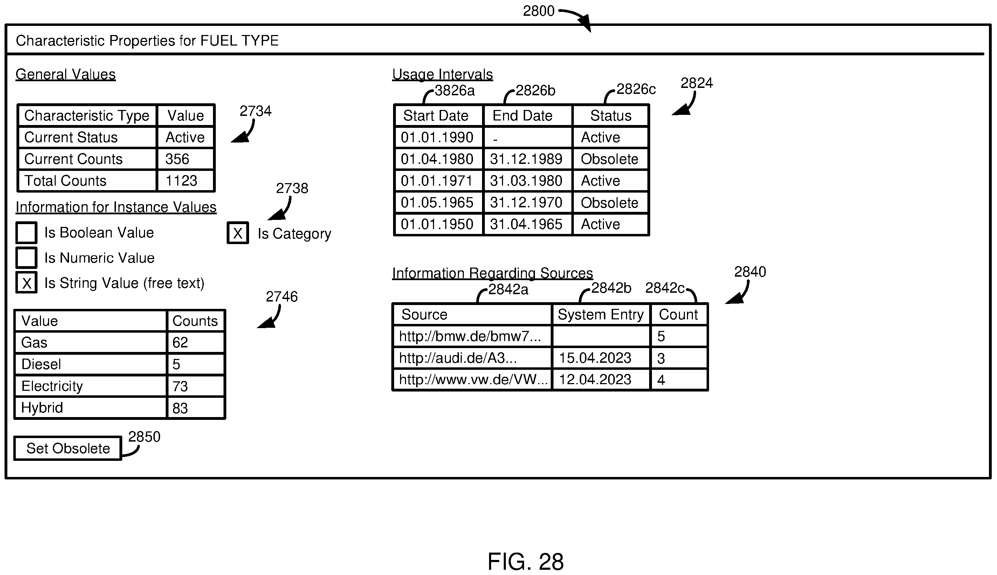

Additional details for a particular property can be obtained by selecting user interface element 2754, which causes a user interface 2800 of FIG. 28 to be rendered. The user interface 2800 can provide comprehensive information for a particular property, including information displayed on other user interface screens. For example, the user interface 2800 displays the characteristics information 2734, the datatype information 2738, and the table 2746.

The user interface 2800 displays information about various statuses the property has been in, in the form of a table 2824 that includes interval information shown in column 2826a providing an interval start date, a column 2826b providing an interval end date (if the interval has ended), and a column 2826c that provides a status of the property over the interval.

Information regarding sources that describe particular instances is also displayed in the user interface 2800, in the form of a table 2840. The table 2840 includes a column 2842a that identifies a source, a column 2842b that provides a system entry date for the source, and a count of the number of occurrences of the property with respect to the source.

A user can select to change the status of the property to "obsolete" by selecting a user interface element 2850. Note that the nature of the user interface element 2850 can change depending on a current status of a property being viewed on the user interface 2800. For example, if the property currently is in an "obsolete" status, the user interface element 2850 can allow a user to set the property to an "active" status. In the case of properties that are in a status such as "occurring," "propose active," or "propose obsolete," the user interface 2800 can optionally provide multiple user interface elements that allow a user to make a status change. In the case of an "occurring" property, for example, a user can be provided with options to make the property active or to delete the property. For "propose active," options can be provided to make the property active, to change the state to "occurring," or to remove the property.

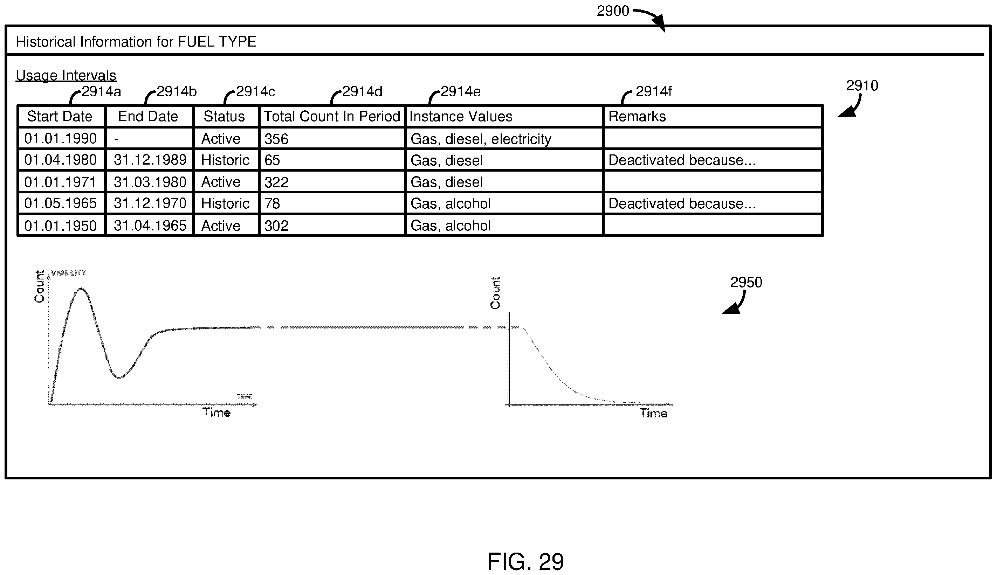

FIG. 29 provides a user interface 2900 that provides more detailed historical information regarding property status over time. In particular, the user interface 2900 provides a table 2910 of usage intervals. The table 2910 includes columns 2914a, 2914b providing start and end dates (if appropriate) for an interval. A column 2914c provides a status of the property over the interval, while a column 2914d provides a total count of instances having the property over the interval. Instance values over an interval are provided in a column 2914e, while a column 2914f can include notes about why a particular status change occurred.

From the table 2910, it can be seen that active status intervals are associated with significantly higher counts than obsolete status intervals. As described, these values can be used in automated processes for setting or recommending a status change. That is, if counts observed over an interval are closer to counts for an interval with an obsolete status, the property status can be changed from active to obsolete, or recommended for such a change. If counts are closer to those in active status intervals, a property can be left in an active status, or, if in an obsolete status, can be changed from obsolete to active, or such a change can be recommended.

The counts in the column 2914d and the instance values in the column 2914f can be used to explain why a status change occurred. For example, at older intervals, cars powered by an alcohol fuel may have been considered as an alternative to gasoline powered cars. Over time, that fuel source became less likely to find widespread commercial use, and so use of the term "fuel type" may have decreased, since gas was the dominant fuel type. At a later date, a similar scenario may have occurred with respect to diesel powered vehicles, with the property going from an obsolete status to active, but then going from active to obsolete again, such as because it was found that diesel powered vehicles had higher than expected emissions. A new technology, using electricity as a fuel type, may cause the property to be active once again.

Automated techniques to assign a status to a property can take into account the appearance or disappearance of particular property values. If a new property value appears, that may more strongly suggest making a property active or recommending an active status. If an existing property value begins to occur less frequently, that may suggest making the property obsolete or recommending an obsolete status.

The user interface 2900 can provide visual aids to help a user understand the use of a property over time, such as a graph 2950 of counts of a property over time. The graph 2950 can be provided for a single interval, for multiple intervals, or for the complete history of the property. In FIG. 29, the graph 2950 illustrates a sharp increase in use of the property, which may be associated with an active status. Over time, the property was used less, but was still commonly used. At later time periods, the property was less commonly used, which may correspond to a transition to an obsolete status.

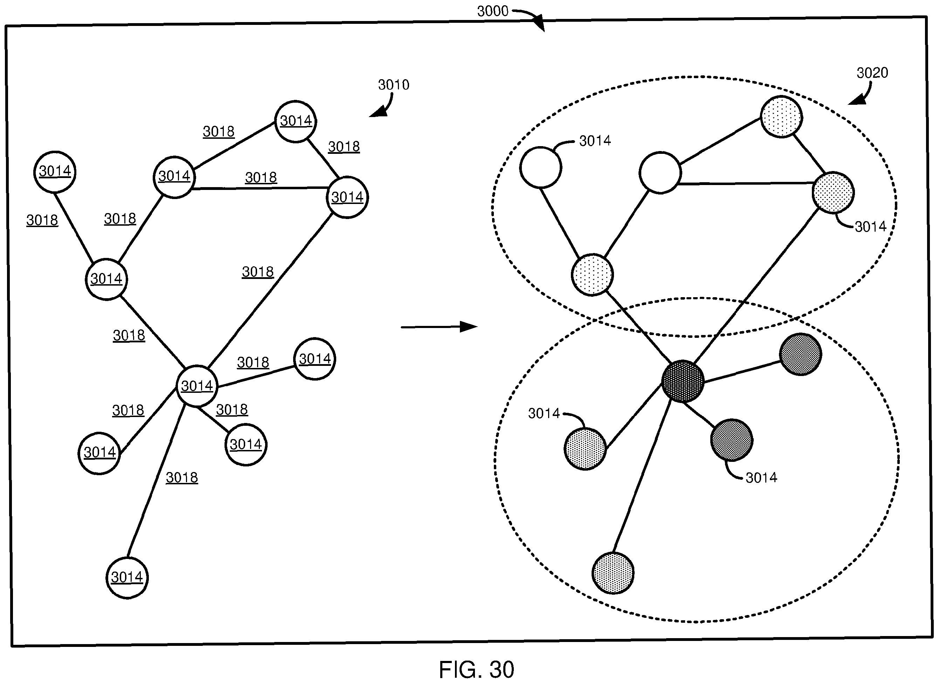

FIG. 30 illustrates a user interface 3000 that can provide information about the use of properties over time, such as over a particular interval. The user interface 3000 includes a graph 3010 that is formed from nodes 3014 representing properties. Edges 3018 between nodes 3014 indicate a relationship between properties. Property relationships can be based on properties being part of a common class or subclass, having a reciprocal relationship, a property/subproperty relationship, being part of a common property chain, or having other logic or restriction that defines a relationship between properties.

The graph 3010 shows properties and their relationships, but does not provide information about how frequently properties are used. Disclosed techniques allow the graph 3010 to be modified, as in a graph 3020, to provide use information, such as information regarding counts of the property over an interval. The nodes 3014 in the graph 3020 are shown with different types of shading, which correspond to general use levels. For example, properties with high use counts can be shaded more heavily than properties with lower use counts. Thus, the graph 3020 allows users, or a computing process, to understand how properties are "trending."

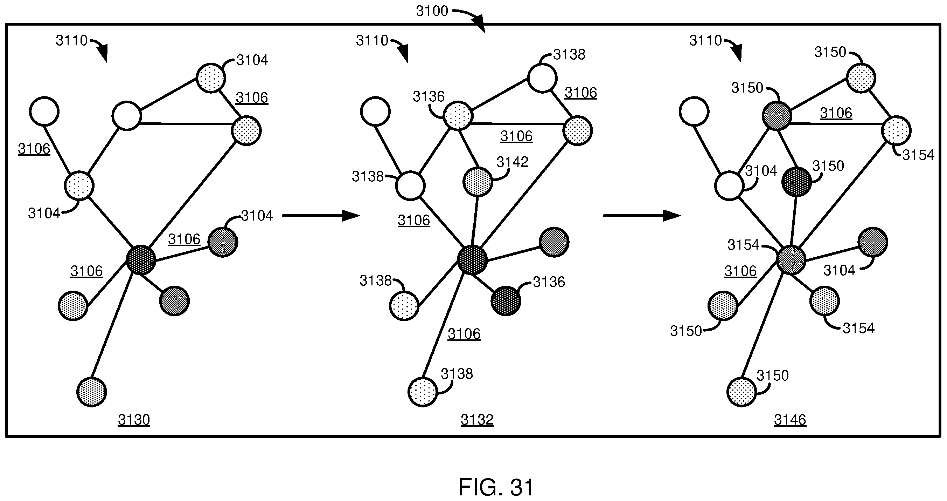

FIG. 31 provides a user interface 3100 that illustrates changes in the use of properties over multiple intervals, as well as capturing information about properties that may have been added or removed from an ontology/a set of properties being tracked.

The user interface 3100 illustrates various states of a graph 3110 over three intervals. The graph 3100 is constructed analogously to the graph 3010 of FIG. 30, having nodes 3104 and edges 3106. Like the graph 3020, the graph 3110 uses shading to show information about usage/counts of the property over a given interval.

From a version of the graph 3110 at an interval 3130 to a version of the graph at an interval 3132, it can be seen that nodes 3136 represent properties whose use has increased, while nodes 3138 represent properties with decreased use. The graph 3110 at the interval 3132 also reflects the addition of a new property, represented by node 3142.

The graph 3110 at a later interval 3146 further illustrates nodes 3150 whose use has increased and nodes 3154 whose use has decreased.

**Example 14- Example Sources of Change Information**

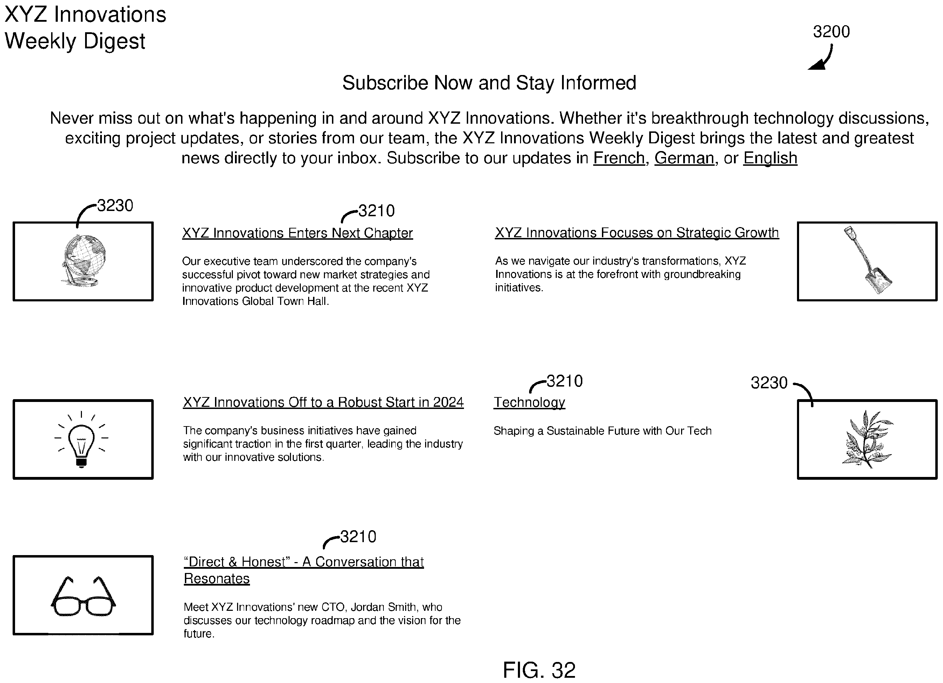

FIG. 32 illustrates an example electronic newsletter 3200 that may have information relevant to at least some users. The newsletter 3200 includes text. The text can be processed, such as using named entity recognition techniques and entity linking, to associate entities in the text with a knowledge graph or ontology.

The text includes links 3210. In some cases, disclosed techniques can follow the links 3210 to other data sources, which can be processed to determine whether they may provide additional instances of knowledge graph elements, or additional information about a newly identified instance (such as an instance in the electronic newsletter 3200).

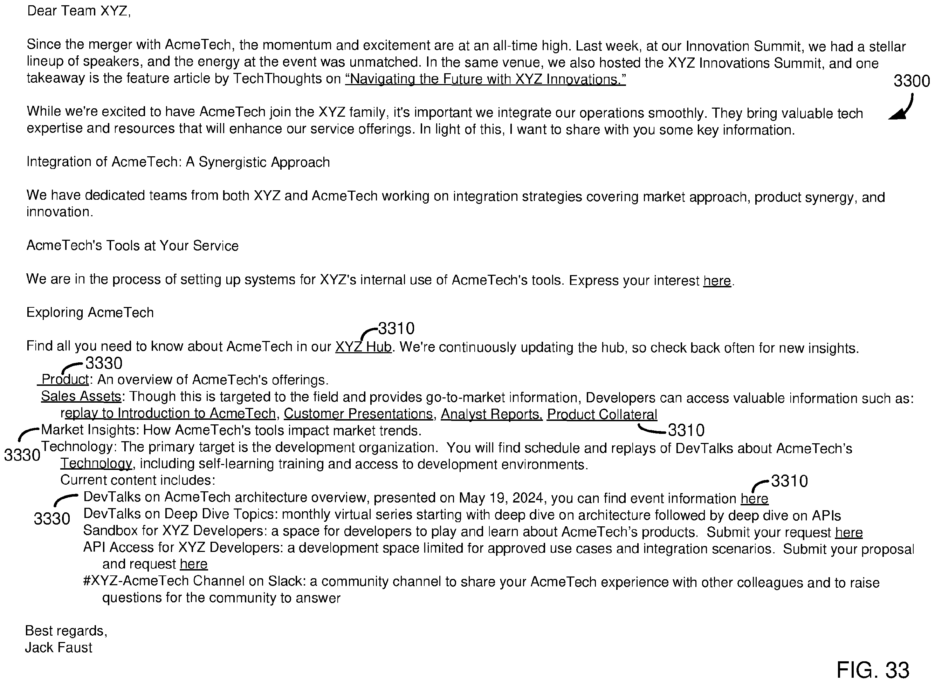

FIG. 33 illustrates another type of electronic document, an email 3300, that can include information relevant to at least some users. Like the newsletter 3200, the email 3300 includes text that can be processed and linked to elements of a knowledge graph or ontology. The text of the email 3300 includes links 3310, which can be followed to other documents that may contain relevant information.

As discussed in Example 1, informational documents such as newsletters tend to include information that may be relevant to a variety of stakeholders. Relevant information may only be a particular passage of a much longer text, or may be obtained through a link in the documents, such as the links 3210, 3310. In some cases, information relevant to a particular topic may be included in a same area of a document, such as subtopics 3230, 3330 of FIGS. 32 and 33. In the case of links 3210, 3310, this further demonstrates how difficult it can be for users to manually locate relevant information.

In a similar manner as to how different information can be relevant to different users, the requirements for timeliness of a user being presented with updated information can differ between different users. That is, some users may not need to know information at all, some users may want to view the information, but with no particular urgency, and other users may have an urgent need to the information. As will be described, disclosed techniques can consider not only whether information is relevant to a particular user, but a priority/degree of relevance when information is relevant to a user.

The scope of information relevant to a user can also differ. For example, some users may be satisfied with general information on a particular topic, but other users may want detailed information. In terms of a knowledge graph, this can be expressed as whether one or more specifically identified nodes of the graph are relevant or whether nodes related to such nodes should also be considered relevant. When related nodes are relevant, a degree of indirection can be used to limit the scope of what nodes are considered relevant. As will be described, when defining what type of information is relevant to a user, the user can weight particular topics as of more or less interest, which can be used in determining other information that might be of interest to a user, even if they did not expressly identify such information.

**Example 15- Example Data Model for Intent Definition**

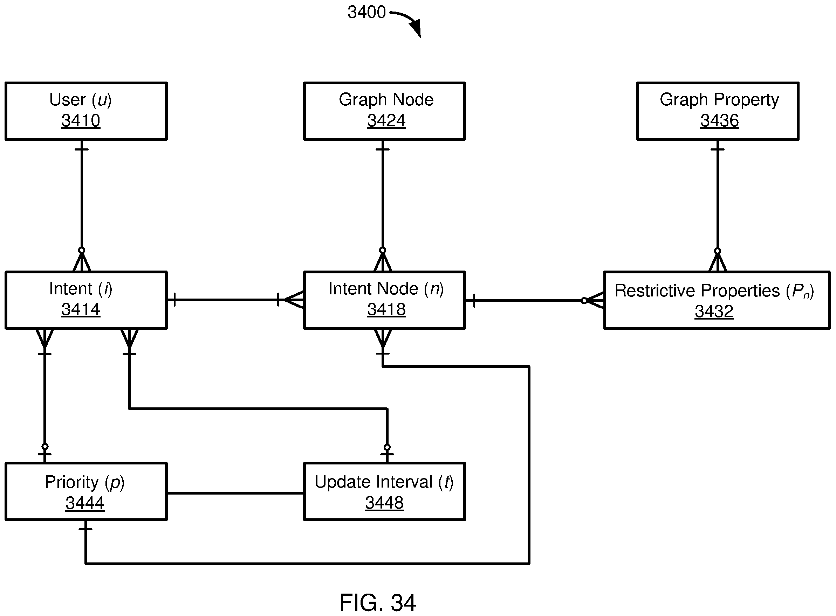

FIG. 34 illustrates an example data model 3400 that can be used in disclosed techniques. The data model 3400 includes a user element 3410. The user element 3410 can represent a particular user or class of users. A given user or user class associated with a user element 3410 can be associated with zero or more intent elements 3414.

An intent element 3414 defines a particular topic/set of one or more knowledge graph or ontological elements the user is interested in, and for which they would like to receive updates regarding knowledge graph changes. An intent element 3414 is associated with one or more intent nodes 3418. An intent node 3418 corresponds to a graph node 3424, a node of a knowledge graph or an ontology. When the graph node 3424 corresponds to a node of an ontology, the node is also linked to a corresponding node of a knowledge graph, so that when a value of the property in the knowledge graph is added, removed, or changed, it can be correlated with an intent element 3414.

An intent node 3418 differs from a graph node 3424, in that an intent node can be subject to restrictions or parameters for a specific intent associated with an intent element 3414. For example, an intent node 3418 can be associated with zero or more restrictive properties 3432. A restrictive property 3432 can be defined as a value restriction on a graph property 3436. The graph properties 3436 are typically restricted to those properties defined for a particular class associated with a graph node 3424 (where the graph node 3424 can correspond to an instance of the class).

A user can express an intent in terms of specific graph nodes 3424, either directly or by associating input provided by a user with corresponding knowledge graph nodes. However, in some cases, it may be desirable to broaden the intent to include other graph nodes 3424 that might be of interest to a user. For example, a user may not realize that such graph nodes 3424 exist, and so may not realize that they would be relevant to an intent being defined.

A user may choose to associate a priority element 3444 directly with intent nodes 3418, or can assign a priority to an intent element 3414, where the priority is then applied to all intent nodes defined for the priority. Providing a user the ability to weight specific intent nodes 3418 can provide a more refined expression of an inferred intent. In some cases, including if a user does not specifically define a priority element 3444 for one or more intent nodes 3418, a default priority can be assigned, including a default priority that is specified with respect to an intent element 3414, and is applied to all intent nodes defined for the intent element. In other cases, even if a user does not manually assign a priority element 3444, different priorities can be assigned to specific intent nodes 3418. For example, a system can track the use of intent nodes 3418 with respect to intent elements 3414, and intent nodes that are more commonly used or have higher priorities associated with them can be assigned a higher priority in an automated process.

An update interval 3448 is also defined for an intent element 3414. In some cases, if an update interval 3448 is not specified, a default update interval can be used. The update interval 3448 can define how often a knowledge graph should be checked for updates relevant to an intent element 3414, or at least how frequently such updates should be collected and communicated to a user.

Although not shown in FIG. 34, the data model can include additional components, such as a component that associates an intent element 3414 with one or more communication types that should be used to communicate update information to a user.

While the data model 3400 can be implemented in any suitable manner, in a specific implementation the components of the data model can be implemented as one or more objects, such as tables or views, in a relational database. For example, a table can be defined that has columns corresponding to the elements of the data model 3400. However, data for the data model 3400 can be maintained in other formats, including in key value stores, such as in JSON (JavaScript Object Notation) or CSN (Core Schema Notation).

In further examples, one or more of the elements of the data model 3400 can be defined as abstract data types, or member variables of an abstract data type. An intent element, 3414, for example, can be an abstract data type that can have a user 3410, a priority 3444, or an update interval 3448 as member variables. Intent nodes 3418 can also be defined as an abstract data type, where an abstract data type for an intent 3414 can include instances of the intent node data type as data members. The intent node data type can have member variables of graph nodes 3424 and restrictive properties 3432, where optionally the restrictive properties can also be implemented as an abstract data type.

**Example 16- Example Intent Registration and Update Process**

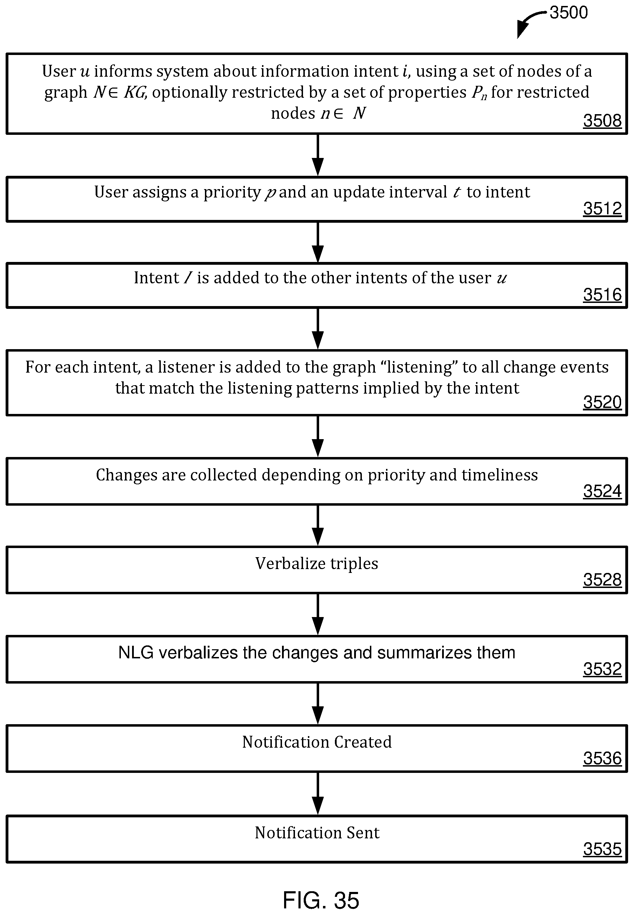

FIG. 35 is a flowchart of a process 3500 of registering particular knowledge graph areas of interest for a user, referred to as an intent, monitoring a system for new information regarding that intent, and then alerting a user to such new information. Information used in the process 3500 can be stored in the data objects of the data model 3400 of FIG. 34.

At 3508, a user registers a definition of their intent, such as through a user interface. The intent can be specified as, or correlated with, nodes of a knowledge graph. In some implementations, a user can be presented with a list of available topics (corresponding to knowledge graph nodes) or a depiction of the knowledge graph, and the user can select topics/nodes therefrom. In another implementation, a user can be presented with a document having content linked to knowledge graph nodes, and the user can select such content, where the corresponding knowledge graph nodes are added to the definition of the user's intent.

Also at 3508, in some implementations, a user can provide input to restrict the intent for one or more selected knowledge graph nodes in the definition of the intent. A node selected by a user can represent a class, which has properties for which restrictions can be specified. Values of the properties set in the restriction can be used to restrict relevant results (instances). The restrictions can be affirmative restrictions (a property has a given value) or negative restrictions (a property does not have a certain value).

A user can assign a priority and update interval to the intent at 3512. One or both of setting a priority of update interval can be optional. For example, priorities or update intervals may not be user configurable, or default priorities or update intervals can be used if a user does not override them with input at 3512. As described in Example 15, priorities can be used to determine an inferred intent, as will be further described. In addition, rather than having a priority be assigned to an overall intent, priorities can be assigned to specific nodes in the intent, where different nodes can be assigned different priorities (and some nodes may not have an assigned priority).

The defined intent is registered for the user at 3516. A given user can register multiple intents, including intents with overlapping knowledge graph nodes. Even identical sets of nodes can be used in different intents, such as where in one intent a set of nodes is subject to restrictions and in another intent the set of nodes has different restrictions or has no restrictions. Different priorities or intervals can be defined for the different intents.

For a registered intent, a listener is registered at 3520. A listener refers to computer code that implements function to monitor the knowledge graph or other source of information about the knowledge graph, as the term "listener" is generally used in the field of computer science. When an event is detected that triggers a listener, the events can be associated with the relevant intent or intents. An example listener, and a message that triggers the listener, are defined in the following code:

```
import kg_library # Assume this is a knowledge graph library

def node_change_listener(node_id, old_data, new_data):
  print(f"Node {node_id} has been updated!")
  print(f"Old data: {old_data}")
  print(f"New data: {new_data}")

def start_kg_listener():
  kg = kg_library.connect_to_kg() # Connect to the knowledge graph
  kg subscribe to node changes(node change listener) # Subscribe to node change
events

  # Example message that might trigger the listener
  # This could be triggered by an update operation performed on a KG node
  example_message = {
    "node_id": "12345",
    "old_data": {"name": "Old Name", "age": 30},
    "new_data": {"name": "New Name", "age": 35}
  }

  # Simulate triggering the listener with the example message
  node_change_listener(example_message["node_id"], example_message["old_data"],
example_message["new_data"])
```

In a particular implementation, changes that trigger a listener are those that involve adding or removing a property value for an instance of a class of a knowledge graph, or a change in the value of a property. Adding a value to a property can include adding a value for the instance that was not previously extracted from documents describing the instance, or the added value can correspond to a property that was recently added to a class. Similarly, removed property values can correspond to values that were removed because a property was determined to be obsolete.

Detected changes are collected at 3524. Collecting changes can occur at an interval specific in an intent. Alternatively, changes can be collected at other times, typically at a more frequent interval, and are processed for a particular intent according to the intent interval. When changes are collected, they can also be associated with a particular priority specified for an intent.

In a specific implementation, changes are captures as a set of triples, such as triples described in Example 2. The triples can then be verbalized at 3528, as also described in Example 2. The triples are submitted to a natural language generator and a summary received by the natural language generator at 3532. A notification, such as a text alert, email, or application message, is generated at 3536, and sent to the relevant user at 3535.

The notifications can be created and sent depending on a priority associated with the intent. For example, the selected priority can determine a communication channel used for sending the notification. Text messages may be used for urgent priorities, while email may be used for lower priorities.

**Example 17- Example Computing Environment for Intent Registration and Processing**

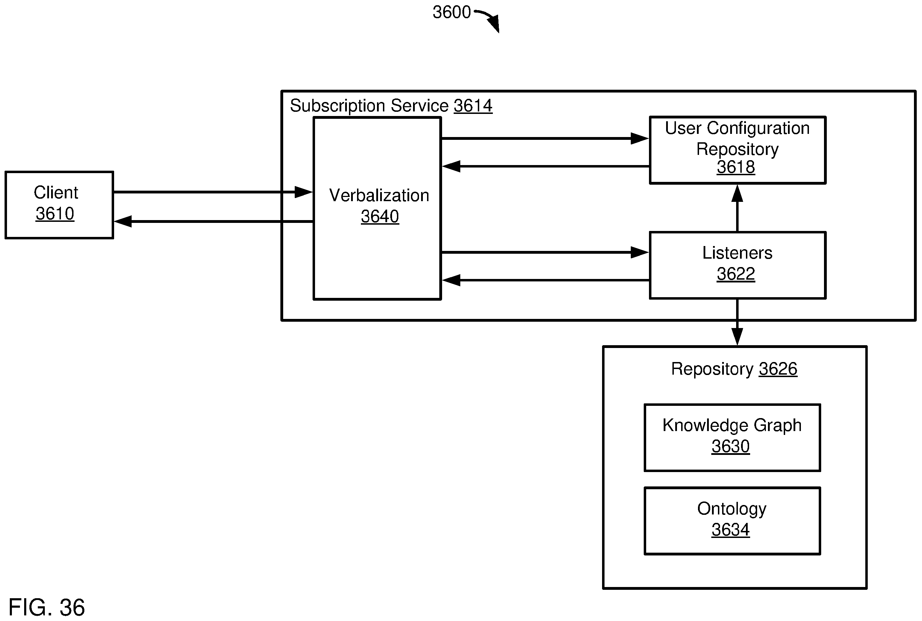

FIG. 36 is a diagram of a computing environment 3600 being used to implement the process 3500 of FIG. 35. The computing environment 3600 includes a client 3610 that communicates with a subscription service 3614. The client 3610 can define one or more intents, which are stored in a user configuration repository 3618. The subscription service 3614 processes the intents, including instantiating appropriate listeners 3622. The listeners 3622 monitor a knowledge graph 3630, stored in a knowledge graph repository 3626.

The knowledge graph 3630 can be associated with an ontology 3634. As described earlier, the ontology 3634 can be used to identify new properties, which then can be added to the knowledge graph 3630. Information for these properties in the knowledge graph 3630 can be associated with a knowledge graph node in a user's intent, and can thus cause a notification of a change to be sent to a user. For example, if a user has identified a class instance node as of interest, a message can be generated if a property value for the new property is added to the class instance.

The subscription service 3614 can include a verbalization component 3640. The verbalization component 3640 can perform actions both in processing user requests, such as requests to define an intent, as well as in processing messages to users regarding such intents. In the case of intent definition, the verbalization component 3640 can convert user-provided information into a standardized format for expressing intent, such as the data model 3400 of FIG. 34. In sending information about changes relevant to an intent to a user, the verbalization component 3640 can convert "raw" change information into a format that is more easily understood by a user, including providing contextual information that can remind a user of a context that caused the intent to be registered (which can include, for example, identifying the relevant knowledge graph or identifying knowledge graph elements selected by the user for the intent).

The following scenario illustrates how the computing environment 3600 can be used in disclosed techniques. A user, through the client 3610, can express an intent. As an example, a user, Sandra, can express an intent as "Please inform me once a week via email regarding changes about LLM use at SAP." This "free text" input can be processed, such as using named entity recognition and entity linking (which can be part of the verbalization component 3640), to map the intent to knowledge graph nodes. The knowledge graph nodes and the interval, as well as the preferred communication channel, can be registered in the user configuration repository 3618.

In a specific embodiment, the user intent can be specified as one or more triples (such as described in Example 2). Given the example intent, the intent can be expressed as:

Change update on [SAP; uses; LLM]
Setting: once a week
Setting: via email

The listeners 3622 can check for relevant updates according to the interval. The changes can be expressed as a triple. An example set of changes for the example update can be:

Change Update on [SAP, uses; LLM]: {(insert node: ODM; uses; LLM);
(change sub node: [P1; uses; LLM;]
→[P1; ConceptVersion; ACD_P1v2,0])}

The above changes can be submitted to a natural language generator (which can be part of the verbalization component 3640), which composes an email message to be sent the user. An example email message is:

Dear Sandra,
Heere is the information you requested regarding LLM use in SAP for KW 34:

- ODM started using LLMs (25.08.022); click here for more information
- P1 created new Concept (27.08.2022), click here for more information

Regards,
You KG Subscription Service

**Example 18- Example Detailed Computing Environment for Intent Registration and Processing**

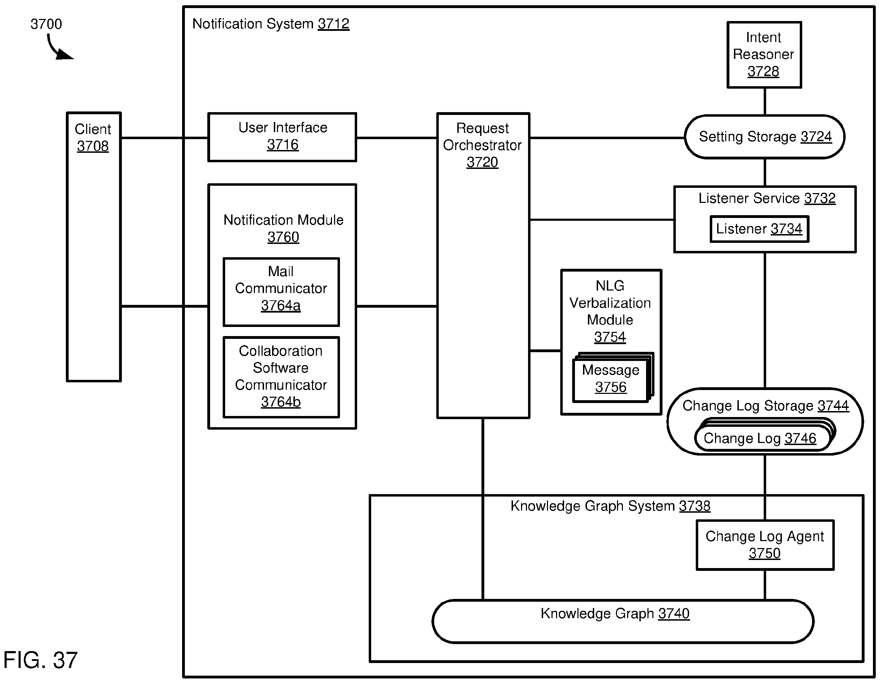

FIG. 37 illustrates a more detailed computing environment 3700 in which disclosed techniques can be implemented. The computing environment 3700 includes a client 3708 that is in communication with a notification system 3712.

The notification system 3712 provides one or more user interfaces 3716 that a user can access to define, modify, or delete intents, including as previously described. The intents can be processed by a request orchestrator 3720. The requested orchestrator 3720 can store intent information in settings storage 3724.

An intent reasoner 3728 can perform a variety of actions with respect to an intent. For example, as descried in Example 17 for the verbalization component 3640, the intent reasoner 3728 can parse an intent and express it in a standardized format, such a triple format. A more standardized version of the intent can then be stored in the settings storage 3724.

An expressed intent, at least in some scenarios, can be supplemented. That is, for example, knowledge graph nodes having a relationship with expressly identified knowledge graph nodes can be added to an intent. In some cases, whether additional nodes are added, or the extent to which they are added, can be correlated with user input. For example, a priority provided by a user, or another expression of how interested a user is in a particular topic, can be used for this purpose. This "expanded" intent definition can be stored in the settings storage 3724.

A listener service 3732 can instantiate listeners 3734 based on the intents stored in the settings storage 3724. A listener 3734 created by the listener service 3732 can monitor a knowledge graph 3740 in a knowledge graph system 3738 in various ways. In a scenario illustrated in FIG. 37, a listener 3734 can monitor change logs 3746 stored in a change log storage 3744.

A change log agent 3750 can write change logs to the change log storage 3744. For example, when a knowledge graph is updated to add, remove, or change a value associated with a class instance, a log entry can be written to the change log storage 3744. In some scenarios, the intent reasoner 3728 can also access the change log storage 3744. When an expressed intent is modified to include at least some additional nodes, the addition or deletion of nodes in the knowledge graph 3740 can cause changes to the expanded intent.

When a listener 3734 detects a change, such as from the change log storage 3744, the listener can notify the request orchestrator 3720 of any changes. The request orchestrator 3720 can then submit the changes to a natural language generator verbalization module 3754. The request orchestrator 3720 can specify parameters for change verbalization using the natural language generator verbalization module 3754, such as selecting a particular template instruction for a particular communication type to be sent.

A message 3756 generated by the natural language generator verbalization module 3754 is provided to a notification module 3760 by the request orchestrator 3720. The notification module 3760 can have communicators 3764 (shown as 3764a and 3764b) for various communication types, such as an email communicator 3764a or a collaboration software communicator 3764b. The communicators 3764 are configured to package and send messages 3756. The email communicator 3764a, for example, can paste contents of a message 3756 into an email template, add a subject line and recipient, and contact an email server to send the message. The communicators 3764 can access the setting storage 3724 to retrieve contact information for a particular user to whom a message is to be sent, in some cases. In other scenarios, the request orchestrator 3720 retrieves contact information from the setting storage 3724 and can provide the information to the notification module 3760 along with the message 3756.

**Example 19- Example Determination of Inferred Intent**

As described, in some cases, instead of strictly limiting an intent to particular topics, as reflected by knowledge graph nodes, specifically identified by a user, an intent can be constructed based on those topics and extended to identify other related topics that might also be of interest to the user. For example, consider a scenario where a user expresses interest in nodes belonging to the "movie" class. Under a narrow interpretation, the user might receive alerts only when property values for a given movie instance are changed, added, or removed. However, the instance of the "movie" class may have connections to instances of an "actor" class. In certain situations, a user could receive alerts for changes to properties of the movie, but also be presented with changes made to actors associated with the movie.

Optionally, in expressing an intent, a user can weight various concepts (such as assigning a "priority" to an overall intent or to particular nodes of the intent), and therefore their corresponding knowledge graph nodes. The priorities can be used in determining what nodes to include in an inferred intent, and optionally how frequently updates will be provided. That is, for example, in some scenarios, updates can be provided at user-specified intervals for a specific intent expressed by the user. An inferred intent can also be generated, which includes more knowledge graph nodes than explicitly specified by the user. The inferred intent can be analyzed at the same frequency as expressed by the user, or at a different frequency. In general, the less of a direct relationship a knowledge graph node has with an explicitly specified knowledge graph node, the lower the frequency at which the knowledge graph is analyzed for those changes. If relationships between nodes are too attenuated, the nodes are not included in an inferred intent.

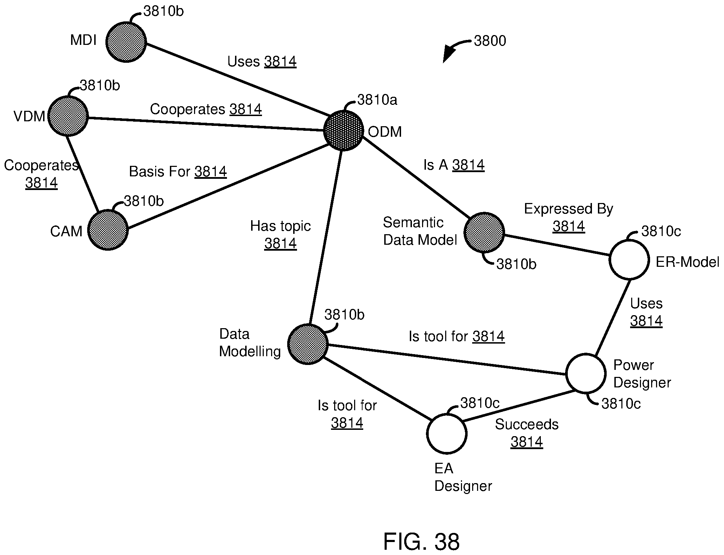

The concept of node priorities and update frequency is illustrated in the knowledge graph 3800 of FIG. 38. The knowledge graph 3800 includes a plurality of nodes 3810 (shown as nodes 3810a-3810c), connected by edges 3814. Assume that a user provides an intent, which directly specifies a node 3810a. Either because of an assigned priority, or an assumed priority given that the node 3810a was expressly identified in the intent, updates that relate to the node are provided on a frequent basis.

Nodes 3810b represent nodes either were not directly specified in an intent, or which were specified but with a lower priority than the node 3810a. Because the nodes 3810b are inferred or explicitly identified as lower priority, updates that relate to such nodes are also provided to a user, but less frequently than for the node 3810a. Nodes 3810c represent nodes that have a more attenuated relationship with the specified node 3810a, or which have been assigned a lower priority than the nodes 3810b. The nodes 3810c have a priority that is less than a threshold set for an "inferred intent," and so updates are not provided to the user.

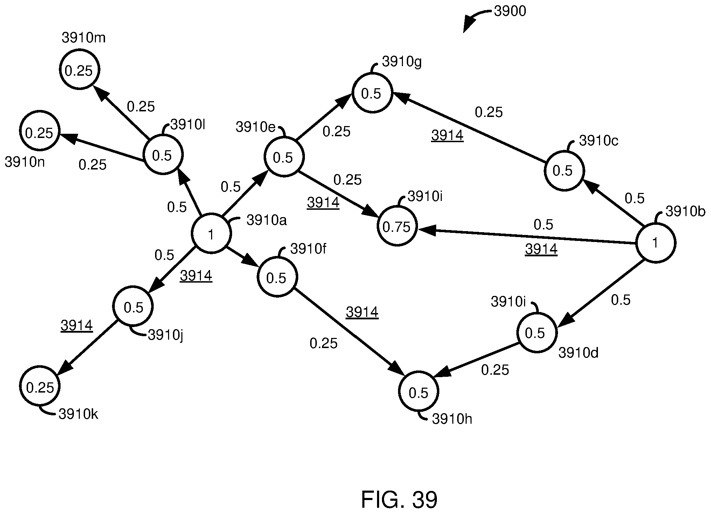

In some cases, the relevancy of nodes 3810 can be influenced by a number of connections to other nodes, not just a degree of indirection. This scenario is illustrated in the graph 3900 of FIG. 39. The graph 3900 includes a plurality of nodes 3910 (shown as nodes 3910a-3910n), which are connected by edges 3914.

In the scenario of the graph 3900, assume that nodes 3910a, 3910b were directly identified by a user as relevant in an expression of an intent. An inferred intent can be determined by assigning values to related nodes, where half of the value of a node is propagated to a related node. Given this, half the value of node 3910b, 0.5, is propagated to nodes 3910c, 3910d, which are directly connected to node 3910b. A similar situation occurs for node 3910a, where 0.5 is propagated to directly connected nodes 3910e, 3910f.

Now consider node 3910g, which is connected to nodes 3910c and 3910f. Half the value of nodes 3910c, 3910, 0.25 for each node, is assigned to node 3910g. Thus, node 3910g also has a value of 0.5. Values can be assigned to the nodes 3910h-3910n in a similar manner.

A technique for propagating node values can be implemented in a variety of ways. For the graph 3900, propagation is constrained to be unidirectional. For example, the value associated with node 3910e is propagated to node 3910g, but is not further propagated to node 3910c, since node 3910c propagates its value to node 3910g.

In some scenarios, a constraint can be applied that a node can have a maximum value, or value of "inferred node" cannot exceed a maximum. In one example, a constraint can be applied that an inferred node cannot have a value higher than a directly specified node (1, in the case of the graph 3900). This constraint is consistent with a presumption that the user has directly identified what they consider to be the most relevant nodes.

In a similar manner, it can be useful to normalize node values, such as to fall between 0 and 1. Other constraints can include not propagating values beyond a set limit of indirection. Further, the graph 3900 assumes that all edges 3914 are of equal weight. It can be that some nodes can be more strongly related than other nodes, and so propagation between nodes can take into consideration the edge weight as well as a rule that determines how much of a node's value is propagated to related nodes.

Once values for nodes in the graph 3900 have been determined, the values can be compared with a threshold, where the threshold determines whether an inferred intent is strong enough to include inferred nodes in an intent or to create a new, inferred intent, that includes the specified nodes from the express intent and the inferred intent. Assume that a threshold $t \geq 0.70$ is set. Using this criterion, node 3910i would be added to an inferred intent.

While a "distance factor" of 0.5 was used in the example with the knowledge graph 3900, other distance factors may be used. In some cases, rather than using the same distance factor for all nodes, the factor can vary. For example, the distance factor itself may decrease as a number of indirections increases. Different nodes in a knowledge graph can have different relationship strengths or confidence, and this information can also be used as, or with, a distance factor. For example, an overall weighting to be used for propagating values can be determined as the product of the relationship strength between two nodes and a defined distance factor.

**Example 20- Example Intent Definition User Interfaces**

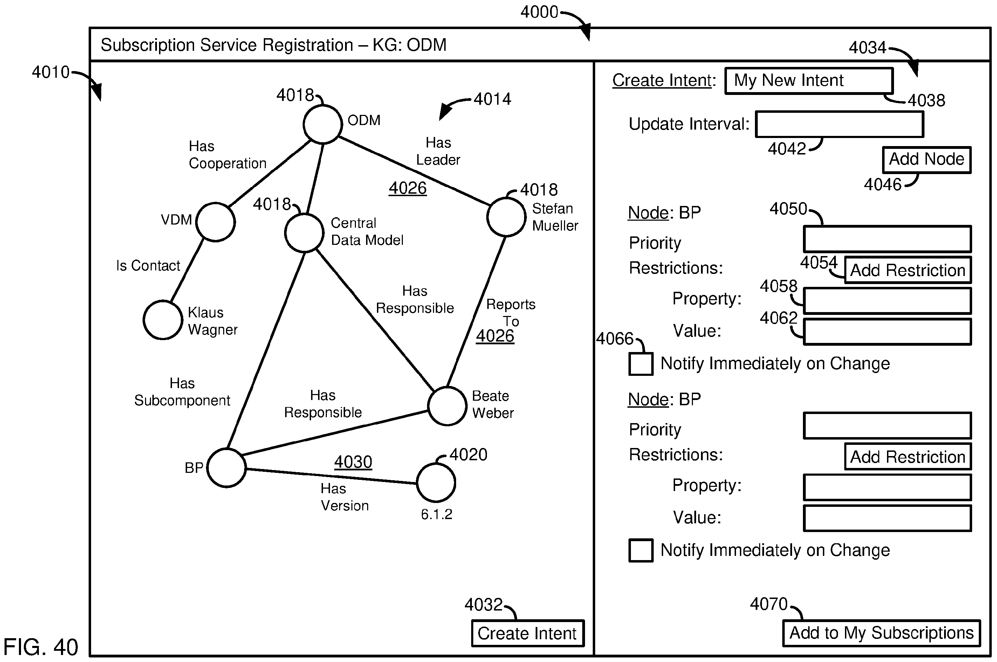

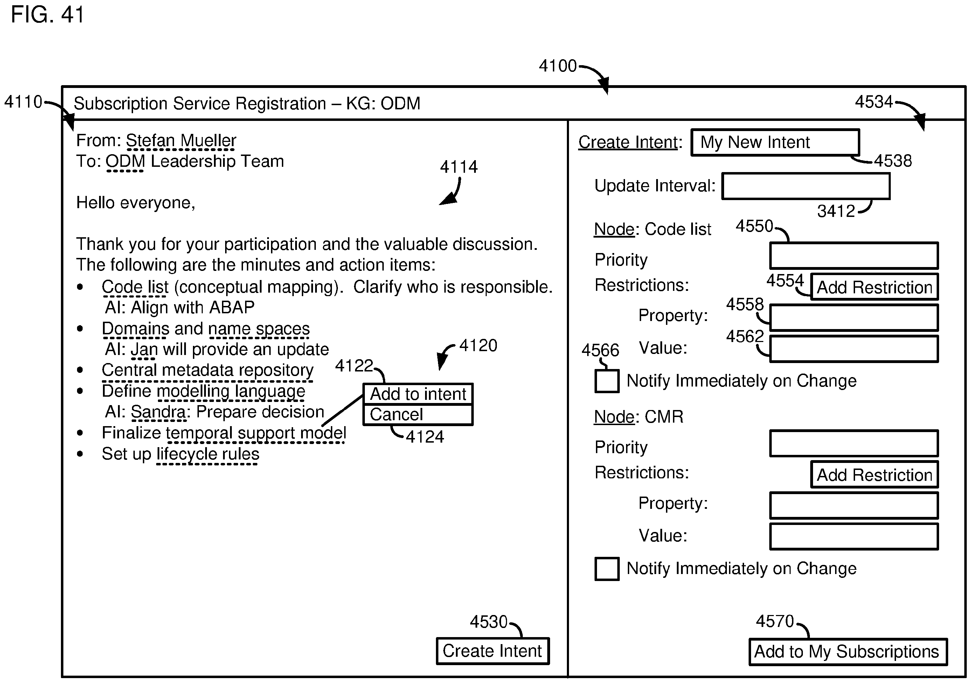

FIGS. 40 and 41 provide example user interface 4000, 4100 allowing a user to define an intent. In FIG. 40, the user interface 4000 includes a panel 4010 that displays a knowledge graph 4014, which can be an entire knowledge graph or a subset of a larger knowledge graph. The graph 4014 includes nodes 4018 corresponding to instances of classes or subclasses and nodes 4020 representing values (literals) of properties of the nodes 4018. Edges 4026 between nodes 4018 represent relationships between class instances (where one class instance can correspond to a property value for another instance), while edges 4030 represent properties with literal values, linking an instance represented by a node 4018 to a property value represented by a node 4020.

A user can define an intent by selecting a user interface element 4032. A user can provide an identifier for the intent in a user interface element 4038 of a panel 4034. An update frequency for the intent can be specified using a user interface element 4042.

A user can then add nodes 4018 to the intent by selecting user interface element 4046. For example, the user interface element 4046 can be selected, and then a user can select a node 4018. For a given node, a user can optionally specify a priority using user interface element 4050. The user can also select a user interface element 4054 to add one or more restrictions for the node. A restriction can be specified as a property, such as an edge 4030, which is displayed in user interface element 4058, and one or more values, which are displayed in user interface element 4062. In other scenarios, a user can specify a particular combination of property and value by selecting a node 4020. The techniques of the present disclosure can provide update information to a user regardless of whether a property value is a literal or a class instance.

For some nodes 4018, a user may wish to receive updates more frequently than for the overall intent being defined. The user interface 4000 provides a user interface element 4066 that a user can select to be immediately notified of any changes that affect a node 4018 (complying with any value restrictions that may have been defined).

Once the user is finished defining their intent, they can register/active the intent by selecting user interface element 4070.

User interface 4100 is generally similar to the user interface 4000 of FIG. 40. However, in a panel 4110, rather than displaying a knowledge graph, content 4114 is displayed. The content 4114 can be a document that contains information relevant to one or more instances of one or more classes of a knowledge graph. In some cases, a user may select particular text of the content to be added to an intent, such as by "right clicking" after relevant text is selected. When text is selected, a computing system can confirm whether the text corresponds to an element of a knowledge graph. In other scenarios, and as shown, a document can be preprocessed and text corresponding to knowledge graph elements, and selectable for an intent, can be visually distinguished. For the content 4114, selectable text is shown with dashed underlining. Described text can be selected, and a dialog window 4120 presented, which includes an option 4122 to add the knowledge graph element to an intent, or an option 4124 to cancel the selection.

Otherwise, the intent can be defined as described with respect to the user interface 4000, where the user interface 4100 includes similarly labelled controls as in the user interface 4000.

## Example 21- Example Log of Knowledge Graph Changes

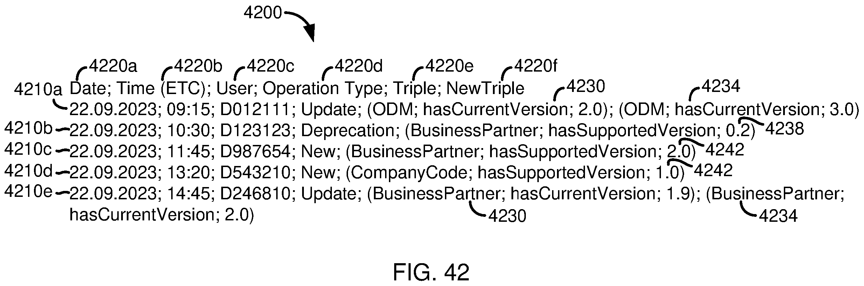

As described with respect to FIG. 37, in some implementations, changes can be determined by examining log entries. FIG. 42 provides an example log 4200 with log entries 4210 (shown as 4210a-4210e). Each log entry 4210 is associated with a date 4220a and a time 4220b the log entry 4210 was written. A log entry 4210 also includes a user identifier 4220c of a user associated with logged activity and an identifier of an operation 4220d that was performed.

The example log 4200 includes entries 4210a and 4210e that correspond to updates to a knowledge graph. More specifically, the updates correspond to updating a value associated with a particular property of a particular instance of a class. The update entries 4210a and 4210e include triples 4230 expressing the prior state of the knowledge graph, and triples 4234 expressing the updated state of the knowledge graph.

Log entry 4210b corresponds to a deprecation or deletion of information from a knowledge graph. A triple 4238 reflects the information being deprecated in the knowledge graph.

Log entries 4210c and 4210d reflect the addition of information to a knowledge graph. The log entries 4210c, 4210d include triples 4242 that contain the information being added. In this case, the triples 4242 reflect the addition of values to particular properties of an instance of a particular class in the knowledge graph.

A log, such as the example log 4200 can be scanned to determine changes that are relevant to particular intents expressed by one or more users. For example, a listener 3734 of FIG. 37 can periodically scan the logs, such as according to an interval defined for the intent. In other cases, the listener 3734 can register information about nodes that are relevant to an intent, and a component, such as the change log agent 3750, can notify the listener 3734 of relevant activity. This configuration may be particularly beneficial when a user requests immediate updates for a particular intent, or one or more nodes of a particular intent.

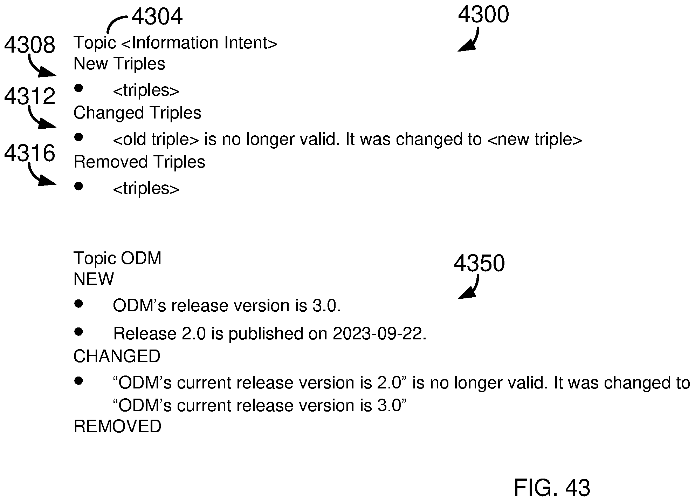

The listener 3734, or another component, such as the request orchestrator 3720, can extract the log information into a specified format, such as the example format 4300 shown in FIG. 43. The format 4300 includes a field 4304 where a topic, corresponding to an intent, or information associated with an intent, is listed. The format 4300 further includes fields 4308, 4316 for, respectively, added or removed triples. A field 4312 for modified triples includes both the old triple and the new triple.

FIG. 43 also provides an example update message 4350 in the format 4300.

## Example 22- Example Generation of NLG Prompt and NLG Response

While the message format 4300 of FIG. 43 conveys information regarding knowledge graph changes, it is in a format that is somewhat difficult to read. Accordingly, the present disclosure provides techniques to convey the information in a more user-friendly manner, which can include having the information tailored for a particular communication type, such as email, which will be used to provide the message.

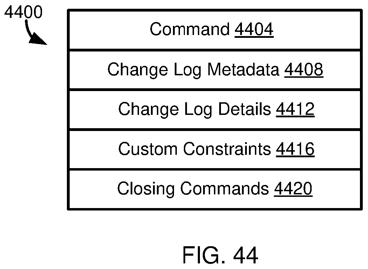

In general, the technique involves providing the information in the message format 4200 to a natural language generator, where the natural language generator is provided with the information in the message format and a standard set of instructions for producing a response. FIG. 44 includes example components of prompt template 4400 that can be populated and provided to a natural language generator.

The input includes a command 4404 that is typically a static command. That is, the command is used regardless of the intent being processed, and provides general instructions to the natural language generator. The input also includes change log metadata 4408 and change log details 4412. These components are specific to a particular update (information summarizing detected changes for an intent). Optionally, additional, custom constraints 4416 can be included in the prompt template 4400. A static closing instruction 4420, used for all instructions to the natural language generator, can also be included.

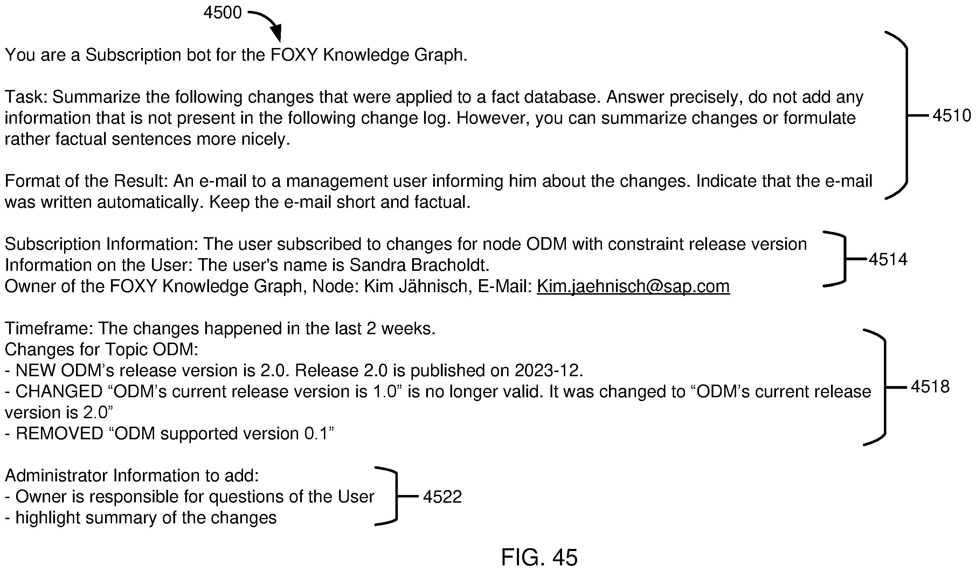

An example prompt 4500 generated using the prompt template 4400 is shown in FIG. 45. Text 4510 corresponds to the command 4404. In this case, the command 4404 provides general context information, such as explaining the change log data that follows, a task to be performed (generating a "nicer" summary of the log details), and specifying an output format.

Text 4514 corresponds to the change log metadata 4408 of the prompt template 4400. The text 4514 provides information regarding the intent, the user for whom the intent is defined, and information about the knowledge graph, such as individual responsible for maintaining the knowledge graph.

Text 4518 corresponds to the change log details 4412. The text 4518 is in the format 4400 of FIG. 44.

Text 4522 corresponds to the custom constraints 4416 of the prompt template 4400. In this case, the text 4522 specifies who should be contacted for questions regarding the message, and to also generate a summary of the changes. The example prompt 4500 is not shown as including a closing instruction 4420.

While the implementation of the prompt template 4500 can be standardized in the sense of being used for multiple updates, and even multiple intents, multiple implementations of the prompt template 4500 can be used. For example, different knowledge graphs, or different uses of the same knowledge graph, may include different instructions as to how information should be presented or generated. As a very simple example, the content of the example prompt 4500 could be modified to generate a response suitable for being sent by text message or through in-application messaging. In some cases, a knowledge graph can be assigned to one or more specific implementations of the prompt template 4400, and a suitable template selected based on criteria such as a user or user role, knowledge graph elements selected, an interval selected, or priorities selected for particular knowledge graph nodes. In further examples, a user may be able to select a particular implementation of the prompt template 4400 to be used with a particular intent.

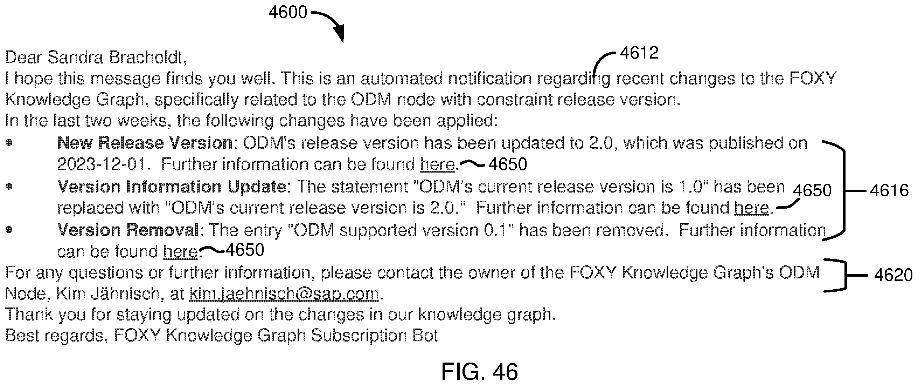

FIG. 46 illustrates an example response 4600 to the example prompt 4500 of FIG. 45. It can be seen that the example response 4600 is formatted as an email, and is addressed to the user specified in the text 4514. Text 4612 provides a summary of the changes, as specified in the custom constraints of the text 4522. Text 4616 provides the content of the text 4518, the change log details, in a more easily readable format. Consistent with the text 4514, the change log metadata, and the text 4522, the custom constraints, text 4620 explains who should be contacted if the user/recipient has questions regarding the changes.

In some implementations, a communication, such as the example response 4600, can be annotated to further assist a user in understanding changes or the cause of changes. For example, text of the communication can be processed using techniques such as named entity recognition and entity linking to identify knowledge graph elements, such as class instances, in the text. These knowledge graph elements can then be highlighted or annotated, or can be associated with links to additional information.

For example, the example response 4600 includes links 4650. These links can be selected and, in some examples, can take the user to additional information describing a change. In some cases, one or more documents may be associated with a change, and the links 4650 can be selected to cause such documents to be displayed. In other cases, the links 4650 can be used to provide metadata about a change, such as a time/date the change was made or an identifier of a user who made the change.

**Example 23- Example Operations**

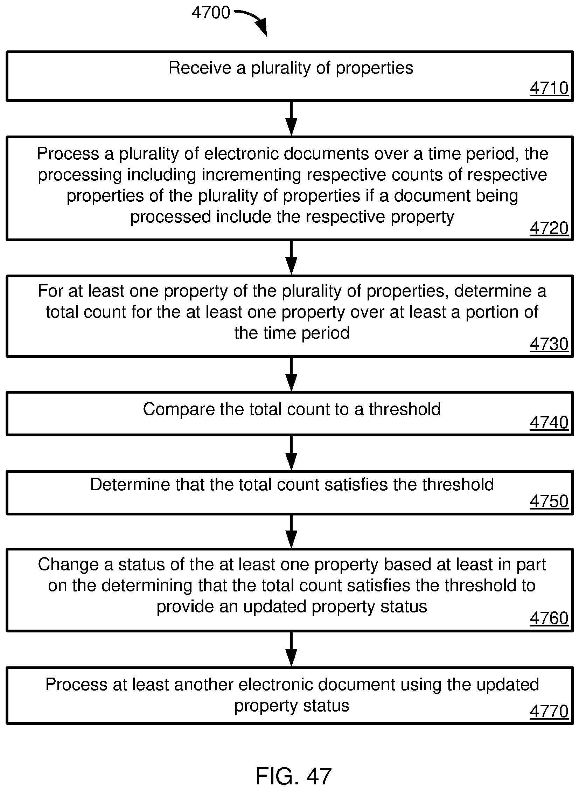

FIG. 47 is a flowchart of a process 4700 for changing a property status of property of a knowledge graph based on counts of the property in electronic documents provided over time period, and processing electronic documents using the updated property status.

A plurality of properties are received at 4710. At 4720, a plurality of electronic documents are processed over a time period. The processing includes incrementing respective counts of respective properties of the plurality of properties if a document being processed include the respective property. For at least one property of the plurality of properties, at 4730, a total count for the at least one property over at least a portion of the time period is determined. The total count is compared to a threshold at 4740. At 4750, it is determined that the total count satisfied the threshold. A status of the at least one property is changed at 4760 based at least in part on the determining that the total count satisfies the threshold to provide an updated property status. At 4770, at least another electronic document is processed using the updated property status.

**Example 24 - Computing Systems**

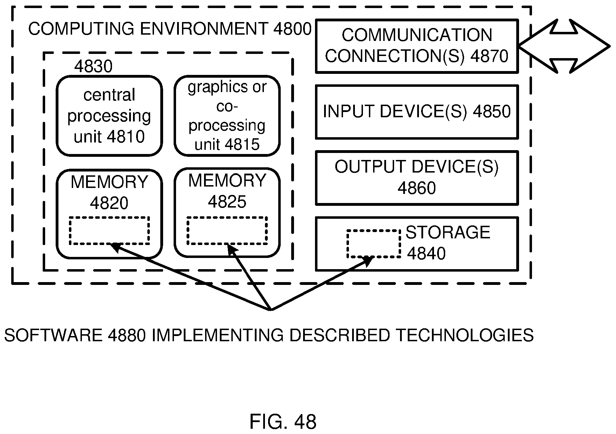

FIG. 48 depicts a generalized example of a suitable computing system 4800 in which the described innovations may be implemented. The computing system 4800 is not intended to suggest any limitation as to scope of use or functionality of the present disclosure, as the innovations may be implemented in diverse general-purpose or special-purpose computing systems.

With reference to FIG. 48, the computing system 4800 includes one or more processing units 4810, 4815 and memory 4820, 4825. In FIG. 48, this basic configuration 4850 is included within a dashed line. The processing units 4810, 4815 execute computer-executable instructions, such as for implementing technologies described in Examples 1-14. A processing unit can be a general-purpose central processing unit (CPU), processor in an application-specific integrated circuit (ASIC), or any other type of processor. In a multiprocessing system, multiple processing units execute computer-executable instructions to increase processing power. For example, FIG. 48 shows a central processing unit 4810 as well as a graphics processing unit or co-processing unit 4815. The tangible memory 4820, 4825 may be volatile memory (e.g., registers, cache, RAM), non-volatile memory (e.g., ROM, EEPROM, flash memory, etc.), or some combination of the two, accessible by the processing unit(s) 4810, 4815. The memory 4820, 4825 stores software 4880 implementing one or more innovations described herein, in the form of computer-executable instructions suitable for execution by the processing unit(s) 4810, 4815.

A computing system 4800 may have additional features. For example, the computing system 4800 includes storage 4840, one or more input devices 4850, one or more output devices 4860, and one or more communication connections 4870. An interconnection mechanism (not shown) such as a bus, controller, or network interconnects the components of the computing system 4800. Typically, operating system software (not shown) provides an operating environment for other software executing in the computing system 4800, and coordinates activities of the components of the computing system 4800.

The tangible storage 4840 may be removable or non-removable, and includes magnetic disks, magnetic tapes or cassettes, CD-ROMs, DVDs, or any other medium which can be used to store information in a non-transitory way, and which can be accessed within the computing system 4800. The storage 4840 stores instructions for the software 4880 implementing one or more innovations described herein.

The input device(s) 4850 may be a touch input device such as a keyboard, mouse, pen, or trackball, a voice input device, a scanning device, or another device that provides input to the computing system 4800. The output device(s) 4860 may be a display, printer, speaker, CD-writer, or another device that provides output from the computing system 4800.

The communication connection(s) 4870 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

In various examples described herein, a module (e.g., component or engine) can be "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general-purpose program, such as one or more lines of code in a larger or general-purpose program.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

**Example 25 - Cloud Computing Environment**

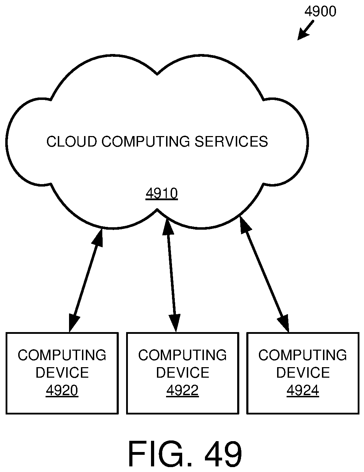

FIG. 49 depicts an example cloud computing environment 4900 in which the described technologies can be implemented. The cloud computing environment 4900 comprises cloud computing services 4910. The cloud computing services 4910 can comprise various types of cloud computing resources, such as computer servers, data storage repositories, networking resources, etc. The cloud computing services 4910 can be centrally located (e.g., provided by a data center of a business or organization) or distributed (e.g., provided by various computing resources located at different locations, such as different data centers and/or located in different cities or countries).

The cloud computing services 4910 are utilized by various types of computing devices (e.g., client computing devices), such as computing devices 4920, 4922, and 4924. For example, the computing devices (e.g., 4920, 4922, and 4924) can be computers (e.g., desktop or laptop computers), mobile devices (e.g., tablet computers or smart phones), or other types of computing devices. For example, the computing devices (e.g., 4920, 4922, and 4924) can utilize the cloud computing services 4910 to perform computing operators (e.g., data processing, data storage, and the like).

**Example 26 - Implementations**

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media, such as tangible, non-transitory computer-readable storage media, and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example, and with reference to FIG. 48, computer-readable storage media include memory 4820 and 4825, and storage 4840. The term computer-readable storage media does not include signals and carrier waves. In addition, the term computer-readable storage media does not include communication connections (e.g., 4870).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C, C++, C#, Java, Perl, JavaScript, Python, R, Ruby, ABAP, SQL, XCode, GO, Adobe Flash, or any other suitable programming language, or, in some examples, markup languages such as html or XML, or combinations of suitable programming languages and markup languages. Likewise, the disclosed technology is not limited to any particular computer or type of hardware. Certain details of suitable computers and hardware are well known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The following, numbered clauses represent contemplated and non-limiting examples.

Clause 1. A computing system comprising:

    at least one memory;
    one or more hardware processing units coupled to the at least one memory; and

one or more computer readable storage media storing computer-executable instructions that, when executed, cause the computing system to perform operations comprising:

receiving a plurality of properties;

processing a plurality of electronic documents over a time period, the processing comprising incrementing respective counts of respective properties of the plurality of properties if a document being processed includes the respective property;

for at least one property of the plurality of properties, determining a total count for the at least one property over at least a portion of the time period;

comparing the total count to a threshold;

determining that the total count satisfies the threshold;

changing a status of the at least one property based at least in part on the determining that the total count satisfies the threshold to provide an updated property status; and

processing at least another electronic document using the updated property status.

Clause 2. The computing system of clause 1, wherein the changing the status of the at least one property comprises changing the status of the at least one property from an inactive status to an active status.

Clause 3. The computing system of clause 2, the operations further comprising:
adding the at least one property to an ontology.

Clause 4. The computing system of clause 3, wherein the plurality of properties are defined for a knowledge graph.

Clause 5. The computing system of clause 4, the operations further comprising:

receiving a query of the knowledge graph;

processing the query using the ontology; and

returning a query response, the query response comprising a property value of the at least one property in the knowledge graph, the property value being identified using the ontology.

Clause 6. The computing system of clause 2, wherein the changing the status of the at least one property from the inactive status to the active status comprises:

providing a recommendation to a user on a user interface to change the at least one property to the active status; and

receiving through the user interface user input changing the status of the at least one property to the active status.

Clause 7. The computing system of clause 2, wherein the threshold is a first threshold, and the status of the at least one property is automatically changed from the inactive status to the active status in response to determining that the total count satisfies a second threshold, when the second threshold requires a higher total count than the first threshold.

Clause 8. The computing system of clause 2, wherein the processing at least another electronic document using the updated property status comprises storing a value for the at least one property, wherein values for the at least one property for the plurality of electronic documents were not stored.

Clause 9. The computing system of clause 1, wherein changing the status of the at least one property comprises changing the status of the at least one property from the active status to the inactive status.

Clause 10. The computing system of clause 9, wherein the processing at least another electronic document comprises not storing a value for the at least one property.

Clause 11. The computing system of clause 9, wherein the plurality of properties are defined for a knowledge graph and the operations further comprise:

receiving a query of the knowledge graph, the query specifying that properties having the inactive status are responsive to the query;

processing the query using the ontology; and

returning a query response, the query response comprising a property value of the at least one property in the knowledge graph, the property value being identified using the ontology.

Clause 12. The computing system of clause 9, wherein the plurality of properties are defined for a knowledge graph and the operations further comprise:

receiving a query of the knowledge graph, the query not specifying that properties having an inactive status are responsive to the query;
processing the query using the ontology; and
returning a query response, the query response not comprising a property value of the at least one property in the knowledge graph.

Clause 13. The computing system of clause 1, wherein properties of the plurality of properties having an active status are included in an ontology.

Clause 14. The computing system of clause 13, the operations further comprising:
rendering a display of at least a portion of the ontology, where the display provides an indication of a degree of use of respective properties of the plurality of properties of the at least a portion of the ontology.

Clause 15. The computing system of clause 1, wherein the changing the status of the at least one property comprises changing the status from an inactive status to an active status, the operations further comprising:

while processing the plurality of electronic documents, when a respective electronic document of the plurality of electronic documents comprises the at least one property, storing an association between the respective electronic document and the at least one property; and
in response to the changing the status of the at least one property to the active status, reprocessing at least a portion of the plurality of electronic documents comprising the at least one property, the reprocessing comprising storing a respective value for the at least one property in association with a corresponding respective electronic document of the at least a portion of the plurality of electronic documents.

Clause 16. The computing system of clause 1, the operations further comprising:

in response to determining that the total count satisfies the threshold, changing the status of the at least one property to a recommended status;
providing a user an indication of the recommended status; and
receiving user input to change the status of the at least one property to the recommended status, wherein the changing the status of the at least one property is performed in response to the user input.

Clause 17. The computing system of clause 1, wherein the total count is determined for a plurality of clients, the operations further comprising:
proposing a status change to a client of the plurality of clients based at least in part on the total count.

Clause 18. The computing system of clause 1, wherein changing a status of the at least one property is based at least in part on a change in values of the at least one property during the time period compared with values of the at least one property during an earlier time period.

Clause 19. A method, implemented in a computing system comprising at least one hardware processor and at least one memory coupled to the at least one hardware processor, the method comprising:

receiving a plurality of properties;
processing a plurality of electronic documents over a time period, the processing comprising incrementing respective counts of respective properties of the plurality of properties if a document being processed include the respective property;
for at least one property of the plurality of properties, determining a total count for the at least one property over at least a portion of the time period;
comparing the total count to a threshold;
determining that the total count satisfies the threshold;
changing a status of the at least one property based at least in part on the determining that the total count satisfies the threshold to provide an updated property status; and

processing at least another electronic document using the updated property status.

Clause 20. One or more non-transitory computer-readable storage media comprising

computer-executable instructions that, when executed by a computing system comprising at least one hardware processor and at least one memory coupled to the at least one hardware processor, cause the computing system to receive a plurality of properties;

computer-executable instructions that, when executed by the computing system, cause the computing system to process a plurality of electronic documents over a time period, the processing comprising incrementing respective counts of respective properties of the plurality of properties if a document being processed include the respective property;

computer-executable instructions that, when executed by the computing system, cause the computing system to, for at least one property of the plurality of properties, determine a total count for the at least one property over at least a portion of the time period;

computer-executable instructions that, when executed by the computing system, cause the computing system to compare the total count to a threshold;

computer-executable instructions that, when executed by the computing system, cause the computing system to determine that the total count satisfies the threshold;

computer-executable instructions that, when executed by the computing system, cause the computing system to change a status of the at least one property based at least in part on the determining that the total count satisfies the threshold to provide an updated property status; and

computer-executable instructions that, when executed by the computing system, cause the computing system to process at least another electronic document using the updated property status.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present, or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

**Claims**

1. A computing system comprising:

   at least one memory;
   one or more hardware processing units coupled to the at least one memory; and
   one or more computer readable storage media storing computer-executable instructions that, when executed, cause the computing system to perform operations comprising:

   receiving a plurality of properties;
   processing a plurality of electronic documents over a time period, the processing comprising incrementing respective counts of respective properties of the plurality of properties if a document being processed includes the respective property;
   for at least one property of the plurality of properties, determining a total count for the at least one property over at least a portion of the time period;
   comparing the total count to a threshold;
   determining that the total count satisfies the threshold;
   changing a status of the at least one property based at least in part on the determining that the total count satisfies the threshold to provide an updated property status; and
   processing at least another electronic document using the updated property status.

2. The computing system of claim 1, wherein the changing the status of the at least one property comprises changing the status of the at least one property from an inactive status to an active status.

3. The computing system of claim 2 or claim 1, the operations further comprising:
adding the at least one property to an ontology.

4. The computing system of any of the preceding claims, wherein the plurality of properties are defined for a knowledge graph.

5. The computing system of claim 4, the operations further comprising:

   receiving a query of the knowledge graph;
   processing the query using the ontology; and
   returning a query response, the query response comprising a property value of the at least one property in the knowledge graph, the property value being identified using the ontology.

6. The computing system of claim 2, wherein the changing the status of the at least one property from the inactive status to the active status comprises:

   providing a recommendation to a user on a user interface to change the at least one property to the active status; and
   receiving through the user interface user input changing the status of the at least one property to the active status.

7. The computing system of claim 2, wherein the threshold is a first threshold, and the status of the at least one property is automatically changed from the inactive status to the active status in response to determining that the total count satisfies a second threshold, when the second threshold requires a higher total count than the first threshold.

8. The computing system of any of the preceding claims, wherein the processing at least another electronic document using the updated property status comprises storing a value for the at least one property, wherein values for the at least one property for the plurality of electronic documents were not stored.

9. The computing system of any of the preceding claims, wherein properties of the plurality of properties having an active status are included in an ontology.

10. The computing system of claim 9, the operations further comprising:
rendering a display of at least a portion of the ontology, where the display provides an indication of a degree of use of respective properties of the plurality of properties of the at least a portion of the ontology.

11. The computing system of any of the preceding claims, wherein the changing the status of the at least one property comprises changing the status from an inactive status to an active status, the operations further comprising:

   while processing the plurality of electronic documents, when a respective electronic document of the plurality of electronic documents comprises the at least one property, storing an association between the respective electronic document and the at least one property; and
   in response to the changing the status of the at least one property to the active status, reprocessing at least a portion of the plurality of electronic documents comprising the at least one property, the reprocessing comprising storing a respective value for the at least one property in association with a corresponding respective electronic document of the at least a portion of the plurality of electronic documents.

12. The computing system of any of the preceding claims, the operations further comprising:

   in response to determining that the total count satisfies the threshold, changing the status of the at least one property to a recommended status;
   providing a user an indication of the recommended status; and
   receiving user input to change the status of the at least one property to the recommended status, wherein the changing the status of the at least one property is performed in response to the user input.

13. The computing system of any of the preceding claims, wherein the total count is determined for a plurality of clients, the operations further comprising:

proposing a status change to a client of the plurality of clients based at least in part on the total count.

14. A method, implemented in a computing system comprising at least one hardware processor and at least one memory coupled to the at least one hardware processor, the method comprising:

receiving a plurality of properties;
processing a plurality of electronic documents over a time period, the processing comprising incrementing respective counts of respective properties of the plurality of properties if a document being processed include the respective property;
for at least one property of the plurality of properties, determining a total count for the at least one property over at least a portion of the time period;
comparing the total count to a threshold;
determining that the total count satisfies the threshold;
changing a status of the at least one property based at least in part on the determining that the total count satisfies the threshold to provide an updated property status; and
processing at least another electronic document using the updated property status.

15. One or more transitory or non-transitory computer-readable storage media comprising

computer-executable instructions that, when executed by a computing system comprising at least one hardware processor and at least one memory coupled to the at least one hardware processor, cause the computing system to receive a plurality of properties;
computer-executable instructions that, when executed by the computing system, cause the computing system to process a plurality of electronic documents over a time period, the processing comprising incrementing respective counts of respective properties of the plurality of properties if a document being processed include the respective property;
computer-executable instructions that, when executed by the computing system, cause the computing system to, for at least one property of the plurality of properties, determine a total count for the at least one property over at least a portion of the time period;
computer-executable instructions that, when executed by the computing system, cause the computing system to compare the total count to a threshold;
computer-executable instructions that, when executed by the computing system, cause the computing system to determine that the total count satisfies the threshold;
computer-executable instructions that, when executed by the computing system, cause the computing system to change a status of the at least one property based at least in part on the determining that the total count satisfies the threshold to provide an updated property status; and
computer-executable instructions that, when executed by the computing system, cause the computing system to process at least another electronic document using the updated property status.

100

102

dbo:Company

104

dbo:Country

108

106

110

rdf:type

rdf:type

dbo:foundationPlace

dbo:foundingYear

1972-01-01^^xsd:date

dbr:SAP_SE

dbr:Germany

112

FIG. 1

201

203

| Everything that is positioned here must be a :City | :capitalOf | Everything that is positioned here must be a :Country |

FIG. 2

SPARQL results:

| City | Population |
|------|-----------|
| :Chongqing &#x1F517; | 32054159 |
| :Shanghai &#x1F517; | 24870895 |
| :Beijing &#x1F517; | 21893095 |
| :Chengdu &#x1F517; | 20937757 |
| :Xi'an &#x1F517; | 12952907 |
| :Suzhou &#x1F517; | 12748252 |
| :Zhengzhou &#x1F517; | 12600574 |
| :Wuhan &#x1F517; | 12326500 |
| :Hangzhou &#x1F517; | 11936010 |
| :Baoding &#x1F517; | 11194382 |
| :Linyi &#x1F517; | 11018365 |
| :Dongguan &#x1F517; | 10466625 |
| :Qingdao &#x1F517; | 10071722 |
| :Changsha &#x1F517; | 10047914 |
| :Harbin &#x1F517; | 10009854 |
| :Nanyang,_Henan &#x1F517; | 9713112 |
| :Wenzhou &#x1F517; | 9572903 |
| :Foshan &#x1F517; | 9498863 |
| :Ningbo &#x1F517; | 9404283 |

— 301

```
SELECT ?city ?population WHERE {
    ?city a dbo:City .
    ?city dbo:country :China.
    ?city dbo:populationTotal ?population .
    FILTER(?population > "100000"^^xsd:integer)
} ORDER BY DESC (?population)
```

FIG. 3

FIG. 4

```
FOR EACH triple IN sorted_graph DO
            IF customConditionApplies(triple) THEN
                // run generation with specific pattern
            ELSE
                // run generation with default pattern
```

FIG. 5

```
graphNodeSet = graph.getAllNodes()
backlog = []
WHILE graphNodeSet NOT EMPTY
    IF backlog IS EMPTY
        // we perform a random pick/jump in the graph
        backlog.add(graphNodeSet.randomDraw())
    END IF

    FOR r IN backlog DO

        // we always cover the full neighborhood of n
        FOR n IN r.connectedTriple DO
            serialize(r, n.edge, n.node)
            IF n.node IN graphNodeSet
                backlog.add(n.node)
            END IF
        END FOR
        graphNodeSet.remove(r)
    END FOR
```

FIG. 6

EP 4 617 910 A1

FIG. 7

FIG. 8

EP 4 617 910 A1

FIG. 9

```
IF configuration.is_question_pattern THEN
        FOR EACH triple IN sorted_graph DO
                IF customConditionWithQPatternApplies(triple) THEN
                        // run generation with the specific pattern and
                        // specified multi-pattern handling
                ELSE
                        // run generation with the default pattern and
                        // specified multi-pattern handling
        END IF
```

FIG. 10

FIG. 11

1200

**Present Sources**

Input: Documents, such as including text or tables

Output: Texts and resource description framework, such as in a database    <u>1210</u>

**Create Instance Graph**

Input: Texts, such as from database

Output: Instance graph, such as in resource description framework, describing concept of source    <u>1220</u>

**Execute Matching Process**

Input: Instance graphs

Output: List of proposed properties with counts, list of matched instances    <u>1230</u>

**Property Validation and Verification**

Input: List of proposed properties with counts, instance graphs

Output: Properties to define ontology, transformed instance graphs with aligned vocabulary    <u>1240</u>

FIG. 12

EP 4 617 910 A1

FIG. 13

1400⟍

Introducing the All-New SAP SE

EMBRACE ELECTRIFIED LUXURY PERFORMANCE

In a league of its own, the all-new SAP SE seamlessly blends cutting-edge electric power with a stunning vehicle concept. This high-performance masterpiece, dressed in the guise of a Sports Activity Vehicle (SAV), boasts a groundbreaking plug-in hybrid system that delivers an impressive 480 kW (653 hp). With a design that knows no compromises and performance that will leave you spellbound, the SAP SE redefines luxury in the automotive world.

SAP SE:

Fuel efficiency (combined): 1.9–1.5 l/100km (WLTP)

Electric power consumption (combined): 33.6–33.5 kWh/100 km (WLTP)

CO2 emissions (combined): 43–35 g/km (WLTP)

Electric range (combined): 196–83 km (WLTP)

FIG. 14A

1420⟍

The ideal blend of SAP SE's high-performance engineering and cutting-edge plug-in hybrid technology.
- SAP SE Hybrid, the inaugural electrified high-performance drive from SAP.
- Powered by a robust M TwinPower Turbo V8-cylinder gasoline engine.
- Experience unparalleled driving dynamics with the Adaptive SAP SE Sport Suspension.
- Enhanced handling and control with SAP SE's xDrive featuring Sport Differential.
- Boasting an impressive 480 kW (653 hp) and 800 Nm of torque, the SAP SE accelerates from 0 to 100 km/h in just 4.3 seconds.

FIG. 14B

1430

TECHNICAL SPECIFICATIONS OF SAP SE AUTOMOBILES.

Model SE

Drive Type: Gasoline – Plug-in Hybrid

Power in kW (HP): 480 (653)

Torque in Nm: 800

Transmission: 8-Speed, Automatic

Drivetrain: All-Wheel Drive

Cylinders: 8

Displacement in cm³: 4,395

Rated Power in kW (HP) / RPM: 360 (489) / 5,400 - 7,200

Rated Torque in Nm/RPM: 650 / 1,600 - 5,000

(Rated) Power/30-Minute Power in kW (HP): 145 (197)

(Rated) Torque in Nm:280

Acceleration 0-100 km/h in seconds:4.3

Top Speed in km/h: 250

Top Electric Speed in km/h:140

Fuel Consumption, Combined WLTP in l/100 km 6:n1.9 - 1.5

CO2 Emissions, Combined WLTP in g/km 6: 43 - 35

Electric Consumption, Combined WLTP in kWh/100 km 6: 33.6 - 32.5

Electric Range, WLTP in km 7: 76 - 83
8

Battery Size in kWh: 25.7

Max Charging Power AC/DC in kW: 7.4 (-) / -

Charging Time AC 0-100% in hours: 4.25 (-)

Length in mm:5,110

Width in mm:2,005

Height in mm: 1,755

Width in mm (with mirrors): 2,235 (1,127 / 1,108)

Wheelbase in mm: 3,105

Curb Weight in kg:2,785

Max Weight in kg: 3,300

Payload in kg:590

Cargo Volume in liters: 527 - 1,820

Fuel Tank Capacity in liters: 69
 Towing Capacity Factory-Optional Braked up to 12% / Tongue Weight in kg 10:
2,700 / 140

FIG. 14C

FIG. 15

EP 4 617 910 A1

FIG. 16

EP 4 617 910 A1

FIG. 17

```
METHOD getPropertyCounts(Ontology o, Set<Graph> instanceGraphs)
        properties = []
        finalGraph = new Graph()
        finalGraph.add(o)
        propertyCount = {}
        globalAlignment
        FOR EACH instanceG IN instanceGraphs DO
            alignment = match(instanceG, finalGraph)
            FOR EACH property IN alignment.getPropertyCorrespondences() DO
                IF propertyCount[property].exists() THEN
                        propertyCount[property]++
                ELSE
                        propertyCount[property] = 1
        // applyAlignment replaces the instanceG properties with the aligned ones in
        // finalGraph
        finalGraph.add(applyAlignment(alignment, instanceG))
        RETURN propertyCount
```

1800

1810

1814

1818

## FIG. 18

1900

### Properties

1914  1916  1920

| Property | Counts | Accept |
|---|---|---|
| Empty weight | 24 | ☒ |
| Luggage compartment volume | 20 | ☒ |
| Wheel size front | 19 | ☐ |
| Wheel size back | 19 | ☐ |
| ... | | |
| Tank capacity | 10 | ☐ |
| Towing capacity | 7 | ☐ |
| Fuel type | 6 | ☐ |

1930

Add Property

Edit Property

Remove Property

1932

1934

1910

## FIG. 19A

1900

Properties

| Property | Counts | Accept |
|---|---|---|
| Empty weight | 24 | ☐ |

Add Property

Edit Property — 1932

Remove Property

Edit Property "Empty weight"

Label 1954

Empty weight ▷
Weight (empty)
Empty in kg
Other...

Range

Floating Point Number

1950

OK

FIG. 19B

FIG. 20

FIG. 21

EP 4 617 910 A1

EP 4 617 910 A1

| Property | Business Stamp | System Stamp | Document ID |
|---|---|---|---|
| Motor range in km (key) | 2023-01 | 2023-05 | D012 |
| | 2023-02 | 2023-05 | D023 |
| | ... | ... | ... |

2212a   2212b   2212c   2212d   2210

| Property | Status | Total Count | Interval Count | Interval Start Date | Interval End Date | Interval Values |
|---|---|---|---|---|---|---|
| Motor range in km (key) | ACTIVE | | | | | |
| | OCCURRING | | | | | |
| | OBSOLETE | | | | | |

2222a   2222b   2222c   2222d   2222e   2222f   2222g   2220

FIG. 22

Interval for Property *P*
2310

2322     2322a          2322        2322

...

Date of Analysis(D) − Interval Size (I)
2318

Date of Analysis(D)
2314

| 2322a | 2322b | 2322c |
|---|---|---|
| Business Stamp | System Stamp | Document ID |
| 2023-01 | 2023-05 | D012 |

FIG. 23

```
                  ┌─2410                                                                  2400
                  ┌
FUNCTION aggregate_count(CNS cns, Interval i) RETURNS Map<Property, Count>:      ◢
        result = new Map()                                    2414
        FOR property IN cns.getAllProperties():             ┘
                records = cns.getRecordsInInterval(property, i)   ◢
                result.put(property, sum(records))
        END FOR
END FUNCTION

        FUCNTION get_status(Map<Property, Count> count_map) RETURNS Map<Property, Status>:
2430 ─┘    result = new Map()
            FOR property IN count.map.keys():
    2434─ IF count_map.get(property) > threshold & property.getCurrentStatus != ACTIVE
                    result.put(property, PROPOSE_ACTIVE)
    2436─ ELSE IF property.getCurrentStatus > threshold & property.getCurrentStatus != ACTIVE:
                    result.put(property, ACTIVE)
    2438─ ELSE IF  property.getCurrentStatus < threshold & property.getCurrentStatus = ACTIVE:
                    result.put(property, PROPOSE_OBSOLETE)
    2440─ ELSE IF property.getCurrentStatus < threshold & property.getCurrentStatus = NONE:
                    result.put(property, OCCURING)
    2442─ ELSE:
                    result.put(property, OBSOLETE)
            END IF
        END FOR
END FUNCTION
```

<div align="center">FIG. 24</div>

EP 4 617 910 A1

**KG Extension: Analysis of Instance Text Document** — 2500

Document: https://www.adac.de/.../marken-modelle/bmw/bmw-ix3/ — 2508

2512 [Open]

2516 | Instance — 2518

[X] Is New Instance | BMW/iX3

[ ] Add for Existing Instance | — 2520 — 2522

Detected Property Values — 2526

2528 — 2530 — 2532

| Property | Value | Property Exists? |
|---|---|---|
| Loading Time | 252 min | yes |
| Engine Type | Electric | yes |
| Production Date | 01/21 | yes |
| Fuel Type | Electricity | yes |
| Has Lane-Keep Assist | yes | yes |
| Recuperation | yes | yes |

2536 →

**Details of Recuperation** — 2540

General Information — 2544  2548 — 2542

| Characteristic Details | Value |
|---|---|
| Current Status 2544a | Propose Active |
| Current Counts 2544b | 73 |
| Total Counts 2544c | 124 |

Information on Instance Values — 2546

[X] Is Boolean Value          [ ] Is Category

[ ] Is Numeric Value

[ ] Is String Value (free text)

Information on Sources — 2554  2556  2558 — 2560

| Source | System Entry | Count |
|---|---|---|
| http://bmw.de/bmw... | 16.05.2024 | 2 |
| http://audi.de./A... | 15.05.2024 | 3 |

2536 →

[X] Add values for other instances — 2570   [Add Property to KG]

— 2574

FIG. 25

EP 4 617 910 A1

**KG Extension: Analysis of Historical Property** — 2610 — 2630

2600

### Obsolete Properties

| Property | Current Status | Current Counts | Latest Start Date |
|---|---|---|---|
| Has Air Conditioning | Active | 52 | 15.03.2018 |
| Has Child Safety Lock | Active | 46 | 01.01.1990 |
| ... | ... | | |

2614 — 2616 — 2618 — 2620 — 2622

2624 →

### Details of Has Child Safety Lock

General Information — 2636 — 2638 — 2634

| Characteristic Details | Value |
|---|---|
| Current Status 2636a | Propose Obsolete |
| Current Counts 2636b | 46 |
| Total Counts 2636c | 354 |

Information on Instance Values — 2650

[X] Is Boolean Value          [ ] Is Category

[ ] Is Numeric Value

[ ] Is String Value (free text)

Information on Sources — 2660

| Source | System Entry | Count |
|---|---|---|
| http://bmw.de/bmw... | 16.05.2024 | 2 |
| http://audi.de./A... | 15.05.2024 | 3 |

2664 [ Mark as Obsolete ]

FIG. 26

EP 4 617 910 A1

**Characteristic Numbers for Properties** — 2708 | — 2730

**Details of Fuel Type**

| Property | Current Status | Current Counts | Latest Start Date | Latest End Date |
|---|---|---|---|---|
| Loading Time | Active | 259 | 15.03.2018 | - |
| Engine Type | Active | 879 | 01.01.1990 | - |
| Production Date | Active | 304 | 01.01.1990 | - |
| Fuel Type | Active | 356 | 01.01.1990 | - |
| Has Lane-Keep Assist | Active | 183 | 15.05.2020 | - |
| Has Safety Belt | Obsolete | 15 | 01.01.1970 | 01.01.1992 |
| ... | ... | ... | ... | ... |

2712a 2712b 2712c 2712d 2712e

2710

General Information

2734

| Characteristic Details | Value |
|---|---|
| Current Status | Active |
| Current Counts | 356 |
| Total Counts | 1123 |

Information on Instance Values

2738

☐ Is Boolean Value    ☒ Is Category

☐ Is Numeric Value

☒ Is String Value (free text)

2746

| Value | Counts |
|---|---|
| Gas | 62 |
| Diesel | 5 |
| Electricity | 73 |
| Hybrid | 83 |

2748a 2748b

2720

2754

2700

FIG. 27

EP 4 617 910 A1

**Characteristic Properties for FUEL TYPE**

2800

**General Values**

| Characteristic Type | Value |
|---|---|
| Current Status | Active |
| Current Counts | 356 |
| Total Counts | 1123 |

2734

**Information for Instance Values**

☐ Is Boolean Value    ☒ Is Category    2738

☐ Is Numeric Value

☒ Is String Value (free text)

2746

| Value | Counts |
|---|---|
| Gas | 62 |
| Diesel | 5 |
| Electricity | 73 |
| Hybrid | 83 |

[ Set Obsolete ] 2850

**Usage Intervals**

3826a  2826b  2826c  2824

| Start Date | End Date | Status |
|---|---|---|
| 01.01.1990 | - | Active |
| 01.04.1980 | 31.12.1989 | Obsolete |
| 01.01.1971 | 31.03.1980 | Active |
| 01.05.1965 | 31.12.1970 | Obsolete |
| 01.01.1950 | 31.04.1965 | Active |

**Information Regarding Sources**

2842a  2842b  2842c  2840

| Source | System Entry | Count |
|---|---|---|
| http://bmw.de/bmw7... | | 5 |
| http://audi.de/A3... | 15.04.2023 | 3 |
| http://www.vw.de/VW... | 12.04.2023 | 4 |

FIG. 28

EP 4 617 910 A1

EP 4 617 910 A1

2900

Historical Information for FUEL TYPE

Usage Intervals

| Start Date | End Date | Status | Total Count In Period | Instance Values | Remarks |
|---|---|---|---|---|---|
| 01.01.1990 | - | Active | 356 | Gas, diesel, electricity | |
| 01.04.1980 | 31.12.1989 | Historic | 65 | Gas, diesel | Deactivated because... |
| 01.01.1971 | 31.03.1980 | Active | 322 | Gas, diesel | |
| 01.05.1965 | 31.12.1970 | Historic | 78 | Gas, alcohol | Deactivated because... |
| 01.01.1950 | 31.04.1965 | Active | 302 | Gas, alcohol | |

2914a 2914b 2914c 2914d 2914e 2914f

2910

2950

FIG. 29

FIG. 30

FIG. 31

# XYZ Innovations
# Weekly Digest

3200

## Subscribe Now and Stay Informed

Never miss out on what's happening in and around XYZ Innovations. Whether it's breakthrough technology discussions, exciting project updates, or stories from our team, the XYZ Innovations Weekly Digest brings the latest and greatest news directly to your inbox. Subscribe to our updates in French, German, or English

3230

3210

### XYZ Innovations Enters Next Chapter

Our executive team underscored the company's successful pivot toward new market strategies and innovative product development at the recent XYZ Innovations Global Town Hall.

### XYZ Innovations Focuses on Strategic Growth

As we navigate our industry's transformations, XYZ Innovations is at the forefront with groundbreaking initiatives.

### XYZ Innovations Off to a Robust Start in 2024

The company's business initiatives have gained significant traction in the first quarter, leading the industry with our innovative solutions.

3210

### Technology

Shaping a Sustainable Future with Our Tech

3230

3210

### "Direct & Honest" - A Conversation that Resonates

Meet XYZ Innovations' new CTO, Jordan Smith, who discusses our technology roadmap and the vision for the future.

FIG. 32

EP 4 617 910 A1

Dear Team XYZ,

Since the merger with AcmeTech, the momentum and excitement are at an all-time high. Last week, at our Innovation Summit, we had a stellar lineup of speakers, and the energy at the event was unmatched. In the same venue, we also hosted the XYZ Innovations Summit, and one takeaway is the feature article by TechThoughts on "Navigating the Future with XYZ Innovations."

3300

While we're excited to have AcmeTech join the XYZ family, it's important we integrate our operations smoothly. They bring valuable tech expertise and resources that will enhance our service offerings. In light of this, I want to share with you some key information.

Integration of AcmeTech: A Synergistic Approach

We have dedicated teams from both XYZ and AcmeTech working on integration strategies covering market approach, product synergy, and innovation.

AcmeTech's Tools at Your Service

We are in the process of setting up systems for XYZ's internal use of AcmeTech's tools. Express your interest here.

Exploring AcmeTech

~3310

Find all you need to know about AcmeTech in our XYZ Hub. We're continuously updating the hub, so check back often for new insights.

~3330

Product: An overview of AcmeTech's offerings.

Sales Assets: Though this is targeted to the field and provides go-to-market information, Developers can access valuable information such as: replay to Introduction to AcmeTech, Customer Presentations, Analyst Reports, Product Collateral

Market Insights: How AcmeTech's tools impact market trends. ~3310

3330 Technology: The primary target is the development organization. You will find schedule and replays of DevTalks about AcmeTech's Technology, including self-learning training and access to development environments.

Current content includes: ~3310

DevTalks on AcmeTech architecture overview, presented on May 19, 2024, you can find event information here

3330 DevTalks on Deep Dive Topics: monthly virtual series starting with deep dive on architecture followed by deep dive on APIs

Sandbox for XYZ Developers: a space for developers to play and learn about AcmeTech's products. Submit your request here

API Access for XYZ Developers: a development space limited for approved use cases and integration scenarios. Submit your proposal and request here

#XYZ-AcmeTech Channel on Slack: a community channel to share your AcmeTech experience with other colleagues and to raise questions for the community to answer

Best regards,
Jack Faust

FIG. 33

FIG. 34

3500

User $u$ informs system about information intent $i$, using a set of nodes of a graph $N \in KG$, optionally restricted by a set of properties $P_n$ for restricted nodes $n \in N$

3508

User assigns a priority $p$ and an update interval $t$ to intent

3512

Intent $I$ is added to the other intents of the user $u$

3516

For each intent, a listener is added to the graph "listening" to all change events that match the listening patterns implied by the intent

3520

Changes are collected depending on priority and timeliness

3524

Verbalize triples

3528

NLG verbalizes the changes and summarizes them

3532

Notification Created

3536

Notification Sent

3535

FIG. 35

3600

Subscription Service 3614

User Configuration Repository 3618

Listeners 3622

Verbalization 3640

Repository 3626

Knowledge Graph 3630

Ontology 3634

Client 3610

FIG. 36

FIG. 37

3700

Notification System 3712

Client 3708

User Interface 3716

Request Orchestrator 3720

Intent Reasoner 3728

Setting Storage 3724

Listener Service 3732

Listener 3734

Notification Module 3760

Mail Communicator 3764a

Collaboration Software Communicator 3764b

NLG Verbalization Module 3754

Message 3756

Change Log Storage 3744

Change Log 3746

Knowledge Graph System 3738

Change Log Agent 3750

Knowledge Graph 3740

EP 4 617 910 A1

FIG. 38

FIG. 39

FIG. 40

# FIG. 41

**4100**

**4110** — Subscription Service Registration – KG: ODM          **4534**

### From: Stefan Mueller
### To: ODM Leadership Team          **4114**

Hello everyone,

Thank you for your participation and the valuable discussion.
The following are the minutes and action items:

- Code list (conceptual mapping). Clarify who is responsible.
  AI: Align with ABAP
- Domains and name spaces          **4120**
  AI: Jan will provide an update
- Central metadata repository   **4122**
- Define modelling language
  AI: Sandra: Prepare decision   | Add to intent |
  | Cancel |   **4124**
- Finalize temporal support model
- Set up lifecycle rules

**4530**
| Create Intent |

Create Intent:  | My New Intent |
**4538**

Update Interval:  | |
**3412**

Node: Code list   **4550**

Priority   | |

Restrictions:   **4554** | Add Restriction |

Property:   **4558** | |

**4566**  Value:   **4562** | |

☐ Notify Immediately on Change

Node: CMR

Priority   | |

Restrictions:   | Add Restriction |

Property:   | |

Value:   | |

☐ Notify Immediately on Change

**4570**
| Add to My Subscriptions |

EP 4 617 910 A1

4200

4220a  4220b  4220c  4220d  4220e  4220f

4210a Date; Time (ETC); User; Operation Type; Triple; NewTriple  4230  4234

22.09.2023; 09:15; D012111; Update; (ODM; hasCurrentVersion; 2.0); (ODM; hasCurrentVersion; 3.0)

4210b 22.09.2023; 10:30; D123123; Deprecation; (BusinessPartner; hasSupportedVersion; 0.2) 4238

4210c 22.09.2023; 11:45; D987654; New; (BusinessPartner; hasSupportedVersion; 2.0) 4242

4210d 22.09.2023; 13:20; D543210; New; (CompanyCode; hasSupportedVersion; 1.0) 4242

4210e 22.09.2023; 14:45; D246810; Update; (BusinessPartner; hasCurrentVersion; 1.9); (BusinessPartner; hasCurrentVersion; 2.0)  4230  4234

FIG. 42

EP 4 617 910 A1

**4304**

**4308** Topic <Information Intent>                                    **4300**
New Triples

**4312** • <triples>
Changed Triples

• <old triple> is no longer valid. It was changed to <new triple>
**4316** Removed Triples

• <triples>

Topic ODM                                    **4350**
NEW

• ODM's release version is 3.0.

• Release 2.0 is published on 2023-09-22.
CHANGED

• "ODM's current release version is 2.0" is no longer valid. It was changed to
"ODM's current release version is 3.0"
REMOVED

FIG. 43

EP 4 617 910 A1

EP 4 617 910 A1

4400

| |
|---|
| Command <u>4404</u> |
| Change Log Metadata <u>4408</u> |
| Change Log Details <u>4412</u> |
| Custom Constraints <u>4416</u> |
| Closing Commands <u>4420</u> |

FIG. 44

4500

You are a Subscription bot for the FOXY Knowledge Graph.

Task: Summarize the following changes that were applied to a fact database. Answer precisely, do not add any information that is not present in the following change log. However, you can summarize changes or formulate rather factual sentences more nicely. ──4510

Format of the Result: An e-mail to a management user informing him about the changes. Indicate that the e-mail was written automatically. Keep the e-mail short and factual.

Subscription Information: The user subscribed to changes for node ODM with constraint release version
Information on the User: The user's name is Sandra Bracholdt. ──4514
Owner of the FOXY Knowledge Graph, Node: Kim Jähnisch, E-Mail: Kim.jaehnisch@sap.com

Timeframe: The changes happened in the last 2 weeks.
Changes for Topic ODM:
- NEW ODM's release version is 2.0. Release 2.0 is published on 2023-12.
- CHANGED "ODM's current release version is 1.0" is no longer valid. It was changed to "ODM's current release ──4518
version is 2.0"
- REMOVED "ODM supported version 0.1"

Administrator Information to add:
- Owner is responsible for questions of the User ──4522
- highlight summary of the changes

FIG. 45

EP 4 617 910 A1

4600

Dear Sandra Bracholdt,

I hope this message finds you well. This is an automated notification regarding recent changes to the FOXY Knowledge Graph, specifically related to the ODM node with constraint release version. (4612)

In the last two weeks, the following changes have been applied:

- **New Release Version**: ODM's release version has been updated to 2.0, which was published on 2023-12-01. Further information can be found here. ~4650
- **Version Information Update**: The statement "ODM's current release version is 1.0" has been 4650 replaced with "ODM's current release version is 2.0." Further information can be found here. (4616)
- **Version Removal**: The entry "ODM supported version 0.1" has been removed. Further information can be found here. ~4650

For any questions or further information, please contact the owner of the FOXY Knowledge Graph's ODM Node, Kim Jähnisch, at kim.jaehnisch@sap.com. (4620)

Thank you for staying updated on the changes in our knowledge graph.

Best regards, FOXY Knowledge Graph Subscription Bot

FIG. 46

4700 ⬅

| Receive a plurality of properties 4710 |
| --- |

↓

| Process a plurality of electronic documents over a time period, the processing including incrementing respective counts of respective properties of the plurality of properties if a document being processed include the respective property 4720 |
| --- |

↓

| For at least one property of the plurality of properties, determine a total count for the at least one property over at least a portion of the time period 4730 |
| --- |

↓

| Compare the total count to a threshold 4740 |
| --- |

↓

| Determine that the total count satisfies the threshold 4750 |
| --- |

↓

| Change a status of the at least one property based at least in part on the determining that the total count satisfies the threshold to provide an updated property status 4760 |
| --- |

↓

| Process at least another electronic document using the updated property status 4770 |
| --- |

FIG. 47

FIG. 48

4900

CLOUD COMPUTING SERVICES

4910

| COMPUTING DEVICE 4920 | COMPUTING DEVICE 4922 | COMPUTING DEVICE 4924 |

FIG. 49

Europäisches
Patentamt

European
Patent Office

Office européen
des brevets

# EUROPEAN SEARCH REPORT

**Application Number**

EP 25 16 2965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Kietz Joerg-Uwe ET AL: "A Method for Semi-Automatic Ontology Acquisition from a Corporate Intranet", , 30 November 2000 (2000-11-30), XP093292536, Retrieved from the Internet: URL:https://www.researchgate.net/publication/2431786_A_Method_for_Semi-Automatic_Ontology_Acquisition_from_a_Corporate_Intranet#read [retrieved on 2025-07-03] * sections 1, 3, 4.2, 4.3; figure 2 * | 1-12,14, 15 | INV. G06F16/36 G06N5/02 |
| A | 8 Anonymous: "GraphDB SE Documentation", GraphDB SE DocumentationRelease 8.7 - Ontotext, 18 June 2019 (2019-06-18), pages 1-397, XP055640137, Retrieved from the Internet: URL:http://graphdb.ontotext.com/documentation/8.7/pdf/GraphDB-SE.pdf [retrieved on 2025-07-03] * page 133 - page 158 * | 1-15 | |
| A | CORCHO OSCAR ET AL: "Methodologies, tools and languages for building ontologies. Where is their meeting point?", DATA & KNOWLEDGE ENGINEERING, vol. 46, no. 1, 1 July 2003 (2003-07-01), pages 41-64, XP093292544, NL ISSN: 0169-023X, DOI: 10.1016/S0169-023X(02)00195-7 * the whole document * | 1-15 | |

**TECHNICAL FIELDS SEARCHED (IPC)**

G06F
G06N

The present search report has been drawn up for all claims

| Place of search | Date of completion of the search | Examiner |
|---|---|---|
| The Hague | 7 July 2025 | Bercan, Radu |

EPO FORM 1503 03.82 (P04C01)

2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 97332222
- US 11487721 B
- US 11263187 B

**Non-patent literature cited in the description**

- **EDWARD HU et al.** *LoRA: Low-Rank Adaptation of Large Language Models*, 17 June 2021